(19) Europäisches Patentamt
European Patent Office
Office européen des brevets

(11) **EP 4 650 887 A1**

(12) **EUROPEAN PATENT APPLICATION**
published in accordance with Art. 153(4) EPC

(43) Date of publication:
**19.11.2025 Bulletin 2025/47**

(21) Application number: **24842036.6**

(22) Date of filing: **15.05.2024**

(51) International Patent Classification (IPC):
**G05B 13/04** (2006.01)    **B62D 57/032** (2006.01)
**G05D 1/00** (2024.01)

(52) Cooperative Patent Classification (CPC):
**B62D 57/032; G05B 13/04; G05D 1/00; G05D 1/46; G05D 1/495;** G05D 2101/15; G05D 2109/20

(86) International application number:
**PCT/CN2024/093484**

(87) International publication number:
**WO 2025/016036 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023  CN 202310872666**

(71) Applicant: **Tencent Technology (Shenzhen) Company Limited**
**Shenzhen, Guangdong 518057 (CN)**

(72) Inventors:
• **WANG, Shuai**
  **Shenzhen, Guangdong 518057 (CN)**
• **ZHOU, Qinqin**
  **Shenzhen, Guangdong 518057 (CN)**

(74) Representative: **Eisenführ Speiser**
**Patentanwälte Rechtsanwälte PartGmbB**
**Gollierstraße 4**
**80339 München (DE)**

(54) **BALANCE CONTROL METHOD AND APPARATUS FOR WHEEL-LEGGED ROBOT, DEVICE, AND STORAGE MEDIUM**

(57)    A balance control method and apparatus (1600) for a wheel-legged robot (200), a device, and a storage medium. The method is executed by a computer device (101). An n-order inverted pendulum model as which the wheel-legged robot (200) is equivalently represented comprises: wheels (1016), n connecting rods and n rotating joints; first connecting rods (1026, 1110) are equivalently derived from at least two leg mechanisms (1022, 1024) of the wheel-legged robot (200), and the wheels (1016) are equivalently derived from moving wheels (1012, 1014) respectively connected to the at least two leg mechanisms (1022, 1024). The method comprises: step 1310, acquiring an actual state quantity of the wheel-legged robot (200) at a first moment; step 1320, calculating an equivalent state quantity at the first moment on the basis of the actual state quantity at the first moment; step 1330, establishing a sliding mode surface on the basis of the equivalent state quantity at the first moment; step 1340, determining a force and torque instruction of the whole body joint on the basis of a dynamic equation of the sliding mode surface and the equivalent state quantity at the first moment; and step 1350, at a second moment, respectively controlling the n rotating joints on the basis of the force and torque instruction. The method is adapted to a wheel-legged robot (200) in movement, facilitating improvement of the robustness of balance control.

FIG. 13

EP 4 650 887 A1

**Description**

RELATED APPLICATION

This application claims priority to Chinese Patent Application No. 202310872666.5, entitled "BALANCE CONTROL METHOD AND APPARATUS FOR WHEEL-LEGGED ROBOT, DEVICE, AND STORAGE MEDIUM" filed on July 14, 2023, which is incorporated herein by reference in its entirety.

FIELD OF THE TECHNOLOGY

The present disclosure relates to the field of robot technologies, and in particular, to a balance control method and apparatus for a wheel-legged robot, a device, and a storage medium.

BACKGROUND OF THE DISCLOSURE

With continuous development of robot technologies, a wheel-legged robot in which a mobile wheel and a leg mechanism are connected through a joint appears. The wheel-legged robot has mobility advantages of both a wheeled robot and a legged robot. The wheel-legged robot has a motion mode of alternately stepping forward through the leg mechanism.

In the related art, to improve a balancing capability of the wheel-legged robot during movement, the leg mechanism and a torso mechanism of the wheel-legged robot are considered as a whole, a rotation torque of a joint motor between the mobile wheel and the leg mechanism is calculated, and an angle between the mobile wheel and the leg mechanism is changed through rotation of the joint motor, to maintain the balancing capability of the wheel-legged robot.

However, a balance control process in the related art is applicable to a few scenarios, and robustness of a balance control method for a wheel-legged robot in different motion states is to be further improved.

SUMMARY

Embodiments of the present disclosure provide a balance control method and apparatus for a wheel-legged robot, a device, and a storage medium. Solutions are as follows:

According to an aspect of the embodiments of the present disclosure, a balance control method for a wheel-legged robot is provided. The method is performed by a computer device. The wheel-legged robot being simplified into an $n^{th}$-order inverted pendulum model. The $n^{th}$-order inverted pendulum model includes a wheel, n links, and n revolute joints. The wheel and a first link of the n links are connected through a first revolute joint of the n revolute joints. The n links are connected in series through n-1 revolute joints other than the first revolute joint. The first link is an equivalent link corresponding to at least two leg mechanisms of the wheel-legged robot. The wheel is an equivalent mobile wheel corresponding to mobile wheels to which the at least two leg mechanisms are respectively connected. n is a positive integer greater than or equal to 2. The method includes:

obtaining an actual state parameter value of the wheel-legged robot at a first moment, the actual state parameter value being configured for representing motion states of n-1 links, the at least two leg mechanisms, and at least two mobile wheels, and the n-1 links being links among the n links other than the first link;

calculating an equivalent state parameter value at the first moment based on the actual state parameter value at the first moment, the equivalent state parameter value being configured for representing motion states of the n links and the wheel;

establishing a sliding surface based on the equivalent state parameter value at the first moment, the equivalent state parameter value gradually approaching 0 on the sliding surface;

determining a force and torque instruction for a whole-body joint of the wheel-legged robot based on the sliding surface, the equivalent state parameter value at the first moment, and a dynamics equation of the wheel-legged robot, the whole-body joint including the n revolute joints, and the dynamics equation being established based on the $n^{th}$-order inverted pendulum model; and

separately controlling, at a second moment according to the force and torque instruction for the whole-body joint, real revolute joints corresponding to the n-1 revolute joints and the first revolute joint, to adjust a balance status of the wheel-legged robot, the second moment being later than the first moment.

According to an aspect of the embodiments of the present disclosure, a balance control apparatus for a wheel-legged robot is provided. The wheel-legged robot is simplified into an $n^{th}$-order inverted pendulum model. The $n^{th}$-order inverted pendulum model includes a wheel, n links, and n revolute joints. The wheel and a first link of the n links are connected through a first revolute joint of the n revolute joints. The n links are connected in series through n-1 revolute joints other than the first revolute joint. The first link is an equivalent link corresponding to at least two leg mechanisms of the wheel-legged robot. The wheel is an equivalent mobile wheel corresponding to mobile wheels to which the at least two leg mechanisms are respectively connected. n is a positive integer greater than or equal to 2. The apparatus includes:

a state parameter value obtaining module, configured to obtain an actual state parameter value of the wheel-legged robot at a first moment, the actual state parameter value being configured for representing motion states of n-1 links, the at least two leg mechanisms, and at least two mobile wheels, and the n-1 links being links among the n links other than the first link;

a state parameter value processing module, configured to calculate an equivalent state parameter value at the first moment based on the actual state parameter value at the first moment, the equivalent state parameter value being configured for representing motion states of the n links and the wheel;

a sliding surface establishment module, configured to establish a sliding surface based on the equivalent state parameter value at the first moment, the equivalent state parameter value gradually approaching 0 on the sliding surface;

an instruction determining module, configured to determine a force and torque instruction for a whole-body joint of the wheel-legged robot based on the sliding surface, the equivalent state parameter value at the first moment, and a dynamics equation of the wheel-legged robot, the whole-body joint including the n revolute joints, and the dynamics equation being established based on the $n^{th}$-order inverted pendulum model; and

a joint control module, configured to separately control, at a second moment according to the force and torque instruction for the whole-body joint, real revolute joints corresponding to the n-1 revolute joints and the first revolute joint, to adjust a balance status of the wheel-legged robot, the second moment being later than the first moment.

According to an aspect of the embodiments of the present disclosure, a computer device is provided. The computer device includes a processor and a memory. The memory has a computer program stored therein. The computer program is loaded and executed by the processor to implement the balance control method for a wheel-legged robot.

According to an aspect of the embodiments of the present disclosure, a computer-readable storage medium is provided. The computer-readable storage medium has a computer program stored therein. The computer program is loaded and executed by a processor to implement the balance control method for a wheel-legged robot.

According to an aspect of the embodiments of the present disclosure, a computer program product is provided. The computer program product includes a computer program. The computer program is loaded and executed by a processor to implement the balance control method for a wheel-legged robot.

The technical solutions provided in the embodiments of the present disclosure may have the following beneficial effects:

In one aspect, the wheel-legged robot is abstracted into the $n^{th}$-order inverted pendulum model, so that balance control in a multi-wheel motion mode can be implemented. During balance control, deflection angles of a plurality of links in the wheel-legged robot are adjusted to change a pose of the wheel-legged robot, so that poses of a plurality of links in the wheel-legged robot are variable during balance adjustment. This greatly enriches poses of the robot, and helps quickly adjust the robot to a balanced state. In addition, this helps improve a capability of the robot to restore to a balanced state under the action of different disturbance forces, to improve robustness of a balance control process for the robot.

In another aspect, in the solutions provided in the present disclosure, the equivalent state parameter value is determined based on the actual state parameter value, so that balance control in the multi-wheel motion mode can share a set of control parameters with balance control in a two-wheel motion mode. In this way, after a motion mode of the wheel-legged robot is switched, a control parameter in a controller (for example, a robust controller) used for balance control does not need to be adjusted. This helps improve universality of the controller.

BRIEF DESCRIPTION OF THE DRAWINGS

FIG. 1 is a schematic diagram of an implementation environment of a solution according to an embodiment of the present disclosure.

FIG. 2 is a schematic diagram of a quadruped wheel-legged robot according to an embodiment of the present disclosure.

FIG. 3 is a schematic diagram of a quadruped wheel-legged robot according to an embodiment of the present disclosure.

FIG. 4 is a schematic diagram of a quadruped wheel-legged robot in a two-wheel mode according to an embodiment of the present disclosure.

FIG. 5 is a schematic diagram of a quadruped wheel-legged robot climbing stairs according to an embodiment of the present disclosure.

FIG. 6 is a schematic planar diagram of motion of a robot ascending stairs according to an embodiment of the present disclosure.

FIG. 7 is a schematic diagram of a motion sequence of a robot ascending and descending stairs according to an embodiment of the present disclosure.

FIG. 8 is a block diagram of a robot control system according to an embodiment of the present disclosure.

FIG. 9 is a schematic diagram of a four-wheel motion mode of a wheel-legged robot according to an embodiment of the present disclosure.

FIG. 10 is a schematic diagram of a simplified dynamics model according to an embodiment of the present disclosure.

FIG. 11 is a schematic diagram of a second-order inverted pendulum according to an embodiment of the present disclosure.

FIG. 12 is a schematic diagram of a second-order inverted pendulum according to an embodiment of the present disclosure.

FIG. 13 is a flowchart of a balance control method for a wheel-legged robot according to an embodiment of the present disclosure.

FIG. 14 is a schematic diagram of an inverted pendulum related to a center of mass according to an embodiment of the present disclosure.

FIG. 15 is a schematic diagram of simulation of a multi-wheel balance control method according to an embodiment of the present disclosure.

FIG. 16 is a block diagram of a balance control apparatus for a wheel-legged robot according to an embodiment of the present disclosure.

FIG. 17 is a block diagram of a structure of a computer device according to an embodiment of the present disclosure.

DESCRIPTION OF EMBODIMENTS

To make the objectives, technical solutions, and advantages of the present disclosure clearer, the following further describes implementations of the present disclosure in detail with reference to the accompanying drawings.

Artificial intelligence (AI) involves a theory, a method, a technology, and an application system that use a digital computer or a machine controlled by a digital computer to simulate, extend, and expand human intelligence, perceive an environment, obtain knowledge, and use the knowledge to obtain an optimal result. In other words, AI is a comprehensive technology in computer science and attempts to understand the essence of intelligence and produce a new intelligent machine that can react in a manner similar to human intelligence. AI is to study design principles and implementation methods of various intelligent machines, to enable the machines to have functions of perception, inference, and decision-making.

The AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

The technical solutions of the present disclosure mainly relate to robot technologies among the AI technologies, and mainly relate to intelligent robot control. A robot is an electromechanical device that can imitate a skill of a human and that is obtained by combining mechanical transmission and modern microelectronic technologies. The robot is developed based on electronic, mechanical, and information technologies. The robot does not necessarily look like a human, and the robot is a member of a large robot family provided that the robot can autonomously complete tasks and commands assigned by a human to the robot. The robot is an automated machine. The machine has some intelligent capabilities, such as a perception capability, a programming capability, a motion capability, and a collaboration capability, similar to those of a human or a living creature, and is an automated machine with high flexibility. With development of computer technologies and AI technologies, robots are greatly improved in terms of functions and technologies, and technologies such as mobile robots and robot vision and touch are typical representatives.

In the technical solutions provided in the embodiments of the present disclosure, operations may be performed by a computer device. The computer device is an electronic device with data computing, processing, and storage capabilities.

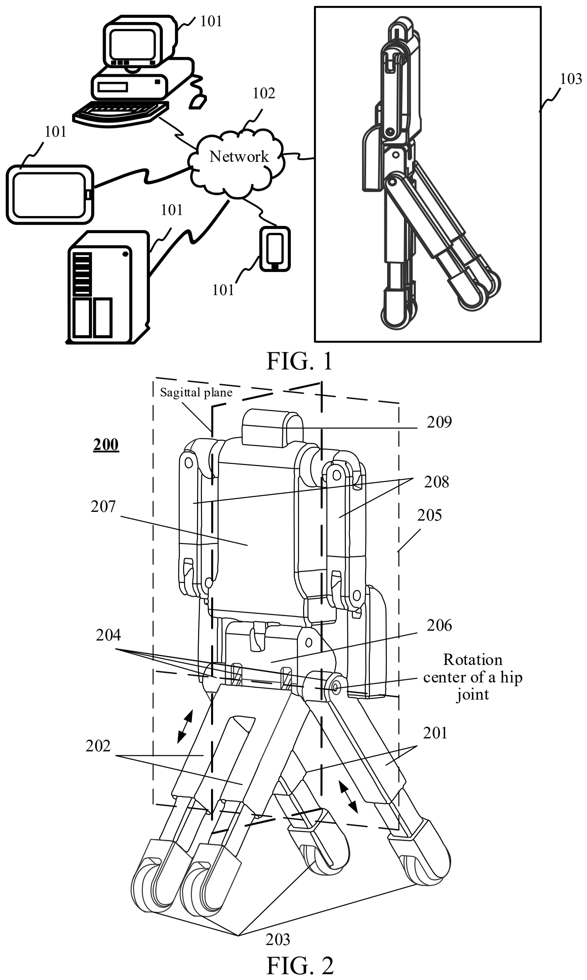

In some embodiments, the computer device may be a personal computer (PC) device for controlling a robot, for example, a desktop computer or a notebook computer; or may be a server for controlling a robot. The server includes but is not limited to an independent physical server, a server cluster or a distributed system including a plurality of physical servers, or a cloud server providing a cloud computing service. The computer device and the robot may be connected through a physical line, a network, or the like. For example, refer to FIG. 1. A computer device 101 determines, based on a current actual state parameter value of a robot 103, an equivalent state parameter value corresponding to an $n^{th}$-order inverted pendulum model obtained by abstracting the robot; calculates a force and torque instruction for a whole-body joint of the robot based on the equivalent state parameter value; and controls, according to the force and torque instruction for the whole-body joint, a plurality of revolute joints included in the robot 103, to enable the robot 103 to remain in or tend to be in a balanced state.

In some embodiments, the computer device is an electronic device integrated in a robot. For example, the computer device is a balance controller in the robot. To be specific, operations in the technical solutions provided in the embodiments of the present disclosure are independently completed by the robot, or are completed through interaction between the robot and a computer device that has a communication connection to the robot. For example, refer to FIG. 1. A computer device 101 measures a state parameter value of a robot 103 at a first moment, and transmits the state parameter value to the robot 103 through a network 102. The robot 103 obtains a force and torque instruction for a whole-body joint of the robot through step-by-step calculation based on an equivalent state parameter value at the first moment, and controls, by using the force and torque instruction for the whole-body joint of the robot, rotary motors of a plurality of revolute joints to move, to adjust a pose of the robot 103 to change a balance status of the robot.

A type of the robot in the embodiments of the present disclosure includes but is not limited to a wheel-legged robot, a legged robot, and the like. The wheel-legged robot is a robot with both a wheeled mechanism and a legged mechanism. The legged robot is a robot that moves with a foot in contact with a contact surface. This is not limited in the embodiments of the present disclosure.

The robot 103 includes at least two mobile wheels. In some embodiments, a balance control solution provided in the present disclosure is applicable to a case in which j mobile wheels of a robot are in contact with a contact surface and the j mobile wheels do not completely overlap when observed from a side of the wheel-legged robot. For specific content, refer to the following descriptions. For each of the at least two mobile wheels, the mobile wheel is connected, through a first revolute joint, to a leg mechanism corresponding to the mobile wheel. For example, the robot 103 has two mobile wheels, and the two mobile wheels roll to drive the robot 103 to move. A mobile wheel is connected, through a first revolute joint, to a leg mechanism corresponding to the mobile wheel. For example, different mobile wheels are respectively connected to different leg mechanisms.

In some embodiments, the robot in the embodiments of the present disclosure includes a mobile wheel and at least two links. For example, a wheel-legged robot includes at least one mechanism part, and each mechanism part can be separately simplified into a link. The at least two links may be equivalent to links in an $n^{th}$-order inverted pendulum model. To be specific, in a balance control solution provided in a method provided in the present disclosure, a wheel-legged robot is simplified into an $n^{th}$-order inverted pendulum model, the $n^{th}$-order inverted pendulum model includes a wheel and n links, the n links are connected in series through n-1 revolute joints, and a first link of the n links is connected to a mobile wheel through a first revolute joint. The wheel is an equivalent mobile wheel obtained based on at least two mobile wheels, and the first link is an equivalent leg mechanism obtained based on at least two leg mechanisms.

The wheel-legged robot includes at least two leg mechanisms, and any one of the at least two leg mechanisms has a corresponding mobile wheel. For example, a leg mechanism 1 corresponds to a mobile wheel 1, and the leg mechanism 1 is connected to the mobile wheel 1 through a real revolute joint 1. That is, a quantity of leg mechanisms of the wheel-legged robot is equal to a quantity of mobile wheels.

In some embodiments, the at least two leg mechanisms may be divided into an outer leg group and an inner leg group based on relative positions. The outer leg group includes at least two leg mechanisms. The inner leg group includes at least one leg mechanism. The at least two leg mechanisms in the outer leg group are spaced apart by the at least one leg mechanism in the inner leg group.

For example, at least two leg mechanisms included in a specific type of wheel-legged robot are classified into the following two types based on different leg groups: an outer leg mechanism and an inner leg mechanism. At least two outer leg mechanisms are respectively located on two sides of a central axis (namely, a sagittal plane) of the wheel-legged robot. At least two inner leg mechanisms are respectively located on two sides of the central axis of the wheel-legged robot. A rotation center of a hip joint corresponding to the outer leg mechanism and a rotation center of a hip joint corresponding to the inner leg mechanism are located on a same vertical plane.

For example, the wheel-legged robot is a quadruped wheel-legged robot, to be specific, the wheel-legged robot includes two outer leg mechanisms and two inner leg mechanisms; or the wheel-legged robot is a tripedal wheel-legged robot, to be specific, the wheel-legged robot includes two outer leg mechanisms and an inner leg mechanism. A hip joint corresponding to at least one inner leg mechanism in an inner leg group is located between hip joints corresponding to two outer leg mechanisms in an outer leg mechanism group, and rotation centers of the hip joints corresponding to the outer leg mechanisms and a rotation center of the hip joint corresponding to the inner leg mechanism are located on a same vertical plane. The wheel-legged robot may stand on a support surface by using the outer leg mechanism or the inner leg mechanism. The wheel-legged robot may alternatively slide on the support surface (for example, the ground) by using a foot wheel on the outer leg mechanism or a foot wheel on the inner leg mechanism (also referred to as a mobile wheel), or may move (namely, walk) on the support surface by controlling the outer leg mechanism group and the inner leg mechanism group to alternately swing.

For example, FIG. 2 is a schematic diagram of an exemplary structure of a quadruped wheel-legged robot according to an embodiment of the present disclosure. The quadruped wheel-legged robot 200 may include a torso mechanism, a leg mechanism, and a mobile wheel.

The quadruped wheel-legged robot 200 has four leg mechanisms: two outer leg mechanisms 201 (namely, a first leg mechanism group) and two inner leg mechanisms 202 namely, a second leg mechanism group). The two inner leg mechanisms 202 are located between the two outer leg mechanisms 201, and all the four leg mechanisms may independently extend or retract along a direction shown in the figure. A foot wheel 203 is mounted at an end of each of the four leg mechanisms, and each foot wheel 203 may be independently driven. The quadruped wheel-legged robot 200 may stand by using the two inner leg mechanisms 202 or the two outer leg mechanisms 201, to be in a two-foot-wheel supporting state; or the quadruped wheel-legged robot 200 may stand by using both the two inner leg mechanisms 202 and the two outer leg mechanisms 201, to be in a four-foot-wheel supporting state. This is not limited in this embodiment of the present disclosure.

In some embodiments, the two inner leg mechanisms 202 may be implemented as a whole. To be specific, the quadruped wheel-legged robot 200 may be implemented as a tripedal wheel-legged robot that has only one inner leg mechanism.

The other ends of the four leg mechanisms each are connected to a hip joint 204, and each leg mechanism may rotate around a respective hip joint 204 and remain in linkage. In this embodiment of the present disclosure, rotation centers of hip joints 204 corresponding to the quadruped wheel-legged robot 200 are located on a same vertical plane 205, and rotation planes of leg mechanisms corresponding to the quadruped wheel-legged robot 200 are parallel. Hip joints 204 corresponding to the two inner leg mechanisms 202 are located between hip joints 204 corresponding to the two outer leg mechanisms 201.

In some embodiments, the hip joints 204 corresponding to the quadruped wheel-legged robot 200 may be coaxial, to be specific, the rotation centers of the hip joints 204 are located on a same straight line. Alternatively, the hip joints 204 corresponding to the quadruped wheel-legged robot 200 may not be coaxial. For example, the hip joints 204 corresponding to the two inner leg mechanisms 202 are coaxial, and the hip joints 204 corresponding to the two outer leg mechanisms 201 are coaxial, but the hip joints 204 corresponding to the two inner leg mechanisms 202 and the hip joints 204 corresponding to the two outer leg mechanisms 201 are not coaxial. The hip joint 204 may be a revolute joint, among the n revolute joints in this embodiment of the present disclosure, that is connected to the first link. One end of the first link is connected to a real revolute joint, and the other end of the first link is connected to the hip joint 204.

In some embodiments, the hip joints 204 corresponding to the two outer leg mechanisms 201 share a drive motor, so that the two outer leg mechanisms 201 move synchronously; and the hip joints 204 corresponding to the two inner leg mechanisms 202 share a drive motor, so that the two inner leg mechanisms 202 move synchronously. In a feasible example, the hip joints 204 corresponding to the quadruped wheel-legged robot 200 may alternatively be independently driven by drive motors respectively corresponding to the hip joints. This is not limited in this embodiment of the present disclosure.

A body of the quadruped wheel-legged robot 200 may include a waist 206, a torso 207, upper limbs 208, and a head 209.

The hip joints 204 corresponding to the quadruped wheel-legged robot 200 are connected to a same end of the waist 206, and the other end of the waist 206 is connected to one end of the torso (torso mechanism) 207. The waist 206 has two rotation centers: a pitch rotation center that enables the torso 207 to implement pitching, and a lateral sway rotation center that enables the torso 207 to implement lateral sway. The lateral sway rotation center is kept in a series design with the pitch rotation center, is located above the pitch rotation center, and is connected to the torso 207.

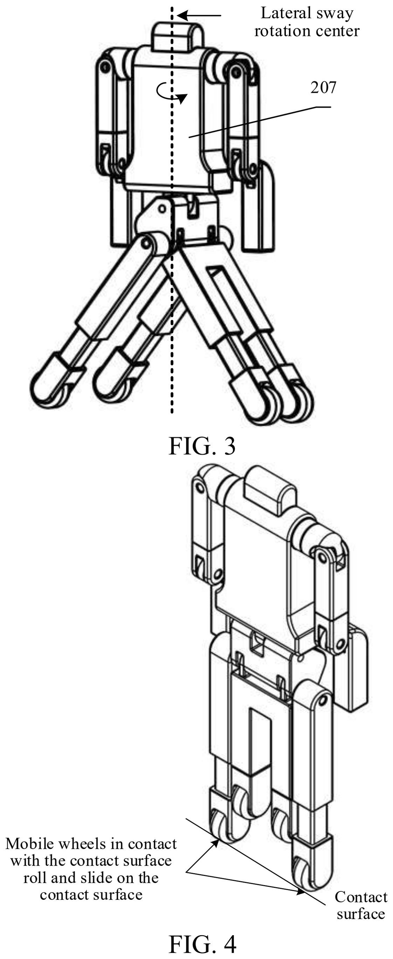

For example, if the torso 207 in FIG. 2 rotates by 90 degrees along the lateral sway rotation center, the robot is converted from the robot FIG. 2 to a robot shown in FIG. 3.

The other end of the torso 207 is connected to the upper limbs (robotic arm links) 208 and the head 209, and the upper limbs 208 may be multi-degree-of-freedom upper limbs. In some embodiments, an end effector, for example, a robotic gripper or a vacuum cup, is deployed on the upper limbs 208. A data capture device, for example, an image capture device, a video shooting device, or an inertial measurement unit (IMU), may be deployed in the header 209 to sense a real environment. The IMU may be disposed at a geometric center of the torso 207, a center point of the hip joint (namely, the rotation center of the hip joint), or the like, and may be configured to measure an actual acceleration, an actual attitude angular velocity, an actual Euler angle, or the like of the torso 207.

In the technical solutions provided in the embodiments of the present disclosure, the mobile wheel, the leg mechanism, the hip joint, the waist, and the torso mechanism (including the IMU) of the quadruped wheel-legged robot 200 are necessary hardware of a control algorithm, and the rest is unnecessary hardware.

Compared with a bipedal wheel-legged robot, the quadruped wheel-legged robot has a more stable structure, and has a stronger capability of resisting external impact and disturbance. Compared with a hexapod wheel-legged robot, the quadruped wheel-legged robot has fewer redundant joints and lower design complexity, and not only can carry a large load but also can pass through narrow space and perform a task on objects with different heights. The quadruped wheel-legged robot has a strong capability of adapting to an environment.

The balance control method for a wheel-legged robot provided in the embodiments of the present disclosure is applicable to a plurality of scenarios, such as balance of a wheel-legged robot during movement and balance of a wheel-legged robot subject to external disturbance. In the balance control method for a wheel-legged robot provided in the embodiments of the present disclosure, a plurality of joints of the wheel-legged robot can be flexibly controlled to rotate during balance control. This enriches poses of the robot during balance control, and helps control the robot to quickly be in a balanced state.

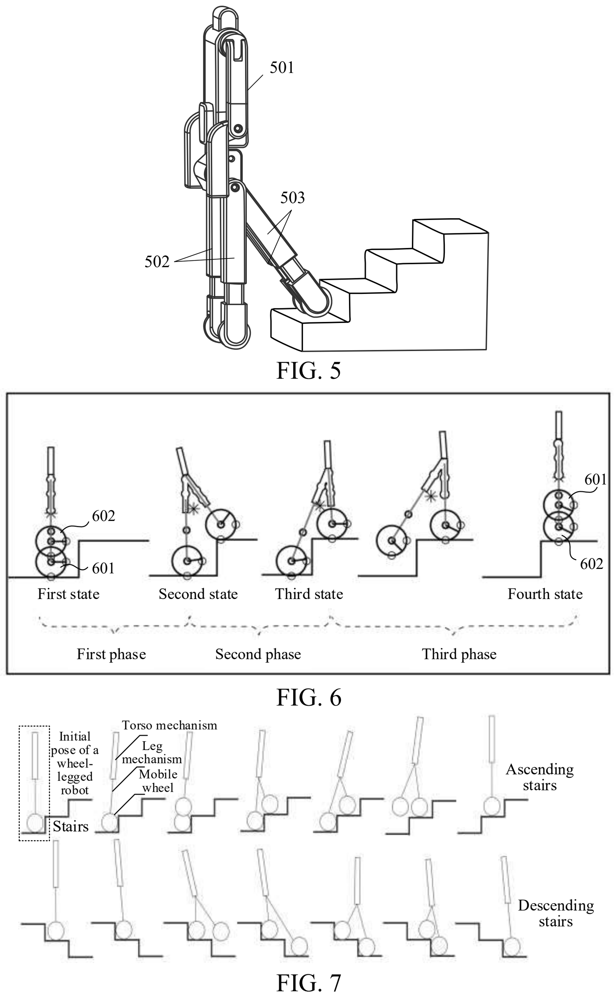

When moving on a flat ground, the robot remains in a four-wheel motion mode shown in FIG. 2, or forms a two-wheel dynamic smooth motion mode shown in FIG. 4 based on the rotation center of the hip joint. In the four-wheel motion mode, the robot remains in a steady state (not falling down), so that the upper limbs can follow operation instructions to perform some operation tasks. However, when moving on a flat ground, the robot switches from the four-wheel motion mode to the two-wheel motion mode, so that a floor area occupied by the robot can be reduced, to match a bipedal robot. When moving on a non-flat ground, for example, when the robot ascending stairs or the robot steps over a threshold, the wheel-legged robot dynamically steps over an obstacle in a two-wheel alternate mode shown in FIG. 5.

In some embodiments, as shown in FIG. 5, when needing to ascend stairs, a wheel-legged robot 501 may first construct, based on a to-be-performed stair climbing task, a target function corresponding to the stair climbing task; and then control, based on joint torque information of the robot 501 in a case in which a value of the target function is minimized, an outer leg mechanism group 502 (namely, a first leg mechanism group) and an inner leg mechanism group 503 (namely, a second leg mechanism group) of the robot 501 to alternately swing, to perform the stair climbing task. For example, the outer leg mechanism group 502 is first used as a supporting leg mechanism group, and the inner leg mechanism group 503 is used as a swinging leg mechanism group, to enable the robot 501 to climb a first step. Then the inner leg mechanism group 503 is used as a supporting leg mechanism group, and the outer leg mechanism group 502 is used as a swinging leg mechanism group, to enable the robot 501 to climb a second step. The outer leg mechanism group 502 and the inner leg mechanism group 503 alternately swing in sequence to complete the stair climbing task.

FIG. 6 is a schematic planar diagram of motion of a robot ascending stairs according to an exemplary embodiment of the present disclosure. In FIG. 6, a left leg mechanism and a right leg mechanism of the robot completely overlap. Therefore, in FIG. 6, leg mechanisms to which two wheels of the robot are respectively connected are a first leg mechanism and a second leg mechanism. In view of a specific form of a stair ascending process, when the robot shown in FIG. 6 is in a pose in which the wheels are on the ground, the wheels are not in contact with a same support surface at the same time, to conform to a motion state of actual stair ascending. Motion phases of the robot in an entire motion process may alternatively be divided into a single support phase (SSP) and a double support phase (DSP).

A first state shown in FIG. 6 is in the SSP. The first leg mechanism 601 of the robot is in contact with a support surface, the second leg mechanism 602 is not in contact with the support surface, and the first leg mechanism 601 is cooperatively controlled by a wheel and a joint of a body, to maintain balance of the robot. In a first phase, the robot swings the second leg mechanism 602 to gradually lift the second leg mechanism 602 from an initial vertical-downward gravity direction until the second leg mechanism 602 steps on an upper step, to enter a second state, which is in the DSP. During the first phase, the first leg mechanism 601 is a supporting wheel leg, and the second leg mechanism 602 is a swinging wheel leg. In a second phase, the robot retains two contact points between the wheels and the support surface on the plane. In this process, the robot changes an angle of each joint of the body, and while keeping the contact points between the two wheels and the support surface unchanged, gradually moves a projection of a center of mass of the body on the support surface from a center of a rear wheel on a lower step to a center of a front wheel on the upper step, to enter a third state, which is in the DSP. In a third phase, the robot lifts the first leg mechanism 601 from the lower step and keeps the robot in balance by using the second leg mechanism 602 until the first leg mechanism 601 and the second leg mechanism 602 overlap in a vertical direction, to enter a fourth state, which is in the SSP. During the third phase, the second leg mechanism 602 is a supporting wheel leg, and the first leg mechanism 601 is a swinging wheel leg.

In a process in which the robot ascends a step again, the supporting leg mechanism and the swinging leg mechanism are exchanged. During periodic motion of stair ascending, the supporting leg mechanism and the swinging leg mechanism are in motion with periodic exchange. Similarly, phase division for a stair descending task of the robot is the same as the phase division for the stair ascending task, except that moving directions of the leg mechanisms are opposite to the moving directions of the leg mechanisms in the stair ascending task. Therefore, the stair descending task of the robot is not described in detail herein. For a specific process, refer to a schematic diagram of a motion sequence of a robot ascending and descending stairs in FIG. 7. Details are not described herein.

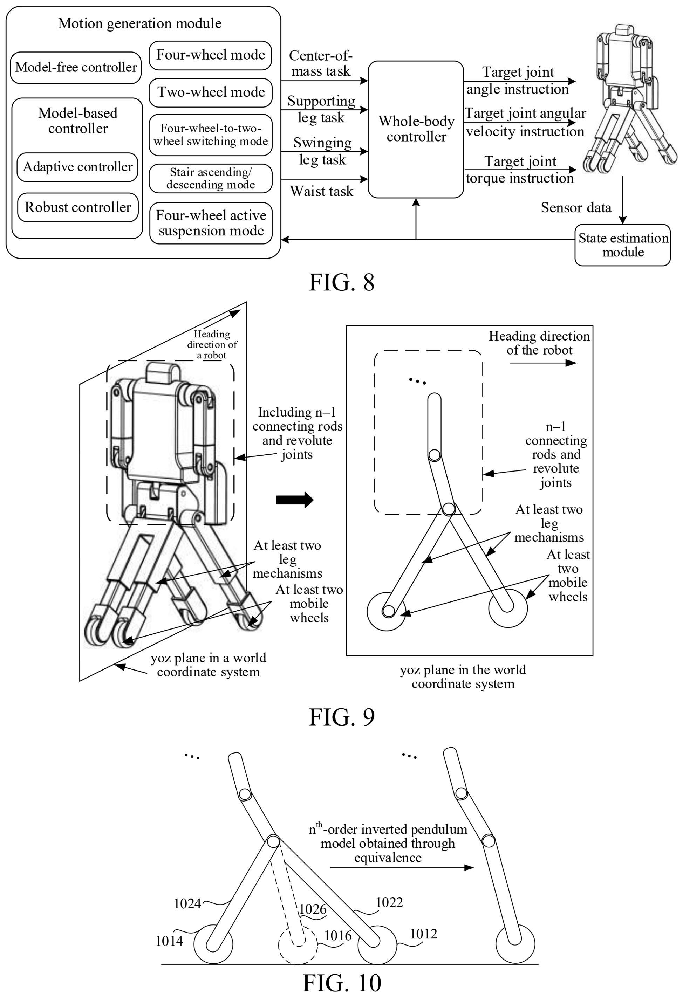

FIG. 8 is a block diagram of a robot control system according to an embodiment of the present disclosure. For a body of the robot, refer to FIG. 2. Four mobile wheels of the robot are separately driven by four rotary motors, and lengths of four mobile leg mechanisms (namely, the leg mechanisms in the foregoing descriptions) are separately driven by four linear motors. Usually, driving modes of linear motors for two outer mobile legs (namely, the outer leg mechanisms in the foregoing descriptions) are the same, and driving modes of linear motors for two inner mobile legs (namely, the inner leg mechanisms in the foregoing descriptions) are the same.

In some embodiments, leg lengths of the two outer mobile legs are equal, and leg lengths of the two inner mobile legs are equal. Leg length change speeds of the two outer mobile legs are equal, and leg length change speeds of the two inner mobile legs are equal.

The two outer mobile legs are driven by a same rotary motor, and the rotary motor is configured to adjust an included angle between an outer mobile leg and a straight line L1 perpendicular to a direction of a contact surface. To be specific, included angles between the two outer mobile legs and the straight line L1 are equal. The two inner mobile legs are driven by a same rotary motor, and the rotary motor is configured to adjust an included angle between an inner mobile leg and the straight line L1. To be specific, included angles between the two inner mobile legs and the straight line L1 are equal. In addition, each joint of a torso mechanism of a wheel-legged robot is provided with a rotary motor, and rotation of each joint is actively driven by a rotary motor corresponding to the joint.

For all the rotary motors mentioned above, a type of an instruction signal received by the rotary motor includes at least one of the following: a rotation angle instruction, a rotation speed instruction, a rotation torque instruction, and the like. The rotation angle instruction is configured for indicating a rotation angle of the rotary motor. The rotation speed instruction is configured for indicating a rotation speed and a rotation direction of the rotary motor. A rotation torque is configured for indicating a torque that needs to be reached during rotation of the rotary motor. After an instruction signal is received, an underlying drive board of the rotary motor drives, based on the received instruction signal, the motor to rotate, to drive revolute joints to move.

For all the linear motors mentioned above, the linear motor may receive a linear moving position instruction, a linear moving speed instruction, a driving force instruction, and the like. An underlying drive board of the linear motor drives, based on a received instruction signal, the motor to move linearly, to drive the leg mechanism to extend or retract. Through rotation of the rotary motor and movement of the linear motor, a pose of the robot and a position of the robot in three-dimensional space can be adjusted, to adjust a balance status of the wheel-legged robot. In this way, balance control on the wheel-legged robot is implemented. In addition, the quickly changing rotation angle instruction causes a highly dynamic change in the pose of the robot, to change contact between the robot and an environment.

Because the wheel-legged robot has different poses and states (for example, motion states) at different moments, pose information and motion state information of the wheel-legged robot need to be captured by using a sensor disposed on the wheel-legged robot, so that an instruction signal can be generated based on the pose information and the motion state information, to implement balance control on the wheel-legged robot and change a motion state of the wheel-legged robot.

In some embodiments, a state of the wheel-legged robot is obtained by different sensors mounted on a body of the wheel-legged robot. A sensor type includes at least one of the following: an IMU sensor, configured to determine a current pose of the wheel-legged robot, the IMU sensor being capable of determining position information and pose information of the wheel-legged robot; a motor encoder, configured to determine a rotation speed of each joint of the wheel-legged robot in a current state, movement-related position information, and speed information of rotation and movement; a force/torque sensor, configured to determine a magnitude of a force applied to a joint at which the force/torque sensor is located at a current moment, and a magnitude and a direction of a torque; a tactile sensor, configured to determine a magnitude of pressure on a body part, for example, a contact position between a mobile wheel of the wheel-legged robot and a contact surface, a body surface, a hand, or a fingertip, and a change feature of the pressure within a period of time; or a visual sensor (for example, a camera or an infrared sensor), configured to recognize an obstacle appearing in a field of view of the wheel-legged robot, and further configured to determine position information of a center of mass of the wheel-legged robot and speed information corresponding to the center of mass of the wheel-legged robot.

In some embodiments, a control system for the wheel-legged robot includes the following control modules:

1. A state estimation module, configured to fuse all pose information and state information related to the wheel-legged robot. For example, the state estimation module fuses a current pose of the wheel-legged robot that is sensed by the IMU sensor, mileage information obtained through rotation of a mobile wheel, and visual positioning information to obtain a position of the wheel-legged robot in a world coordinate system; fuses information from the force/torque sensor and the tactile sensor to obtain a status of contact between the robot and an external environment; and fuses the current pose of the wheel-legged robot that is sensed by the IMU sensor and angle information of all motor joint encoders to obtain intermediate information, and combines the intermediate information with a model parameter of the wheel-legged robot to estimate a position of the center of mass of the wheel-legged robot. The state information, obtained through fusion, of the wheel-legged robot is used as a feedback quantity for motion generation, programming, and control of the wheel-legged robot.

2. A motion generation module, configured to: based on an operating mode in which the wheel-legged robot completes motion, use a motion generation policy corresponding to the operating mode. The operating mode of the robot includes but is not limited to a four-wheel motion mode, a two-wheel motion mode, a four-wheel-to-two-wheel switching mode, a stair ascending/descending mode, a four-wheel active suspension mode (the four-wheel active suspension mode is a mode in which a contact surface is uneven during traveling in a four-wheel mode and the robot adjusts a pose of an upper body depending on four wheels to keep the pose of the upper body relatively stable), a folded mode, and the like. In view of complexity of the upper body, the upper body may be configured to complete a plurality of types of tasks, and the robot can include more motion modes, which are not enumerated herein.

Motion generation manners in different modes are different. In these modes, some common basic technology and algorithm modules are invoked, including but not limited to a model-free controller, a model-based controller, and the like. The model-based controller is, for example, a linear quadratic regulator (LQR), a model predictive controller (MPC), an adaptive controller, or a robust controller. In some embodiments, the robust controller is implemented based on sliding mode control. The robust controller is also referred to as a sliding mode controller.

For example, when balance of mobile wheels of the wheel-legged robot needs to be controlled in a two-wheel mode, a reference trajectory of a foot wheel and the center of mass of the robot is generated through proportional integral derivative (PID) control of the model-free controller. For example, a specific motion generation method is to invoke one or more of the model-free controller, the model-based controller (the LQR, the MPC, or the like), the adaptive controller, and the robust controller.

For another example, when the wheel-legged robot is in a two-wheel control stage in the four-wheel-to-two-wheel switching mode, balance of mobile wheels may alternatively be controlled by using the model-free controller, the model-based controller (the LQR, the MPC, or the like), the adaptive controller, or the robust controller.

For another example, when the wheel-legged robot is in the four-wheel mode, if equivalence is made between a leg mechanism of the wheel-legged robot that extends forward and a leg mechanism extending backward to obtain an equivalent leg mechanism, which is also referred to as a first link, the first link and another mechanism in the wheel-legged robot may be simplified into an $n^{th}$-order inverted pendulum model, and a pose of the wheel-legged robot is adjusted based on the $n^{th}$-order inverted pendulum model. A control trajectory obtained by using this method can keep balance of the robot in a four-wheel state. According to this method, when a contact surface is uneven or has a hole or an obstacle, the wheel-legged robot can keep the body of the wheel-legged robot relatively stable. For example, when the wheel-legged robot is in the four-wheel active suspension mode, relative stability of the body of the wheel-legged robot may alternatively be controlled by using the motion generation module.

An input for the motion generation module is a series of task information of the wheel-legged robot, and a type of the task information includes but is not limited to a center-of-mass task, a supporting leg task, a swinging leg task, a waist task, and the like. Similarly, in view of complexity of the upper body of the wheel-legged robot, the upper body can independently complete a plurality of types of motion and tasks, and there may alternatively be more types of task information, which are not enumerated herein.

For example, these tasks may alternatively be used as an input for a whole-body controller (WBC) (also referred to as a whole-body dynamics controller). The WBC includes detailed modeling (to obtain a whole-body dynamics model of the wheel-legged robot) and calibration of the wheel-legged robot. The WBC can calculate, through an optimization process, a target joint angle instruction, a target joint angular velocity instruction, a target joint torque instruction, and the like of a target joint of at least one revolute joint of the wheel-legged robot by using the whole-body dynamics model of the wheel-legged robot and an external force bearing status as optimization constraint conditions. Finally, the WBC transmits the target joint angle instruction, the target joint angular velocity instruction, the target joint torque instruction, and the like that are determined to drivers of joints of the robot, to complete closed-loop control on the wheel-legged robot.

The balance control method for a wheel-legged robot provided in the present disclosure is mainly performed by the robust controller in the control system in FIG. 8. In some embodiments, the balance control method is jointly performed by the robust controller and the WBC. For details, refer to the following descriptions.

Before specific operations of the balance control method provided in the present disclosure are described, a method related to balance control in a wheel-legged robot is first described, to facilitate understanding of a structure of the wheel-legged robot.

FIG. 9 is a schematic diagram of a four-wheel motion mode of a wheel-legged robot according to an embodiment of the present disclosure. Observed from a side of the wheel-legged robot (to be specific, on a yoz plane in a world coordinate system), the wheel-legged robot includes at least two mobile wheels that do not coincide on the yoz plane. For leg mechanisms respectively connected to the at least two mobile wheels, at least two leg mechanisms do not coincide on the yoz plane either. That is, along a heading direction of the wheel-legged robot, there are at least two mobile wheels that are in contact with a contact surface and that have different motion states (to be specific, do not coincide when observed from a side of the wheel-legged robot).

In some embodiments, an outer leg mechanism included in an outer leg group of the wheel-legged robot does not coincide with an inner leg mechanism included in an inner leg group on the yoz plane. At least two outer leg mechanisms included in the outer leg group coincide on the yoz plane. When the inner leg group includes a plurality of inner leg mechanisms, the plurality of inner leg mechanisms coincide on the yoz plane.

The wheel-legged robot further includes a plurality of parts that can be simplified into links, for example, n-1 links shown in FIG. 9. The n-1 links are connected in series through a revolute joint.

FIG. 10 is a schematic diagram of a simplified dynamics model according to an embodiment of the present disclosure. As shown in FIG. 10, at least two non-coinciding mobile wheels 1012 and 1014 along a heading direction are equivalent to a wheel 1016 in an $n^{th}$-order inverted pendulum model, and at least two non-coinciding leg mechanisms 1022 and 1024 along the heading direction are equivalent to a first link 1026 in the $n^{th}$-order inverted pendulum model. In this way, a wheel-legged robot in a multi-wheel motion mode can be simplified into the $n^{th}$-order inverted pendulum model, and balance control on the wheel-legged robot is implemented based on the $n^{th}$-order inverted pendulum model.

In some embodiments, an equivalent contact point between the wheel 1016 and a contact surface is located between contact points between the at least two non-coinciding mobile wheels 1012 and 1014 and the contact surface. For example, the equivalent contact point between the wheel 1016 and the contact surface is a midpoint of a connection line between the contact points between the at least two non-coinciding mobile wheels 1012 and 1014 and the contact surface, and the at least two non-coinciding mobile wheels 1012 and 1014 are two mobile wheels distributed on a same side of an axis of the wheel-legged robot.

FIG. 10 shows a method for obtaining a wheel and a first link through equivalence and establishing an $n^{th}$-order inverted pendulum model corresponding to the wheel-legged robot in the pose only by using an example in which two mobile wheels do not coincide along the heading direction. When the wheel-legged robot includes a plurality of mobile wheels that do not coincide along the heading direction, a wheel is also obtained through equivalence of the plurality of mobile wheels, and a first link is obtained through equivalence of a plurality of leg mechanisms, to simplify the wheel-legged robot into an $n^{th}$-order inverted pendulum model, and implement subsequent balance control on the wheel-legged robot.

Before specific operations of the balance control method provided in the present disclosure are described, a method for establishing a dynamics model corresponding to the balance control method provided in the present disclosure is first described. For ease of understanding a principle of the $n^{th}$-order inverted pendulum model in the present disclosure, a second-order inverted pendulum model that is easier to understand is first described.

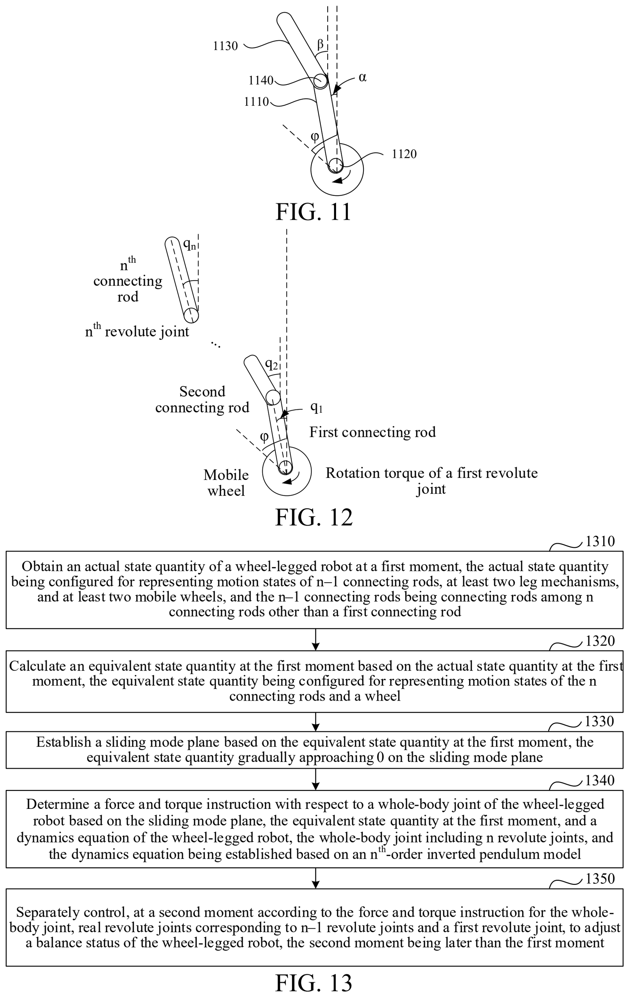

FIG. 11 is a schematic diagram of a second-order inverted pendulum according to an embodiment of the present disclosure. It can be learned from the foregoing descriptions that, after equivalence is performed on mobile wheels of a wheel-legged robot that do not coincide from a side and equivalence is performed on leg mechanisms of the wheel-legged robot that do not coincide from a side, the wheel-legged robot can be simplified into an $n^{th}$-order inverted pendulum model for balance control. Based on this, a dynamics equation of the wheel-legged robot can be derived based on the $n^{th}$-order inverted pendulum model, to facilitate subsequent balance control on the wheel-legged robot.

When n is equal to 2, the wheel-legged robot is simplified into a second-order inverted pendulum model after equivalence of at least two leg mechanisms and at least two mobile wheels is completed. A world coordinate system is established by using a heading direction of the wheel-legged robot as a positive x-axis direction, using a rightward moving direction as a positive y-axis direction, and using an upward direction perpendicular to a contact surface as a positive z-axis direction.

As shown in FIG. 11, in a two-dimensional model, a direction in which a mobile wheel rotates to a left side of the contact surface is used as a positive direction, a traveling distance is x, an angle by which a wheel rotates relative to the world coordinate system is defined as $\varphi$, and a counterclockwise direction is used as a positive direction of a rotation angle of the wheel. An angle by which a first link 1110, obtained through equivalence of at least two leg mechanisms, rotates relative to the world coordinate system is defined as $\alpha$, and a counterclockwise direction is a positive direction. An angle by which a second link (a link among n links other than the first link) 1130 corresponding to a torso mechanism rotates relative to the world coordinate system is defined as $\beta$, and a counterclockwise direction is used as a positive direction of a rotation angle of the wheel. In the following descriptions, the first link is referred to as a link B, and the second link is referred to as a link P.

$\dot{\varphi}$, $\dot{\alpha}$, and $\dot{\beta}$ are respectively defined as derivatives of $\varphi$, $\alpha$, and $\beta$ with respect to time, where $\dot{\varphi}$ represents a rotation speed of the wheel (also referred to as an angular velocity of the wheel), $\dot{\alpha}$ represents an angular velocity of the first link, and $\dot{\beta}$ represents an angular velocity of the second link. $\ddot{\varphi}$, $\ddot{\alpha}$, and $\ddot{\beta}$ are respectively defined as second-order derivatives of $\varphi$, $\alpha$, and $\beta$ with respect to time, where $\ddot{\varphi}$ represents an angular acceleration of the wheel, $\ddot{\alpha}$ represents an angular acceleration of the first link, and $\ddot{\beta}$ represents an angular acceleration of the second link.

The angle by which the wheel rotates relative to the world coordinate system is driven by a joint motor on a first revolute joint (equivalent to 1120 in FIG. 11), a rotation torque of the first revolute joint is denoted as $\tau_1$, and a clockwise direction is a positive direction of $\tau_1$.

The angle by which the second link rotates relative to the world coordinate system is driven by a joint motor on a second revolute joint (equivalent to 1140 in FIG. 11), a rotation torque of the second revolute joint is denoted as $\tau_2$, and a counterclockwise direction is used as a positive direction of the rotation torque of the second revolute joint. Because the torso mechanism directly corresponds to the second link, the torso mechanism has the same meaning as that of the second link during derivation of the dynamics equation.

Masses of the wheel, the link B (equivalent to at least two non-coinciding leg mechanisms), and the link P (equivalent to the torso mechanism) are respectively denoted as $m_W$, $m_B$, and $m_P$. Rotational inertias of the wheel, the link B, and the link P are respectively denoted as $J_W$, $J_B$, and $J_P$. A radius of the wheel is denoted as $r$, and a length of the link B is denoted as $L_B$. A length of a connection line from an intersection point of the link B and the wheel to a geometric center of the link B is denoted as $l_B$. A length of a connection line from the intersection point of the link B and the wheel to a geometric center of the link P is denoted as $l_P$.

(1) Based on the definitions of the foregoing physical quantities, expressions of total kinetic energy $T_W$ of the wheel, total kinetic energy $T_B$ of the link B, and total kinetic energy $T_P$ of the link P are separately derived, and total system kinetic energy $T$ of the wheel-legged robot is obtained. Kinetic energy calculation for the total kinetic energy $T_W$ of the wheel, the total kinetic energy $T_B$ of the link B, and the total kinetic energy $T_P$ of the link P includes both translational kinetic energy and rotational kinetic energy.

$$T_W = \frac{1}{2} m_W\, r^2 \dot{\varphi}^2 + \frac{1}{2} J_W \dot{\varphi}^2$$

$$T_B = \frac{1}{2} m_B (r\dot{\varphi} + l_B \dot{\alpha} \cos\alpha)^2 + \frac{1}{2} m_B (l_B \dot{\alpha} \sin\alpha)^2 + \frac{1}{2} J_B \dot{\alpha}^2$$

$$= \frac{1}{2} m_B r^2 \dot{\varphi}^2 + \frac{1}{2} m_B l_B{}^2 \dot{\alpha}^2 + m_B l_B r \cos\alpha \dot{\varphi}\,\dot{\alpha} + \frac{1}{2} J_B \dot{\alpha}^2$$

$$T_P = \frac{1}{2} m_P \left(r\dot{\varphi} + L_B \dot{\alpha}\cos\alpha + l_P\dot{\beta}\cos\beta\right)^2 + \frac{1}{2} m_P\left(L_B\dot{\alpha}\sin\alpha + l_P\dot{\beta}\sin\beta\right)^2 + \frac{1}{2}J_P\left(\dot{\alpha}+\dot{\beta}\right)^2$$

$$= \frac{1}{2} m_P r^2 \dot{\varphi}^2 + \frac{1}{2} m_P L_B{}^2 \dot{\alpha}^2 + \frac{1}{2} m_P l_P{}^2 \dot{\beta}^2 + \frac{1}{2} J_P \dot{\alpha}^2$$

$$+ \frac{1}{2} J_P \dot{\beta}^2 + m_P r L_B \cos\alpha\, \dot{\alpha}\dot{\varphi} + m_P r l_P \cos\beta\, \dot{\beta}\dot{\varphi} + m_P L_B l_P \cos\alpha \cos\beta\, \dot{\alpha}\dot{\beta}$$

$$+ m_P L_B l_P \sin\alpha \sin\beta\, \dot{\alpha}\dot{\beta} + J_P \dot{\alpha}\dot{\beta}$$

$$T = T_W + T_B + T_P$$

(2) Partial derivatives of the total system kinetic energy $T$ with respect to each degree of freedom ($\alpha$, $\beta$, $\varphi$) in generalized coordinates and a derivative of each degree of freedom are calculated, and a derivative, with respect to time, of a result of calculating a partial derivative with respect to the derivative of each degree of freedom is calculated. A specific process is as follows:

A partial derivative $\dfrac{\partial T}{\partial \dot{\varphi}}$ of the total system kinetic energy $T$ with respect to the angular velocity $\dot{\varphi}$ of the wheel is expressed as follows:

$$\frac{\partial T}{\partial \dot{\varphi}} = (m_W r^2 + J_W + m_B r^2 + m_P r^2)\dot{\varphi} + m_B l_B r \cos\alpha\, \dot{\alpha} + m_P r L_B \cos\alpha\, \dot{\alpha} + m_P r l_P \cos\beta\, \dot{\beta}$$

A derivative $\dfrac{d}{dt}\left(\dfrac{\partial T}{\partial \dot{\varphi}}\right)$ of the partial derivative $\dfrac{\partial T}{\partial \dot{\varphi}}$ with respect to time is expressed as follows:

$$\frac{d}{dt}\left(\frac{\partial T}{\partial \dot{\varphi}}\right) = (m_W r^2 + J_W + m_B r^2 + m_P r^2)\ddot{\varphi} + m_B l_B r \cos\alpha\, \ddot{\alpha} + m_P r L_B \cos\alpha\, \ddot{\alpha} + m_P r l_P \cos\beta\, \ddot{\beta}$$
$$- m_B l_B r \sin\alpha\dot{\alpha}^2 - m_P r L_B \sin\alpha\dot{\alpha}^2 - m_P r l_P \sin\beta\dot{\beta}^2$$

A partial derivative $\dfrac{\partial T}{\partial \dot{\alpha}}$ of the total system kinetic energy $T$ with respect to the angular velocity $\dot{\alpha}$ of the first link is expressed as follows:

$$\frac{\partial T}{\partial \dot{\alpha}} = \left(m_B l_B{}^2 + J_B + m_P L_B{}^2 + J_P\right)\dot{\alpha} + m_B l_B r \cos\alpha\, \dot{\varphi} + m_P r L_B \cos\alpha\, \dot{\varphi} + m_P L_B l_P \cos\alpha \cos\beta\, \dot{\beta}$$
$$+ m_P L_B l_P \sin\alpha \sin\beta\, \dot{\beta} + J_P \dot{\beta}$$

A derivative $\dfrac{d}{dt}\left(\dfrac{\partial T}{\partial \dot{\alpha}}\right)$ of the partial derivative $\dfrac{\partial T}{\partial \dot{\alpha}}$ with respect to time is expressed as follows:

$$\frac{d}{dt}\left(\frac{\partial T}{\partial \dot{\alpha}}\right) = \left(m_B l_B{}^2 + J_B + m_P L_B{}^2 + J_P\right)\ddot{\alpha} + m_P l_B r \cos\alpha\, \ddot{\varphi} + m_P r L_B \cos\alpha\, \ddot{\varphi}$$

$$+ m_P L_B l_P \cos\alpha \cos\beta\, \ddot{\beta} + m_P L_B l_P \sin\alpha \sin\beta\, \ddot{\beta} + J_B \ddot{\beta} - m_B l_B r \sin\alpha\dot{\varphi}\, \dot{\alpha} - m_P r L_B \sin\alpha\dot{\varphi}\, \dot{\alpha}$$
$$- m_P L_B l_P \sin\alpha \cos\beta\, \dot{\beta}\dot{\alpha} + m_P L_B l_P \cos\alpha \sin\beta\, \dot{\beta}\dot{\alpha} - m_P L_B l_P \cos\alpha \sin\beta\, \dot{\beta}^2$$
$$+ m_P L_B l_P \sin\alpha \cos\beta\, \dot{\beta}^2$$

A partial derivative $\dfrac{\partial T}{\partial \dot{\beta}}$ of the total system kinetic energy T with respect to the angular velocity $\dot{\beta}$ of the second link is expressed as follows:

$$\frac{\partial T}{\partial \dot{\beta}} = \left(m_P l_P{}^2 + J_P\right)\dot{\beta} + m_P r l_P \cos\beta\dot{\varphi} + m_P L_B l_P \cos\alpha \cos\beta\, \dot{\alpha} + m_P L_B l_P \sin\alpha \sin\beta\, \dot{\alpha} + J_P \dot{\alpha}$$

A derivative of the partial derivative $\dfrac{\partial T}{\partial \dot{\beta}}$ with respect to time is expressed as follows:

$$\frac{d}{dt}\left(\frac{\partial T}{\partial \dot{\beta}}\right) = \left(m_P l_P{}^2 + J_P\right)\ddot{\beta} + m_P r l_P \cos\beta \, \ddot{\varphi} + m_P L_B l_P \cos\alpha \cos\beta \, \ddot{\alpha}$$

$$+ m_P L_B l_P \sin\alpha \sin\beta \, \ddot{\alpha} + J_P \ddot{\alpha} - m_P r l_P \sin\beta \dot{\varphi}\,\dot{\beta} + m_P L_B l_P \sin\alpha \cos\beta \, \dot{\alpha}^2$$

$$+ m_P L_B l_P \cos\alpha \sin\beta \, \dot{\alpha}^2 - m_P L_B l_P \cos\alpha \sin\beta \, \dot{\alpha}\dot{\beta} + m_P L_B l_P \sin\alpha \cos\beta \, \dot{\alpha}\dot{\beta}$$

A partial derivative $\frac{\partial T}{\partial \varphi}$ of the total system kinetic energy T with respect to a deflection angle $\varphi$ of the wheel is expressed as follows:

$$\frac{\partial T}{\partial \varphi} = 0$$

A partial derivative $\frac{\partial T}{\partial \alpha}$ of the total system kinetic energy $T$ with respect to a deflection angle $\alpha$ of the first link is expressed as follows:

$$\frac{\partial T}{\partial \alpha} = -m_B l_B r \sin\alpha \, \dot{\varphi}\dot{\alpha} - m_P r L_B \sin\alpha \, \dot{\alpha}\dot{\varphi} + m_P L_B l_P \sin\alpha \cos\beta \, \dot{\alpha}\dot{\beta} + m_P L_B l_P \cos\alpha \sin\beta \, \dot{\alpha}\dot{\beta}$$

A partial derivative $\frac{\partial T}{\partial \beta}$ of the total system kinetic energy $T$ with respect to a deflection angle $\beta$ of the second link is expressed as follows:

$$\frac{\partial T}{\partial \beta} = -m_P r l_P \sin\beta \, \dot{\beta}\dot{\varphi} - m_P L_B l_P \cos\alpha \sin\beta \, \dot{\alpha}\dot{\beta} + m_P L_B l_P \sin\alpha \cos\beta \dot{\alpha}\dot{\beta}$$

(3) Total system potential energy U is calculated:

$$U = m_B g l_B \cos\alpha + m_P g (L_B \cos\alpha + l_P \cos\beta)$$

In the foregoing formula, a plane on which a mobile wheel is located is used as a zero-potential-energy plane, in other words, it is considered that potential energy of the mobile wheel is 0. Therefore, the foregoing formula for the total system potential energy U does not include potential energy of the wheel. Certainly, another potential energy plane may alternatively be selected. This does not affect implementation of the balance control method. A potential energy plane used during calculation of the total system potential energy is not limited in the present disclosure.

(4) A result of calculating a partial derivative of the total system potential energy U with respect to each degree of freedom in the generalized coordinates is obtained:

A partial derivative $\frac{\partial U}{\partial \varphi}$ of the total system potential energy U with respect to the deflection angle $\varphi$ of the mobile wheel is expressed as follows: $\frac{\partial U}{\partial \varphi} = 0$ .

A partial derivative $\frac{\partial U}{\partial \alpha}$ of the total system potential energy $U$ with respect to the deflection angle $\alpha$ of the first link is expressed as follows: $\frac{\partial U}{\partial \alpha} = -(m_B g l_B + m_P g l_B)\sin\alpha$ .

A partial derivative $\frac{\partial U}{\partial \beta}$ of the total system potential energy $U$ with respect to the deflection angle $\beta$ of the second link is expressed as follows: $\frac{\partial U}{\partial \beta} = -m_P g l_P \sin\beta$ .

(5) A dynamics equation of the wheel-legged robot in the second-order inverted pendulum model is derived based on a Euler-Lagrange equation by using the foregoing formulas:

$$m_{\varphi\varphi} = (m_W r^2 + J_W + m_B r^2 + m_P r^2)$$

$$m_{\varphi\alpha} = m_B l_B r \sin \alpha + m_P r L_B \cos \alpha$$

$$m_{\varphi\beta} = m_P r l_P \cos \beta$$

$$m_{\alpha\alpha} = (m_B l_B^2 + J_B + m_P L_B^2 + J_P)$$

$$m_{\alpha\beta} = m_P L_B l_P \cos \alpha \cos \beta + m_P L_B l_P \sin \alpha \sin \beta + J_P$$

$$m_{\beta\beta} = (m_P l_P^2 + J_P)$$

$$c_{\varphi} = -m_B l_B r \sin \alpha \, \dot{\alpha}^2 - m_P r L_B \sin \alpha \, \dot{\alpha}^2 - m_p r l_P \sin \beta \, \dot{\beta}^2$$

$$c_{\alpha} = -m_P L_B l_P \cos \alpha \sin \beta \, \dot{\beta}^2 + m_P L_B l_P \sin \alpha \cos \beta \, \dot{\beta}^2$$

$$c_{\beta} = -m_P L_B l_P \sin \alpha \cos \beta \, \dot{\alpha}^2 + m_P L_B l_P \cos \alpha \sin \beta \, \dot{\alpha}^2$$

$$g_{\varphi} = 0$$

$$g_{\alpha} = -(m_B g l_B + m_P g L_B) \sin \alpha$$

$$g_{\beta} = -m_P g l_P \sin \beta$$

The dynamics equation may be written in a polynomial form:

$$m_{\varphi\varphi} \ddot{\varphi} + m_{\varphi\alpha} \ddot{\alpha} + m_{\varphi\beta} \ddot{\beta} + c_{\varphi} = \tau_1$$

$$m_{\varphi\alpha} \ddot{\varphi} + m_{\alpha\alpha} \ddot{\alpha} + m_{\alpha\beta} \ddot{\beta} + c_{\alpha} + g_{\alpha} = -\tau_1 - \tau_2$$

$$m_{\varphi\beta} \ddot{\varphi} + m_{\alpha\beta} \ddot{\alpha} + m_{\beta\beta} \ddot{\beta} + c_{\beta} + g_{\beta} = \tau_2$$

The dynamics equation in the polynomial form is written into a dynamics equation in a matrix form:

$$M(\alpha,\beta) \begin{bmatrix} \ddot{\varphi} \\ \ddot{\alpha} \\ \ddot{\beta} \end{bmatrix} + C\left(\alpha,\beta,\dot{\alpha},\dot{\beta}\right) + G(\alpha,\beta) = \begin{bmatrix} \tau_1 \\ -\tau_1 - \tau_2 \\ \tau_2 \end{bmatrix}$$, where $M(\alpha,\beta)$ is a 3×3 inertia matrix, and specifi-

cally includes $\begin{bmatrix} m_{\varphi\varphi} & m_{\varphi\alpha} & m_{\varphi\beta} \\ m_{\varphi\alpha} & m_{\alpha\alpha} & m_{\alpha\beta} \\ m_{\varphi\beta} & m_{\alpha\beta} & m_{\beta\beta} \end{bmatrix}$.

Elements $m_{ij}$ ($i \in (\varphi,\alpha,\beta)$ and $j \in (\varphi,\alpha,\beta)$) in $M(\alpha,\beta)$ are elements in the inertia matrix, and are configured for representing a mass and a rotational inertia of each joint rigid body included in the wheel-legged robot, and an equivalent inertial physical quantity of each link under mutual impact when the deflection angle of the first link is $\alpha$ and the deflection angle of the second link is $\beta$. $C(\alpha, \beta, \dot{\alpha}, \dot{\beta})$ is a 3×1 bias force matrix, also referred to as a bias force vector, and specifically includes $[c_\varphi\ c_\alpha\ c_\beta]^T$, configured for representing a Coriolis force and a centripetal force applied to each link of the wheel-legged robot. $G(\alpha, \beta)$ represents a 3×1 gravity matrix, also referred to as a gravity vector, and specifically includes $[0\ q_\alpha\ g_\beta]^T$. $\tau_1$ represents the rotation torque of the first revolute joint. $\tau_2$ represents the rotation torque of the second revolute joint.

After the dynamics equation in the matrix form is derived through the foregoing process, the dynamics equation in the matrix form is directly used during subsequent balance control, and the foregoing derivation process does not need to be re-performed during balance control.

An $n^{th}$-order inverted pendulum model is described below. A definition of a world coordinate system used in this example is the same as the definition of the world coordinate system used in the content of the embodiment corresponding to FIG. 11. Certainly, the world coordinate system may alternatively be defined in another manner. This is not limited herein in the present disclosure.

As shown in FIG. 12, an $n^{th}$-order inverted pendulum includes n links, n revolute joints, and a mobile wheel. The mobile wheel is connected to a first link of the n links, the n links are connected in series, and n is a positive integer greater than or equal to 2. For example, the mobile wheel in the $n^{th}$-order inverted pendulum corresponds to a mobile wheel of a wheel-legged robot. When the wheel-legged robot has a plurality of mobile wheels, the plurality of mobile wheels are equivalent to a wheel in the $n^{th}$-order inverted pendulum model, and a rotation angle of the wheel is denoted as $\varphi$.

Two adjacent links among the n links of the $n^{th}$-order inverted pendulum model are connected through a revolute joint, and deflection angles of the n links are $q_1, q_2, ..., q_n$ respectively, where $q_1$ is a deflection angle of the first link, $q_2$ is a deflection angle of a second link, ..., and $q_n$ is a deflection angle of an $n^{th}$ link. The first link is used as an example to describe a deflection angle of a link. As shown in FIG. 12, in this derivation process, the deflection angle of the first link is a deflection angle of the first link relative to a z axis in a world coordinate system. A deflection angle of another link represents a deflection angle of the another link relative to the z axis.

Certainly, a manner of defining a deflection angle of a link is not limited thereto. When a deflection angle of a link is defined in different manners, a process of deriving a dynamics equation of the $n^{th}$-order inverted pendulum model is similar to the process in this embodiment, and details are not described again.

For example, when the wheel-legged robot is in a standing pose, a distance $l_1$ between the first link and a contact surface < a distance $l_2$ between the second link and the contact surface < ··· < a distance $l_n$ between the $n^{th}$ link and the contact surface. A leg mechanism is connected to a corresponding mobile wheel through a real revolute joint. In some embodiments, a link is a simplified model of each mechanism included in the wheel-legged robot. The wheel-legged robot includes a plurality of components, and each component is referred to as a "mechanism". During balance control, each mechanism is simply considered as a link, and the first link is an equivalent link obtained through equivalence of at least two non-coinciding leg mechanisms.

In some cases, the wheel-legged robot is in a pose in which a plurality of mobile wheels are in contact with a contact surface, and the plurality of mobile wheels are connected to respective leg mechanisms. For any one of the plurality of mobile wheels, a revolute joint connecting the mobile wheel to a leg mechanism corresponding to the mobile wheel is referred to as a real revolute joint, and a first revolute joint is obtained through equivalence of at least two real revolute joints.

After the $n^{th}$-order inverted pendulum model is described, a dynamics equation of the $n^{th}$-order inverted pendulum model is constructed in a manner similar to the manner of constructing the dynamics equation corresponding to the second-order inverted pendulum model. Specifically, total kinetic energy and potential energy respectively corresponding to the n links and the wheel (the total kinetic energy includes translational kinetic energy and rotational kinetic energy) are determined, the kinetic energy of the n links and the wheel is added up to obtain total system kinetic energy of the wheel-legged robot, and the potential energy of the n links and the wheel is added up to obtain total system potential energy of the wheel-legged robot.

For any one of a plurality of degrees of freedom (including a deflection angle of each link, an angular velocity of each link, a rotation angle of the wheel, and an angular velocity of the wheel) in a generalized coordinate system, a partial derivative of the total system kinetic energy with respect to the degree of freedom is determined, and a derivative of the partial derivative of the degree of freedom with respect to time is determined.

For any one of the plurality of degrees of freedom in the generalized coordinate system, a partial derivative of the total system potential energy with respect to the degree of freedom is determined. A system dynamics equation of the $n^{th}$-order inverted pendulum is determined by using the Euler-Lagrange equation based on a partial derivative of the total system kinetic energy with respect to each degree of freedom, a derivative of the partial derivative of each degree of freedom with respect to time, and a partial derivative of the total system potential energy with respect to each degree of freedom:

$$\begin{pmatrix} m_{\varphi\varphi} & m_{\varphi q} \\ m_{q\varphi} & m_{qq} \end{pmatrix} \begin{pmatrix} \ddot{\varphi} \\ \ddot{q} \end{pmatrix} + \begin{pmatrix} C_\varphi(\varphi,\dot\varphi,q,\dot q) \\ C_q(\varphi,\dot\varphi,q,\dot q) \end{pmatrix} + \begin{pmatrix} 0 \\ G_q(q) \end{pmatrix} = \begin{pmatrix} -1 & 0 \dots 0 \\ & I_n \end{pmatrix} \tau$$

$\mathrm{M} = \begin{pmatrix} m_{\varphi\varphi} & m_{\varphi q} \\ m_{q\varphi} & m_{qq} \end{pmatrix}$ represents an inertia matrix, and includes masses and rotational inertias of n revolute joints (the revolute joints are considered as joint rigid bodies) of the wheel-legged robot in the $n^{th}$-order inverted pendulum model. $q$ is a vector, and a transposed vector of $q$ is as follows: $q^T = [q_1 \quad q_2 \quad \dots \quad q_n]$.

$m_{\varphi\varphi} \in \mathbb{R}_{1\times 1}$, $m_{\varphi q} \in \mathbb{R}_{1\times n}$, $m_{q\varphi} \in \mathbb{R}_{n\times 1}$, and $m_{qq} \in \mathbb{R}_{n\times n}$. $\dot\varphi$ represents an angular velocity of the wheel. $\ddot\varphi$ represents an angular acceleration of the wheel. $\dot q$ represents angular velocities of the n links. $\dot q$ is a vector, and a transposed vector of $\dot q$ is as follows: $\dot q^T = [\dot q_1\ \dot q_2 \cdots q_n]$. $\ddot q$ represents angular accelerations of the n links. $\ddot q$ is a vector, and a transposed matrix of $\ddot q$ is as follows: $\ddot q^T = [\ddot q_1\ \ddot q_2 \cdots \ddot q_n]$. $C = \begin{pmatrix} C_\varphi(\varphi,\dot\varphi,q,\dot q) \\ C_q(\varphi,\dot\varphi,q,\dot q) \end{pmatrix}$ represents a bias force matrix, configured for representing a bias force applied to each link when the wheel-legged robot is in a pose in which an angle of the wheel is $\varphi$ and deflection angles of the n links are $q_1$, $q_2$, ..., $q_n$ respectively, where the bias force includes a centripetal force and a Coriolis force. $G = \begin{pmatrix} 0 \\ G_q(q) \end{pmatrix}$ represents a gravity matrix, configured for representing gravity applied to each of the n links when the wheel-legged robot is in a pose in which an angle of the wheel is $\varphi$ and deflection angles of the n links are $q_1$, $q_2$, ..., $q_n$ respectively.

Because a plane on which a mobile wheel is located is determined as a zero-potential-energy plane, the first item in the $G$ matrix is 0, indicating that gravity corresponding to the mobile wheel on the zero-potential-energy plane is 0. Certainly, another zero-potential-energy plane may alternatively be selected. This is not limited herein in the present disclosure. $I_n$ represents an identity matrix of $n \times n$. $\tau^T = [\tau_1\ \tau_2 \dots \tau_n]$ represents rotation torques corresponding to the n revolute joints.

The following describes a balance control method used after the wheel-legged robot is abstracted into the $n^{th}$-order inverted pendulum. The method is mainly implemented by the robust controller in cooperation with other modules such as the WBC in the control system. For details, refer to the following descriptions.

FIG. 13 is a flowchart of a balance control method for a wheel-legged robot according to an embodiment of the present disclosure. Operations of the method are performed by a computer device. The wheel-legged robot is simplified into an $n^{th}$-order inverted pendulum model. The $n^{th}$-order inverted pendulum model includes a wheel, n links, and n revolute joints. The wheel and a first link of the n links are connected through a first revolute joint of the n revolute joints. The n links are connected in series through n-1 revolute joints other than the first revolute joint. The first link is an equivalent link corresponding to at least two leg mechanisms of the wheel-legged robot. The wheel is an equivalent mobile wheel corresponding to mobile wheels to which the at least two leg mechanisms are respectively connected. n is a positive integer greater than or equal to 2. The method may include at least one of the following operations (1310 to 1350):

Operation 1310: Obtain an actual state parameter value of the wheel-legged robot at a first moment, the actual state parameter value being configured for representing motion states of n-1 links, the at least two leg mechanisms, and at least two mobile wheels, and the n-1 links being links among the n links other than the first link.

In some embodiments, the mobile wheel is configured to get in contact with a contact surface, the revolute joint is a joint driven by a joint motor, and the n links are links connected to at least one of the n revolute joints. In some embodiments, the n revolute joints connect the n links in series into a linear shape. In some embodiments, for any one of the at least two mobile wheels, a leg mechanism is connected to the mobile wheel through a real revolute joint, and different mobile wheels correspond to different real revolute joints. In some embodiments, a quantity of mobile wheels included in the wheel-legged robot is equal to a quantity of real revolute joints. In some embodiments, a quantity of mobile wheels included in the wheel-legged robot is equal to a quantity of leg mechanisms. For example, each of the n revolute joints other than the first revolute joint corresponds to a real revolute joint in the wheel-legged robot, and the first revolute joint is an equivalent revolute joint obtained based on at least two real revolute joints.

In some embodiments, the at least two mobile wheels do not overlap on a yoz plane in a world coordinate system, and the at least two leg mechanisms do not overlap on the yoz plane in the world coordinate system. For detailed descriptions of the content, refer to the foregoing embodiments. Details are not described herein again. The at least two mobile wheels are equivalent to the wheel, the at least two leg mechanisms are equivalent to the first link, and the wheel, the first link, and the n-1 links in the wheel-legged robot are considered as a whole. In this way, the wheel-legged robot can be abstracted into the $n^{th}$-order inverted pendulum model described above. The balance control method provided in this embodiment of the present disclosure is designed based on the $n^{th}$-order inverted pendulum model.

For example, the wheel-legged robot includes a plurality of components, each component (excluding an active joint) is referred to as a mechanism, and the mechanism is simply considered as a link. In this embodiment of the present disclosure, a plurality of mechanisms are at least two mechanisms that are connected in series through a revolute joint in the wheel-legged robot. For example, the n revolute joints are rotary joints. In an ideal state, a link is not bent or deformed.

In some embodiments, any one of the n links is an independent link (for example, in the wheel-legged robot, a leg mechanism is a link, and a torso mechanism is a link). For links other than the first link, each of the other links corresponds to a mechanism, and different links correspond to different mechanisms. For example, the n links include at least one composite link that includes m independent links connected through joints, m being a positive integer greater than 1. In this case, the joints for connecting the m independent links do not rotate or move linearly during balance control. For example, the joints are deadlocked during balance control, so that a link combination including the m independent links can be considered as one of the n links.

In some embodiments, the first link is a link connected to the wheel in the $n^{th}$-order inverted pendulum model through the first revolute joint. In some embodiments, in a direction perpendicular to the contact surface (in other words, a z-axis direction in the world coordinate system), the first link of the n links has a smallest distance from the wheel. It can be learned from the foregoing content that the first link is obtained through equivalence of at least two non-coinciding leg mechanisms.

In some embodiments, if a leg mechanism of the wheel-legged robot is a linear leg, the first link is obtained based on at least two non-coinciding leg mechanisms of the wheel-legged robot; or if a leg mechanism of the wheel-legged robot is a joint leg, to be specific, if the leg mechanism includes two sub-mechanisms connected through a knee joint and the knee joint is configured to control a joint angle between the two sub-mechanisms, the first link is obtained through equivalence of at least two first sub-mechanisms, the first sub-mechanism being a sub-mechanism that is in the leg mechanism and that is connected to a mobile wheel through a revolute joint at one end and connected to the knee joint at the other end. n is a positive integer greater than 1. For example, n is equal to 2, 3, 4, or 5. A maximum value of n is related to a structure of the wheel-legged robot, and is not limited.

For example, when n is equal to 2, the n links respectively correspond to a leg mechanism and a torso mechanism of the wheel-legged robot. For example, when n is equal to 3, the n links respectively correspond to a leg mechanism (the leg mechanism is a linear leg), a torso mechanism, and a head mechanism of the wheel-legged robot. For example, when n is equal to 3, the n links respectively correspond to a leg mechanism (the leg mechanism is a linear leg), a torso mechanism, and a robotic arm mechanism of the wheel-legged robot. For example, when n is equal to 4, the n links respectively correspond to a leg mechanism (the leg mechanism is a linear leg) and a torso mechanism of the wheel-legged robot, a first robotic arm link connected to the torso mechanism, and a second robotic arm link connected to a first robotic arm, or a robotic gripper. For example, when n is equal to 4, the n links respectively correspond to a first sub-mechanism of a leg mechanism (the leg mechanism is a joint leg), a second sub-mechanism connected to the first sub-mechanism through a knee joint, a torso mechanism, and a first robotic arm link connected to the torso mechanism. A leg mechanism corresponding to the first link of the n links is obtained through equivalence of a plurality of non-coinciding leg mechanisms. The plurality of non-coinciding leg mechanisms are a plurality of leg mechanisms between which included angles exist during observation from a side of the wheel-legged robot.

In some embodiments, the n revolute joints are configured to connect the n links in series. For example, all of the n revolute joints correspond to a same type of real revolute joint. For example, when the wheel-legged robot includes a plurality of mobile wheels, there are a plurality of real revolute joints for respectively connecting the mobile wheels to leg mechanisms corresponding to the mobile wheels, and the plurality of real revolute joints jointly correspond to the first revolute joint of the n revolute joints. To be specific, the first revolute joint in the $n^{th}$-order inverted pendulum model is obtained through equivalence of at least two real revolute joints, and the at least two real revolute joints are revolute joints respectively connected to the at least two mobile wheels that do not coincide along a heading direction.

A value of n is related to actual requirements such as a configuration of the wheel-legged robot, a computing capability of a computer, and power consumption. This is not limited herein in the present disclosure. A larger value of n indicates a larger quantity of links whose poses can be adjusted during balance control. This enriches poses of the wheel-legged robot during balance adjustment, and helps improve a balance capability of the wheel-legged robot to cope with external disturbance. A small value of n helps reduce a calculation amount during balance control and reduce power consumption.

In some embodiments, the first moment is any moment during movement of the wheel-legged robot. In some embodiments, a pose of the wheel-legged robot at the first moment is as follows: At least two mobile wheels (for example, a mobile wheel A and a mobile wheel B) in contact with the contact surface do not coincide along the heading direction (an x-axis direction in the world coordinate system) of the wheel-legged robot, and at least two leg mechanisms (for example, a leg mechanism 1 connected to the mobile wheel A, and a leg mechanism 2 connected to the mobile wheel B) do not coincide along the heading direction of the wheel-legged robot. For example, the wheel-legged robot has four mobile wheels, and at the first moment, the wheel-legged robot is in a four-wheel balanced mode or a two-wheel-to-four-wheel switching mode. For example, the leg mechanism 1 belongs to an outer leg mechanism group, and the leg mechanism 2 belongs to an inner leg mechanism group.

In some embodiments, the actual state parameter value is configured for describing a motion state of the wheel-legged robot at the first moment. The pose and the motion state of the wheel-legged robot at the first moment can be determined based on the actual state parameter value at the first moment. In some embodiments, the actual state parameter value at the first moment is measured by a sensor of the wheel-legged robot. In some embodiments, the actual state parameter value at the first moment includes at least one of the following: deflection angles $q_1^1$, $q_1^2$, ... of the at least two leg mechanisms, deflection angles $q_2$, ... , $q_n$ of the n-1 links, angular velocities $\ddot{\varphi}_1$, $\dot{\varphi}_2$, ... respectively corresponding to the at least two mobile wheels, angular velocities $\dot{q}_1^1$, $\dot{q}_1^2$, ... of the at least two leg mechanisms, and angular velocities $\ddot{q}_2$, ... , $\ddot{q}_n$ of the n-1 links.

For example, physical quantities included in the actual state parameter value are measured in the world coordinate system. A deflection angle of a leg mechanism is a deflection angle of the leg mechanism relative to the z axis in the world coordinate system. A deflection angle $q_i (i \in [2,n])$ of an $i^{th}$ link of the n-1 links is a deflection angle of the $i^{th}$ link relative to the z axis in the world coordinate system. An angular velocity $\dot{\varphi}$ of a mobile wheel is a rotation speed of the mobile wheel along a clockwise direction on the x axis in the world coordinate system. An angular velocity of a leg mechanism is a change speed of a deflection angle of the leg mechanism relative to the z axis in the world coordinate system. An angular velocity $\dot{q}_i (i \in [2, n])$ of the $i^{th}$ link is configured for representing an angular velocity of the $i^{th}$ link, to be specific, a change speed of the deflection angle of the $i^{th}$ link.

Physical quantities in the state parameter value may alternatively be represented by relative positions between links of the wheel-legged robot. For example, a deflection angle $q_j' (j \in [2,n])$ of a $j^{th}$ link is a deflection angle of the $j^{th}$ link relative to a $(j-1)^{th}$ link, the $(j-1)^{th}$ link and the $j^{th}$ link being connected through a revolute joint. In some embodiments, a distance between the $j^{th}$ link and the contact surface is greater than a distance between the $(j-1)^{th}$ link and the contact surface. An observation coordinate system corresponding to each physical quantity in the actual state parameter value is determined according to an actual requirement. This is not limited herein in the present disclosure. In the present disclosure, the physical quantities in the formulas are measured based on the world coordinate system. Certainly, the balance control method may alternatively be implemented by using physical quantities determined by using another observation coordinate system, and related formulas may be obtained through equivalent replacement based on the formulas provided in the present disclosure. Details are not described herein.

In some embodiments, the obtaining an actual state parameter value of the wheel-legged robot at a first moment includes: determining the deflection angles $q_1^1$, $q_1^2$, ... of the at least two leg mechanisms and the deflection angles $q_2$, ... , $q_n$ of the n-1 links by using an IMU sensor and a motor encoder; and determining an angular velocity $\dot{\varphi}$ of a mobile wheel, the angular velocities $\dot{q}_1^1$, $\dot{q}_1^2$, ... of the at least two leg mechanisms, and angular velocities $q_1, \dot{q}_2, ..., \ddot{q}_n$ of the n links by using the motor encoder.

For example, clock cycles of IMU sensors and motor encoders in the wheel-legged robot are the same or are in a multiple relationship, so that the physical quantities included in the actual state parameter value are physical quantities at the first moment. For specific content about the IMU sensor and the motor encoder, refer to the foregoing descriptions. Details are not described herein again.

In some embodiments, a robust controller starts a balance control process by using the actual state parameter value at the first moment as input information.

Operation 1320: Calculate an equivalent state parameter value at the first moment based on the actual state parameter value at the first moment, the equivalent state parameter value being configured for representing motion states of the n links and the wheel.

In some embodiments, the equivalent state parameter value is a state parameter value needed during balance control, and at least one physical quantity included in the equivalent state parameter value is related to the $n^{th}$-order inverted pendulum model. To be specific, the equivalent state parameter value is configured for representing motion states and poses of the n revolute joints and a mobile wheel at the first moment.

In some embodiments, the equivalent state parameter value at the first moment includes at least one of the following: deflection angles $q_1, q_2, ..., q_n$ of the n links, an angular velocity $\dot{\varphi}$ of the wheel, and angular velocities $\dot{q}_1, \dot{q}_2, ..., \dot{q}_n$ of the n links. For example, the equivalent state parameter value includes the deflection angles $q_1, q_2, ..., q_n$ of the n links, the angular velocity $\dot{\varphi}$ of the wheel, and the angular velocities $\dot{q}_1, \dot{q}_2, ..., \dot{q}_n$ of the n links. The equivalent state parameter value is represented by a symbol $\xi$, and the state parameter value $\xi$ is expressed as follows: $\xi = [q\ \dot{\varphi}\ \dot{q}]^T$. $q^T$ represents a vector, to be specific, a transposed vector of $q$, where $q^T = [q_1\ q_2 ... q_n]$. $\dot{q}^T$ represents a transposed vector of $\dot{q}$, where $\dot{q}^T = [\dot{q}_1\ \dot{q}_2 ... \dot{q}_n]$.

In some embodiments, the computer device performs equivalence on physical quantities related to the at least two leg mechanisms to obtain physical quantity related to the first link, and performs equivalence on state quantities related to the at least two mobile wheels to obtain physical quantities related to the wheel in the equivalent state parameter value.

For details, refer to the following embodiments.

A state parameter in the equivalent state parameter value participates in an operation during balance control. In the following descriptions, a "state parameter value" other than an "actual state parameter value" may represent an "equivalent state parameter value".

Operation 1330: Establish a sliding surface based on the equivalent state parameter value at the first moment, the equivalent state parameter value gradually approaching 0 on the sliding surface.

In some embodiments, the sliding surface is understood as an imaginary vector plane during sliding mode control. The equivalent state parameter value of the wheel-legged robot gradually approaches 0 on the sliding surface. In other words, a state of the wheel-legged robot can gradually tend to be balanced on the sliding surface. The sliding surface may be represented by a symbol s. In some embodiments, the sliding surface is a rational number, and a value of the sliding surface may be greater than 0, equal to 0, or less than 0.

In some embodiments, the sliding surface is a linear sliding surface having a linear relationship with the state parameter value, or the sliding surface is a sliding surface having a higher-order mapping relationship with the state parameter value. To reduce computing load of the robust controller and reduce energy consumption of the wheel-legged robot during actual application, in the embodiments in this specification, a method for determining a sliding surface based on a state parameter value is described mainly by using creation of a linear sliding surface as an example.

In some embodiments, a quantity of sliding surfaces that the robust controller needs to establish is related to a quantity of to-be-determined rotation torques. The rotation torque is a physical quantity for controlling rotation of a revolute joint. In some embodiments, the quantity of sliding surfaces that the robust controller needs to establish is equal to the quantity of to-be-determined rotation torques. In the present disclosure, the wheel-legged robot is abstracted into the $n^{th}$-order inverted pendulum model that includes the n revolute joints in total, and the n revolute joints respectively have independent rotation torques. Therefore, if a rotation torque at a second moment includes the rotation torques of the n revolute joints, n sliding surfaces need to be established. Any two of the n sliding surfaces are different sliding surfaces. For specific operations of establishing a sliding surface, refer to the following embodiments.

Operation 1340: Determine a force and torque instruction for a whole-body joint of the wheel-legged robot based on the sliding surface, the equivalent state parameter value at the first moment, and a dynamics equation of the wheel-legged robot, the whole-body joint including the n revolute joints, and the dynamics equation being established based on the $n^{th}$-order inverted pendulum model.

In some embodiments, the whole-body joint includes an active joint in the wheel-legged robot. For example, the whole-body joint includes the n revolute joints and an active joint in the wheel-legged robot other than the n revolute joints.

In some embodiments, determining, by the computer device, the force and torque instruction for the whole-body joint of the wheel-legged robot based on the sliding surface, the equivalent state parameter value at the first moment, and the dynamics equation of the wheel-legged robot includes: determining the rotation torques of the n revolute joints based on the sliding surface, the equivalent state parameter value at the first moment, and the dynamics equation of the wheel-legged robot; calculating a task acceleration of the wheel-legged robot based on the rotation torques of the n revolute joints; and calculating, by a whole-body dynamics controller in a control system for the wheel-legged robot, the force and torque instruction for the whole-body joint of the wheel-legged robot based on the task acceleration of the wheel-legged robot.

In some embodiments, this operation is performed by at least one controller in the wheel-legged robot. For example, operation 1340 is jointly performed by the robust controller and the whole-body dynamics controller. The robust controller participates in a process of calculating the rotation torques of the n revolute joints, and the whole-body dynamics controller calculates the force and torque instruction for the whole-body joint of the wheel-legged robot based on the task acceleration. In some cases, the robust controller cannot directly interact with the whole-body dynamics controller. Therefore, an observation module further needs to participate in operation 1340. The observation module is configured to transfer information between a plurality of controllers. The observation module has communication connections (including a wired connection and a wireless connection) to the plurality of controllers.

For example, the operation of calculating the task acceleration of the wheel-legged robot based on the rotation torques of the n revolute joints is implemented by the observation module in the control system for the wheel-legged robot. The observation module establishes a connection to the robust controller, and the observation module establishes a connection to the whole-body dynamics controller. The observation module obtains the rotation torques of the n revolute joints from the robust controller, calculates the task acceleration based on the rotation torques of the revolute joints, and transmits the task acceleration to the whole-body dynamics controller. The whole-body dynamics controller determines, based on the task acceleration, a force and torque instruction corresponding to each whole-body joint motor. For a specific process of this operation, refer to the following embodiments. The observation module is disposed to enable a plurality of controllers in the wheel-legged robot to share data. This facilitates control of the controllers over the wheel-legged robot.

A control result (the two rotation torques) of the robust controller is associated with the whole-body dynamics controller, so that the whole-body dynamics controller can receive information related to balance control. This helps the whole-body dynamics controller properly optimize input information received by the whole-body dynamics controller, generate optimized joint instructions (namely, force and torque instructions), and transmit the joint instructions to corresponding joints, so that more links in the wheel-legged robot can rotate during balance control. This helps improve a balance control capability of the wheel-legged robot during movement. For specific descriptions of this operation, refer to the following embodiments.

Operation 1350: Separately control, at a second moment according to the force and torque instruction for the whole-body joint, real revolute joints corresponding to the n-1 revolute joints and the first revolute joint, to adjust a balance status of the wheel-legged robot, the second moment being later than the first moment.

In some embodiments, the second moment is any moment later than the first moment. In some embodiments, the second moment is a moment after the force and torque instruction for the whole-body joint is calculated.

In some embodiments, the whole-body joint includes a plurality of movable joints of the wheel-legged robot. In some embodiments, the whole-body joint includes a revolute joint and a linear joint. In some embodiments, the whole-body joint includes at least n-1 revolute joints, and based on at least two real revolute joints corresponding to the first revolute joint, the at least two real revolute joints are equivalent to the first revolute joint during establishment of the $n^{th}$-order inverted pendulum model.

In some embodiments, the n-1 revolute joints are understood as revolute joints in the $n^{th}$-order inverted pendulum model other than the first revolute joint. Because each of the n-1 revolute joints corresponds to a real revolute joint in the wheel-legged robot, the n-1 revolute joints can be directly driven by the force and torque instruction to move. The first revolute joint is an equivalent revolute joint corresponding to a plurality of real revolute joints, and the first revolute joint actually does not exist in the wheel-legged robot. Therefore, the force and torque instruction needs to directly control the plurality of real revolute joints equivalent to the first revolute joint rather than control the first revolute joint. Therefore, the force and torque instruction for the n-1 revolute joints can be directly used to control corresponding revolute joints in the wheel-legged robot.

In some embodiments, this operation is performed by the whole-body dynamics controller in the wheel-legged robot. After determining the force and torque instruction for the whole-body joint, the whole-body dynamics controller determines, from the force and torque instruction for the whole-body joint, force and torque instructions respectively corresponding to the n revolute joints, and respectively transmits the force and torque instructions to joint motors corresponding to the revolute joints, to control the joint motors to rotate according to the force and torque instructions, to change a pose of the wheel-legged robot.

In some embodiments, when a length of a leg mechanism of the wheel-legged robot is variable, for a linear motor in the at least two leg mechanisms, the computer device controls, according to the force and torque instruction for the whole-body joint, the linear motor to move, the linear motor in the leg mechanism controlling a length of the leg mechanism. In this manner, through cooperation with a plurality of revolute joints, a pose of the wheel-legged robot is adjusted, to change a center of gravity of the wheel-legged robot. This helps the wheel-legged robot restore to a balanced state more quickly, and improves a capability of the wheel-legged robot to remain in the balanced state.

To sum up, the wheel-legged robot is abstracted into a multi-order inverted pendulum model, and based on this, deflection angles of a plurality of links in the wheel-legged robot can be adjusted during balance control, to change a pose of the wheel-legged robot. Compared with the related art in which only an included angle between a mobile wheel and a leg mechanism can be adjusted during balance control, in this solution, poses of the plurality of links in the wheel-legged robot are variable during balance adjustment. This greatly enriches poses of the robot, helps quickly adjust the robot to a balanced state, and further helps improve a capability of the robot to restore to a balance state under the action of different disturbance forces, to improve robustness of a balance control process for the robot.

In addition, according to the method provided in the present disclosure, the equivalent state parameter value is determined based on the actual state parameter value, so that balance control in a multi-wheel motion mode can share a set of control parameters with balance control in a two-wheel motion mode. In this way, after a motion mode of the wheel-legged robot is switched, a control parameter in a controller (for example, the robust controller) used for balance control does not need to be adjusted. This helps improve universality of the controller.

A method for obtaining the equivalent state parameter value at the first moment is described below by using several embodiments.

In some embodiments, operation 1320 includes the following sub-operations (not shown in the accompanying drawings of this specification), and the following sub-operations are performed by a computer device.

Sub-operation 1321: For angular velocities of the at least two mobile wheels that are included in the actual state parameter value, superpose the angular velocities of the at least two mobile wheels to obtain the angular velocity of the wheel.

In some embodiments, because angular velocities of mobile wheels that do not coincide along a heading direction are not equal, the angular velocity of the wheel is obtained through vector superposition of the angular velocities of the at least two mobile wheels. For example, the at least two mobile wheels include a mobile wheel 1 and a mobile wheel 2, an angular velocity of the mobile wheel 1 is $v_1$, and an angular velocity of the mobile wheel 2 is $v_2$. In this case, the angular velocity of the wheel is equal to $(v_1 + v_2)/2$, and a direction of the angular velocity of the wheel is consistent with a direction of a larger one of $v_1$ and $v_2$.

Sub-operation 1322: Determine a geometrical relationship between the at least two leg mechanisms based on lengths and deflection angles of the at least two leg mechanisms. In some embodiments, the geometrical relationship between the at least two leg mechanisms is configured for representing a positional relationship between the at least two leg mechanisms. In some embodiments, the geometrical relationship is configured for representing a geometric figure formed by connection lines between the at least two leg mechanisms and the at least two mobile wheels on the contact surface. For example, the computer device divides the at least two leg mechanisms into two mechanism groups, leg mechanisms belonging to one mechanism group correspond to one edge in the geometric figure, and leg mechanisms belonging to the other mechanism group correspond to another edge in the geometric figure. In this case, the geometric figure is a triangle.

When the mechanism group includes at least two leg mechanisms with different deflection angles, the computer device first obtains an intermediate leg mechanism through equivalence of the at least two leg mechanisms with different deflection angles, and determines a deflection angle and a length of the intermediate leg mechanism. The geometrical relationship is related to the intermediate leg mechanism. In this process, a manner of performing equivalence on the at least two leg mechanisms with different deflection angles is the same as a manner of determining the first link. For details, refer to the following embodiments. In some embodiments, the geometrical relationship includes an included angle between the at least two leg mechanisms.

One end of each of the at least two leg mechanisms is connected to a same joint, and the other ends of the at least two leg mechanisms are respectively connected to mobile wheel vectors corresponding to the at least two leg mechanisms. In some embodiments, one end of each of the at least two leg mechanisms has a same height, and the other end also has a same height. After the lengths of the at least two leg mechanisms are determined, the included angle between the at least two leg mechanisms can be determined based on the deflection angles of the at least two leg mechanisms. For example, the included angle between the at least two leg mechanisms is equal to a sum of the deflection angles of the at least two leg mechanisms.

Sub-operation 1323: Determine a deflection angle of the first link and an angular velocity of the first link based on the geometrical relationship, the deflection angles of the at least two leg mechanisms, and angular velocities of the at least two leg mechanisms.

In some embodiments, the computer device determines a positional relationship between the first link and the at least two leg mechanisms based on the geometrical relationship, and determines a relationship between deflection angles of two leg mechanisms and the deflection angle of the first link based on the positional relationship, to determine the deflection angle of the first link. For example, the first link is obtained through equivalence based on two leg mechanisms. One end of the first link is the same as ends of the two leg mechanisms, the other end of the first link is located at a midpoint of a connection line between the other ends of the two leg mechanisms, a length of the first link is calculated according to the law of cosines, and the deflection angle of the first link can also be calculated according to the law of cosines after the length of the first link is determined.

In some embodiments, the angular velocity of the first link is equal to half of a sum of angular velocities of the two leg mechanisms. Details are not described herein.

Sub-operation 1324: Use the deflection angles of the n-1 links in the actual state parameter value as deflection angles of the n-1 links in the equivalent state parameter value. For any one of the n-1 links, a deflection angle of the link in the actual state parameter value is equal to a deflection angle of the link in the equivalent state parameter value.

Sub-operation 1325: Use the angular velocities of the n-1 links in the actual state parameter value as angular velocities of the n-1 links in the equivalent state parameter value. For any one of the n-1 links, an angular velocity of the link in the actual state parameter value is equal to an angular velocity of the link in the equivalent state parameter value.

A state parameter value of an equivalent link and a state parameter value of an equivalent mobile wheel that cannot be measured by a sensor can be obtained through equivalence. In this way, a state parameter value of the $n^{th}$-order inverted pendulum model into which the wheel-legged robot is abstracted is known, and state quantities of some revolute joints do not need to be changed during equivalence processing of the actual state parameter value, so that an equivalence manner for the state quantities of the equivalent link and the equivalent mobile wheel is simple. This helps reduce calculation overheads during determining of the equivalent state parameter value.

A method for determining a sliding surface is described below by using several embodiments. A quantity of sliding surfaces is n, the n sliding surfaces are configured for constraining the rotation torques of the n revolute joints, and n is a positive integer. In some embodiments, the n sliding surfaces are different, and the n sliding surfaces are configured for jointly participating in a rotation torque calculation process. Operation 1330 in the foregoing embodiments further includes the following sub-operations (not shown in the accompanying drawings of this specification), and the following sub-operations are performed by a computer device.

Sub-operation 1333: Determine at least two sliding mode parameters for an $i^{th}$ sliding surface of the n sliding surfaces, i being a positive integer less than or equal to n. In some embodiments, the sliding surface is related to at least one element in a state parameter value. An element in the state parameter value is also referred to as a state parameter.

For example, $q_1$, $q_2$, ..., $q_n$, $\dot{\varphi}$, and $\dot{q}_1$, $\dot{q}_2$, ..., $\dot{q}_n$ included in the equivalent state parameter value $\xi = [q \; \dot{\varphi} \; \dot{q}]^\mathrm{T}$ are state parameters. For explanations about the foregoing parameters, refer to the foregoing embodiments. Details are not described herein again.

In some embodiments, a sliding surface is represented by a sliding mode parameter and at least one element included in the equivalent state parameter value. To be specific, the sliding surface in this embodiment of the present disclosure is an expression including a sliding mode parameter and at least one element, and the equivalent state parameter value tends to be stable on the sliding surface. To be specific, a pose of the wheel-legged robot at a next moment is determined under a constraint of the sliding surface, to adjust a balance status of the wheel-legged robot.

For example, a specific sliding surface is related to a deflection angle of the first link and an acceleration of the first link in the equivalent state parameter value. For another example, a specific sliding surface is related to the deflection angle of the $i^{th}$ link and an acceleration of the $i^{th}$ link. In some embodiments, the n sliding surfaces are separately related to a first state parameter in a state parameter value. For example, the first state parameter is an angular velocity of a mobile wheel. To be specific, all of the n sliding surfaces are related to the angular velocity of the mobile wheel.

In some embodiments, the sliding mode parameter is a real number. The sliding mode parameter is configured for representing a ratio relationship between a state parameter in a state parameter value and a sliding surface. For example, different sliding surfaces do not share sliding mode parameters. To be specific, the n sliding surfaces include at least two sliding surfaces, and sliding mode parameters respectively corresponding to the at least two sliding surfaces are not equal.

In some embodiments, a quantity of state parameters for creating a sliding surface is greater than a quantity of sliding mode parameters. In some embodiments, for any one of the n sliding surfaces, a quantity of state parameters used during creation of the sliding surface is greater than a quantity of sliding mode parameters used. This method helps ensure that equations constructed based on a sliding surface and a dynamics model parameter is solvable, and ensure that a determined rotation torque can be calculated by using the balance control method provided in the embodiments of the present disclosure. For example, three state parameters and two sliding mode parameters in a state parameter value are used for establishing a specific sliding surface. For another example, four state parameters and three sliding mode parameters in a state parameter value are used for establishing a specific sliding surface.

During creation of a sliding surface, a quantity of sliding mode parameters used is less than a quantity of state parameters. Therefore, a coefficient of at least one state parameter on the sliding surface is equal to 1. To be specific, on the sliding surface, the state parameters have no corresponding sliding mode parameter. However, other state parameters to be used for creating a specific sliding surface are in a one-to-one correspondence with sliding mode parameters.

In some embodiments, for the $i^{th}$ sliding surface of the n sliding surfaces, the $i^{th}$ sliding surface includes at least two sliding mode parameters. In some embodiments, state parameters included in different sliding surfaces are not completely the same, and quantities of state parameters to be respectively used for creating the sliding surfaces are equal. For example, quantities of sliding mode parameters respectively included in the n sliding surfaces are equal. It is assumed that three state parameters are used for creating the $i^{th}$ sliding surface, and three state parameters are also used for creating an $(i+k)^{th}$ sliding surface, k being a positive integer, and i+k being less than or equal to n.

In some embodiments, a quantity of sliding mode parameters included in the $i^{th}$ sliding surface is related to a quantity of state parameters used for establishing the $i^{th}$ sliding surface. In some embodiments, a quantity of state parameters used for creating the $i^{th}$ sliding surface is greater than a quantity of sliding mode parameters used for creating the $i^{th}$ sliding surface by 1. To ensure that determined solutions of the rotation torques of the n revolute joints can be calculated by using the sliding surface and the dynamics model parameter, the $i^{th}$ sliding surface is related to at least three state parameters in the equivalent state parameter value at the first moment. In some embodiments, at least three state parameters related to the $i^{th}$ sliding surface are different from at least three state parameters related to an $l^{th}$ sliding surface, $l$ being a positive integer less than or equal to n.

To improve reliability of a determined rotation torque, the sliding mode parameter needs to meet a system stability condition. For details, refer to the following descriptions.

In some embodiments, quantities of state parameters respectively used for creating the n sliding surfaces are equal. For example, any one of the n sliding surfaces includes three state parameters. A method for creating a sliding surface is described below by using creation of the $i^{th}$ sliding surface as an example.

Usually, the equivalent state parameter value at the first moment including a larger quantity of state parameters related to a specific sliding surface indicates a larger amount of reference information used during calculation of the rotation torques of the n revolute joints. A mutual constraint between state parameters helps improve accuracy of the rotation torques of the n revolute joints that are determined based on the n sliding surfaces and the dynamics model parameter, and helps improve balance adjustment effect.

In some embodiments, at least three state parameters and at least two sliding mode parameters need to be used for creating the $i^{th}$ sliding surface.

For example, state parameters used for creating the $i^{th}$ sliding surface include the deflection angle of the $i^{th}$ link, the angular velocity of the mobile wheel, and the angular velocity of the $i^{th}$ link. In this case, two sliding mode parameters used for creating the $i^{th}$ sliding surface are a sliding mode parameter corresponding to the deflection angle of the $i^{th}$ link, and a sliding mode parameter corresponding to the angular velocity of the mobile wheel. For example, the $i^{th}$ sliding surface is related to four state parameters in a state parameter value, and the $i^{th}$ sliding surface is related to a deflection angle of the $i^{th}$ link, an angular velocity of the mobile wheel, an angular velocity of the $i^{th}$ link, and a deflection angle of an $(i+m)\%n^{th}$ link that are included in the state parameter value, m being a positive integer that cannot be exactly divided by n, and "%" representing a remainder of division. In this case, the $i^{th}$ sliding surface includes at least three sliding mode parameters: a sliding mode parameter corresponding to the deflection angle of the $i^{th}$ link, a sliding mode parameter corresponding to the angular velocity of the mobile wheel, and a sliding mode parameter corresponding to the deflection angle of the $(i+m)\%n^{th}$ link. A quantity of state parameters related to a sliding surface and a quantity of sliding mode parameters are designed according to an actual requirement. This is not limited herein.

In some embodiments, a plurality of sets of sliding surface creation solutions are designed in the robust controller. In different sliding surface creation solutions, quantities of sliding mode parameters and state parameters used for creating the $i^{th}$ sliding surface are not completely the same. For example, in a first sliding surface creation solution, two sliding mode parameters and three state parameters need to be used for creating the $i^{th}$ sliding surface; and in a second sliding surface creation solution, five sliding mode parameters and six state parameters need to be used for creating the $i^{th}$ sliding surface. To be specific, a total quantity of sliding mode parameters used for creating a sliding surface in the first sliding mode creation solution is not equal to a total quantity of sliding mode parameters to be used for creating a sliding surface in the second sliding mode creation solution, and a quantity of state parameters used for creating a sliding surface in the first sliding mode creation solution is not equal to a quantity of state parameters to be used for creating a sliding surface in the second sliding mode creation solution.

In some embodiments, during balance control, the robust controller selects, based on an actual case, a target creation solution from the plurality of sets of sliding surface creation solutions, and determines, based on the target creation solution, a total quantity of sliding mode parameters to be used for creating the $i^{th}$ sliding surface. For example, when calculation performance of the robust controller is high, the robust controller uses, as the target creation solution, a sliding surface creation solution among the plurality of sets of sliding surface creation solutions that is related to a large quantity of sliding mode parameters. The target creation solution is a sliding surface creation solution among the plurality of sets of sliding surface creation solutions that is selected to be used during balance control. For example, the robust controller determines the target creation solution based on a task currently performed by the wheel-legged robot. If the task currently performed by the wheel-legged robot has a high requirement on balance and the robust controller has a good operation capability, the robust controller uses, as the target creation solution, a sliding surface establishment solution among the plurality of sets of sliding surface establishment solutions that involves a large quantity of sliding mode parameters. For example, when the robust controller has average calculation performance or a power consumption requirement exists, the robust controller uses, as the target creation solution, a sliding surface creation solution, in at least one set of sliding surface creation solutions, that includes a small quantity of sliding mode parameters. For example, the robust controller receives a control instruction from a remote control, the control instruction being configured for indicating a target creation solution selected from a plurality of sliding surface creation solutions.

Sub-operation 1336: Establish the $i^{th}$ sliding surface based on the at least two sliding mode parameters and the equivalent state parameter value at the first moment.

In some embodiments, the equivalent state parameter value includes the deflection angles of the n links, the angular velocity of the mobile wheel, and the angular velocities of the n links. In some embodiments, the robust controller creates the $i^{th}$ sliding surface based on at least three state parameters and at least two sliding mode parameters in the equivalent state parameter value at the first moment. In some embodiments, operation 1336 of establishing the $i^{th}$ sliding surface based on the at least two sliding mode parameters and the equivalent state parameter value at the first moment includes the following sub-operations. The following operations are performed by a computer device.

Sub-operation 1336-a: Determine, based on a first sliding mode parameter of the at least two sliding mode parameters, a first processing result related to the deflection angle of the $i^{th}$ link. In some embodiments, the first sliding mode parameter is a coefficient corresponding to the deflection angle of the $i^{th}$ link, and a second sliding mode parameter is a coefficient corresponding to the angular velocity of the mobile wheel.

In some embodiments, the first processing result is a result obtained by processing the deflection angle of the $i^{th}$ link by using the first sliding mode parameter during construction of the $i^{th}$ sliding surface. For example, a method for processing the deflection angle of the $i^{th}$ link by using the first sliding mode parameter includes but is not limited to: performing a basic operation (for example, performing addition, subtraction, multiplication, or division calculation) based on the first sliding mode parameter and the deflection angle of the $i^{th}$ link to obtain a processing result for the $i^{th}$ link. For example, the first sliding mode parameter is multiplied by the angular velocity of the $i^{th}$ link to obtain the first processing result.

Sub-operation 1336-b: Determine, based on the second sliding mode parameter of the at least two sliding mode parameters, a second processing result related to the angular velocity of the mobile wheel. In some embodiments, during establishment of the $i^{th}$ sliding surface, the second processing result is a result obtained by processing the angular velocity of the mobile wheel by using the second sliding mode parameter. For example, a method for processing the angular velocity of the mobile wheel by using the second sliding mode parameter includes but is not limited to: performing a basic operation based on the second sliding mode parameter and the angular velocity of the mobile wheel. For example, the second sliding mode parameter is multiplied by the angular velocity of the mobile wheel to obtain the second processing result. Different sliding surfaces correspond to different second sliding mode parameters. To be specific, during creation of different sliding surfaces, different processing results are obtained for the mobile wheel when the angular velocity of the mobile wheel is processed by using the second sliding mode parameter.

Sub-operation 1336-c: Establish the $i^{th}$ sliding surface based on the first processing result, the second processing result, and the angular velocity of the $i^{th}$ link.

In some embodiments, the $i^{th}$ sliding surface is directly proportional to a processing result for the $i^{th}$ link, the $i^{th}$ sliding surface is directly proportional to a processing result for the mobile wheel, and the first sliding surface is directly proportional to the angular velocity of the $i^{th}$ link. For example, the robust controller adds up the processing result for the $i^{th}$ link, the processing result for the mobile wheel, and the angular velocity of the $i^{th}$ link to obtain the $i^{th}$ sliding surface.

In some embodiments, the robust controller establishes the $i^{th}$ sliding surface based on the processing result for the $i^{th}$ link, the processing result for the mobile wheel, the angular velocity of the $i^{th}$ link, and a sliding mode constant. For example, the sliding mode constant is a preset value, and the sliding mode constant is a rational number. For example, the sliding mode constant is equal to 0, 1, or 1.1. For example, the robust controller adds up the processing result for the $i^{th}$ link, the processing result for the mobile wheel, the angular velocity of the $i^{th}$ link, and the sliding mode constant to obtain the $i^{th}$ sliding surface.

A sliding surface is constructed by using some sliding mode parameters in the equivalent state parameter value, so that both the sliding surface and a dynamics equation can be represented by an expression including the equivalent state parameter value. In this way, during solving of a rotation torque of a revolute joint, a value of the rotation torque can be constrained by the sliding surface, so that the calculated rotation torque can provide positive help for a balance control process, to reduce occurrence of a case that the calculated rotation torque is inappropriate. This helps improve reliability of balance control.

The robust controller separately determines the n sliding surfaces by using the foregoing method for creating the $i^{th}$ sliding surface.

The n sliding surfaces may be expressed by the following formula: $s = \varnothing q + \Lambda\dot{\varphi} + \dot{q}$. s represents a sliding surface matrix including the n sliding surfaces. $\varnothing \in \mathbb{R}^{n \times n}$, including first sliding mode parameters respectively corresponding to the deflection angles of the n links. $\Lambda \in \mathbb{R}^{n \times 1}$ including second sliding mode parameters corresponding to the angular velocity of the mobile wheel on the n sliding surfaces respectively. For explanations of other parameters, refer to the foregoing descriptions. Details are not described herein again.

The n sliding surfaces are established in this manner. This controls quantities of sliding mode parameters and state parameters used during creation of a sliding surface while ensuring that determined rotation torques of the n revolute joints can be calculated based on the sliding surface and the dynamics model parameter. This helps control calculation overheads of calculating the rotation torques of the n revolute joints, and helps increase a speed of determining a rotation torque, reduce power consumption, and implement balance control on the robot.

A method for determining the force and torque instruction for the whole-body joint is described below by using several embodiments. Operations of the process are performed by a computer device. Operation 1340 in the foregoing embodiments includes at least sub-operations 1343 and 1346 (not shown in the accompanying drawings of this specification).

Sub-operation 1343: Calculate a rotation torque at the second moment based on the dynamics equation, the equivalent state parameter value at the first moment, and the sliding surface, the rotation torque at the second moment including the rotation torques of the n revolute joints, and for each of the n revolute joints, a rotation torque of the revolute joint being configured for adjusting an included angle between two links connected to the revolute joint.

In some embodiments, calculating the rotation torque at the second moment based on the dynamics equation and the sliding surface includes: determining a dynamics model parameter based on the dynamics equation of the wheel-legged robot and the equivalent state parameter value at the first moment, the dynamics model parameter being configured for defining a mapping relationship between an angular acceleration at the first moment and the rotation torque at the second moment, and the angular acceleration at the first moment including angular accelerations of the n links; and calculating the rotation torque at the second moment based on the dynamics model parameter and the sliding surface.

A method for determining the dynamics model parameter is described below by using several embodiments.

In some embodiments, the angular acceleration at the first moment is rotation accelerations of the n links (which may also be understood as angular accelerations of rotation of joint motors corresponding to the n revolute joints) after the wheel-legged robot is abstracted into the $n^{th}$-order inverted pendulum model, and the angular acceleration at the first moment may be denoted as $\ddot{q}$. It can be learned from the foregoing content that, after the wheel-legged robot is abstracted into the $n^{th}$-order inverted pendulum model, a dynamics equation in a matrix form can be obtained:

$$\begin{pmatrix} m_{\varphi\varphi} & m_{\varphi q} \\ m_{q\varphi} & m_{qq} \end{pmatrix} \begin{pmatrix} \ddot{\varphi} \\ \ddot{q} \end{pmatrix} + \begin{pmatrix} C_{\varphi}(\varphi, \dot{\varphi}, q, \dot{q}) \\ C_{q}(\varphi, \dot{\varphi}, q, \dot{q}) \end{pmatrix} + \begin{pmatrix} 0 \\ G_{q}(q) \end{pmatrix} = \begin{pmatrix} -1 & 0 \dots 0 \\ & I_{n} \end{pmatrix} \tau$$

In this embodiment of the method, the robust controller in the control system for the wheel-legged robot is designed based on the equation, so that the robust controller can perform the balance control method provided in the embodiments of the present disclosure.

It can be learned based on a physical relationship between an acceleration, a speed, and a position that angular velocities of the n links at a next moment later than the first moment and a pose of the wheel-legged robot at a subsequent moment can be predicted based on an acceleration at the first moment. A speed and a pose of the wheel-legged robot can be changed based on a rotation torque of a joint. In the design of the robust controller in this solution, a focus is on establishing a mapping relationship between an acceleration of the wheel-legged robot and a rotation torque of a joint based on the dynamics equation in the matrix form.

For example, partial feedback linearization is performed on the dynamics equation in the matrix form, so that a matrix related to the acceleration of the wheel-legged robot is on one side of the dynamics equation, and a matrix related to a rotation torque of a revolute joint is on the other side of the formula. A mapping relationship between the acceleration at the first moment and the rotation torque is determined. The mapping relationship between the acceleration at the first moment and the rotation torque of the revolute joint is represented by a dynamics parameter. The process is completed during design of the robust controller, and a related formula does not need to be repeatedly derived during actual balance control.

In some embodiments, the dynamics model parameter is configured for representing a linear mapping relationship between the acceleration at the first moment and the rotation torque. To be specific, the dynamics model parameter enables the acceleration at the first moment and the rotation torque to satisfy an equivalence relationship in a formula obtained through conversion based on a dynamics formula. Because there is more than one acceleration at the first moment and more than one rotation torque, the dynamics model parameter may be represented in a matrix form.

For example, the dynamics model parameter includes a ratio parameter matrix g[] and an offset parameter matrix f[]. The ratio parameter matrix g[] is configured for representing a ratio relationship between the acceleration at the first moment and the rotation torque. The offset parameter matrix f[] is configured for representing an offset between the acceleration at the first moment and the rotation torque. For calculation methods for the foregoing two dynamics model parameter matrices, refer to the following embodiments.

In some embodiments, during design of the robust controller, a representation form of the dynamics model parameter is predetermined. After obtaining a state parameter value at the first moment, the robust controller may determine a value of each element included in the dynamics model parameter by substituting the state parameter value at the first moment into the representation form of the dynamics model parameter.

In some embodiments, the determining a dynamics model parameter based on the dynamics equation and the equivalent state parameter value at the first moment includes the following operations:

Operation 10 (not shown in the figure): Substitute the equivalent state parameter value at the first moment into the dynamics equation to determine an inertia matrix, a bias force matrix, and a gravity matrix at the first moment, the inertia matrix being configured for representing mass and rotational inertia of the n revolute joints at the first moment, the bias force matrix being configured for representing a bias force of the wheel-legged robot at the first moment, and the gravity matrix being configured for representing gravity of the wheel-legged robot at the first moment.

In some embodiments, the inertia matrix is configured for representing inertial quantities of joint rigid bodies respectively corresponding to the n revolute joints of the wheel-legged robot in a pose at the first moment, and the inertial quantity includes at least one of the following: a mass and a rotational inertia. In some embodiments, the inertia matrix may be calculated based on the dynamics equation. When the wheel-legged robot is abstracted into the $n^{th}$-order inverted pendulum model, the inertia matrix is a matrix with a size of $(n+1)\times(n+1)$.

In some embodiments, the bias force matrix is configured for representing a Coriolis force and a centripetal force applied to each link. In some embodiments, the bias force matrix includes a bias force caused by the deflection angle of the wheel, and a bias force caused by the deflection angles of the n links. In some embodiments, the gravity matrix is configured for representing gravity applied to each link. In some embodiments, the gravity matrix includes gravity applied to the wheel and gravity respectively applied to the n links. In some embodiments, the wheel is always in contact with the contact surface, a height of the mobile wheel remains unchanged during balance control, a plane on which a center of mass of the wheel is located is used as a zero-potential-energy plane, and the gravity applied to the wheel is 0, to reduce calculation overheads during balance control.

For related content about the inertia matrix, the bias force matrix, and the gravity matrix, refer to the content corresponding to FIG. 11 and FIG. 12 in this specification. Details are not described herein again. In some embodiments, expressions of elements in the inertia matrix, the bias force matrix, and the gravity matrix are also pre-derived based on the dynamics formula. After determining the equivalent state parameter value at the first moment, the robust controller calculates specific values of elements included in the inertia matrix, the bias force matrix, and the gravity matrix at the first moment based on the equivalent state parameter value at the first moment and representation forms of the elements in the inertia matrix, the bias force matrix, and the gravity matrix. Then the inertia matrix, the bias force matrix, and the gravity matrix at the first moment are obtained.

Operation 20 (not shown in the figure): Determine the dynamics model parameter based on the inertia matrix, the bias force matrix, and the gravity matrix.

In some embodiments, the dynamics model parameter includes a ratio parameter matrix and an offset parameter matrix. The ratio parameter matrix is configured for representing a ratio relationship between the angular acceleration at the first moment and the rotation torques of the n revolute joints. The offset parameter matrix is configured for representing an offset relationship between the angular acceleration at the first moment and the rotation torques of the n revolute joints. In some embodiments, the robust controller calculates the offset parameter matrix based on the inertia matrix, the bias force matrix, and the gravity matrix, and calculates the ratio parameter matrix based on the inertia matrix.

A conversion relationship between the acceleration of the wheel-legged robot and the rotation torques of the n revolute joints is determined based on the dynamics model parameter. In this way, subsequently, the rotation torques of the n revolute joints can be quickly determined based on the dynamics model parameter and the sliding surface. This helps reduce unnecessary conversion during determining of a rotation torques of a revolute joints, and reduce computing load of the computer device.

In some embodiments, operation 20 includes the following sub-operations, and the following sub-operations are performed by a computer device.

Sub-operation 20-a (not shown in the figure): Separately process a product of an inverse matrix of the inertia matrix and the bias force matrix and a product of the inverse matrix of the inertia matrix and the gravity matrix by using a selection matrix to obtain the offset parameter matrix, the selection matrix being configured for extracting the rotation torques of the n revolute joints from the dynamics equation.

In some embodiments, an element in the selection matrix includes three values: (0, 1, -1). The selection matrix is configured for enabling rotation torques in $\tau$ to independently exist in the dynamics equation. To be specific, the dynamics equation is processed by using the selection matrix, so that coefficients of rotation torques of revolute joints in the dynamics equation have a same sign, and the dynamics equation does not include a basic operation (for example, a$\tau_1$ - $\tau_2$) between rotation matrices of any two revolute joints.

Sub-operation 20-b (not shown in the figure): Process the inverse matrix of the inertia matrix by using the selection matrix to obtain the ratio parameter matrix.

A process of deriving the dynamics model parameter is described below. Partial feedback linearization is performed on the dynamics equation in the matrix form to obtain a formula 1:

$$\begin{pmatrix} \ddot{\varphi} \\ \ddot{q} \end{pmatrix} = -M^{-1}(q) \begin{pmatrix} C_\varphi(\varphi, \dot{\varphi}, q, \dot{q}) \\ C_q(\varphi, \dot{\varphi}, q, \dot{q}) \end{pmatrix} - M^{-1}(q) \begin{pmatrix} 0 \\ G_q(q) \end{pmatrix} + M^{-1}(q) \begin{pmatrix} -1 & 0 \dots 0 \\ & I_n \end{pmatrix} \tau$$

$M^{-1}(q)$ is the inverse matrix of the inertia matrix, $M^{-1}(q) * M(q) = E$, and E is an identity matrix. For physical meanings of other parameters in the formula 1, refer to the foregoing embodiments. Details are not described herein again.

To simplify execution logic during balance control and reduce a calculation amount of the robust controller, the formula 1 further needs to be adjusted during design of the robust controller. To be specific, expressions respectively corresponding to the offset parameter matrix and the ratio parameter matrix are predetermined based on the dynamics equation.

In some embodiments, the formula 1 is processed by using the selection matrix to obtain a formula 2:

$$\begin{pmatrix} \ddot{\varphi} \\ \ddot{q} \end{pmatrix} = \begin{pmatrix} f_\varphi(\varphi, \dot{\varphi}, q, \dot{q}) \\ f_q(\varphi, \dot{\varphi}, q, \dot{q}) \end{pmatrix} + \begin{pmatrix} g_\varphi(\varphi, \dot{\varphi}, q, \dot{q}) \\ g_q(\varphi, \dot{\varphi}, q, \dot{q}) \end{pmatrix} \tau$$

$$f[] = \begin{pmatrix} f_\varphi(\varphi, \dot{\varphi}, q, \dot{q}) \\ f_q(\varphi, \dot{\varphi}, q, \dot{q}) \end{pmatrix} = \left[ -M^{-1}(q) \begin{pmatrix} C_\varphi(\varphi, \dot{\varphi}, q, \dot{q}) \\ C_q(\varphi, \dot{\varphi}, q, \dot{q}) \end{pmatrix} - M^{-1}(q) \begin{pmatrix} 0 \\ G_q(q) \end{pmatrix} \right]$$

represents the offset parameter matrix. $g[] = \begin{pmatrix} g_\varphi(\varphi, \dot{\varphi}, q, \dot{q}) \\ g_q(\varphi, \dot{\varphi}, q, \dot{q}) \end{pmatrix}$ represents the ratio parameter matrix.

$$g_\varphi(\varphi, \dot\varphi, q, \dot q) \in \mathbb{R}^{1 \times n}, \ g_q(\varphi, \dot\varphi, q, \dot q) \in \mathbb{R}^{n \times n}, \text{ and } \begin{pmatrix} g_\varphi(\varphi, \dot\varphi, q, \dot q) \\ g_q(\varphi, \dot\varphi, q, \dot q) \end{pmatrix} = M^{-1}(q) \begin{pmatrix} -1 & 0 \dots 0 \\ & I_n \end{pmatrix} S^T.$$

$S^T$ is the selection matrix.

In some embodiments, the formula 2 is derived after the wheel-legged robot is abstracted into the $n^{th}$-order inverted pendulum model for modeling. During balance control, after obtaining the state parameter value at the first moment, the robust controller may calculate the ratio parameter matrix and the offset parameter matrix based on the formula 2 and expressions, obtained during derivation of the dynamics equation of the $n^{th}$-order inverted pendulum model, of elements in the inertia matrix, the bias force matrix, and the gravity matrix. In this manner, efficiency of determining the ratio parameter matrix and the offset parameter matrix during balance control is improved.

In some embodiments, the dynamics equation of the robot is obtained through derivation based on an Euler-Lagrange equation after the wheel-legged robot is abstracted into the $n^{th}$-order inverted pendulum model, and a mobile wheel in the wheel-legged robot corresponds to a wheel in the $n^{th}$-order inverted pendulum model. For a process of deriving the dynamics equation, refer to the foregoing embodiments. Details are not described herein again. The wheel-legged robot is abstracted into the $n^{th}$-order inverted pendulum model to complete balance control on the wheel-legged robot. This helps adapt to balance control requirements in different scenarios and improve robustness of the balance control method.

The following describes a process of calculating the rotation torque at the second moment based on the dynamics parameter and the sliding surface. The process is performed by a computer device, for example, the robust controller of the wheel-legged robot.

After the method for designing the dynamics model parameter and the n sliding surfaces in the robust controller is described, design content of the robust controller corresponding to the operation of calculating the rotation torques of the n revolute joints based on the sliding surface and the dynamics model parameter is described. After the n sliding surfaces are established based on the equivalent state parameter value, the robust controller determines a formula of first-order derivatives of the n sliding surfaces with respect to time, and uses a torque to represent the angular accelerations of the n links based on the dynamics equation (the formula 2), to obtain a formula 3 through collation:

$$\dot s = \emptyset \dot q + \Lambda \ddot\varphi + \ddot q = \emptyset \dot q + \Lambda f_\varphi + \Lambda g_\varphi \tau + f_q + g_q \tau = (\emptyset \dot q + \Lambda f_\varphi + f_q) + (\Lambda g_\varphi + g_q)\tau$$

$\dot s$ represents the first-order derivatives of the n sliding surfaces with respect to time, $f_\varphi$ is $f_\varphi(\varphi, \dot\varphi, q, \dot q)$ in the offset parameter matrix f[] in the formula 2, $f_q$ is $f_q(\varphi, \dot\varphi, q, \dot q)$ in the offset parameter matrix f[] in the formula 2, $g_\varphi$ is $g_\varphi(\varphi, \dot\varphi, q, \dot q)$ in the ratio parameter matrix g[] in the formula 2, and $g_q$ is $g_q(\varphi, \dot\varphi, q, \dot q)$ in the ratio parameter matrix g[] in the formula 2. For other parameters, refer to the foregoing descriptions. Details are not described herein again.

Transposition is performed on the formula 3 to obtain a formula 4:

$$\tau = (\Lambda g_\varphi + g_q)^{-1} \left( -\emptyset \dot q - \Lambda f_\varphi - f_q - k_\eta sgn(s) \right)$$

$$\dot s = -k_\eta sgn(s)$$

$$s^T \dot s = -k_\eta |s|$$

sgn() is a sign function, $k_\eta \in \mathbb{R}^{n \times n}$ is a constant matrix, $s^T$ is a transposed matrix of a sliding mode matrix s including the n sliding surfaces, |s| represents absolute values of the n sliding surfaces, $|s| = \begin{Vmatrix} |s_1| \\ |s_2| \\ \vdots \\ |s_n| \end{Vmatrix}$, and $\dot s$ represents the first-order derivatives of the n sliding surfaces with respect to time. For other parameters, refer to the foregoing descriptions. Details are not described herein again. In some embodiments, the formula 3 and the formula 4 are obtained through real-time calculation by the robust controller during balance control.

Based on a property of the sliding surface, when the sliding surface is controlled to be equal to 0, a state parameter related to the sliding surface gradually tends to be 0 along the sliding surface, in other words, the wheel-legged robot restores to a balanced state. The state parameter value (state parameters in the state parameter value) satisfies the following formula on the sliding surface: $s = \emptyset q + \Lambda \dot{\varphi} + \dot{q} = 0$. The angular velocities of the $n$ links may be inversely expressed by using the foregoing formula: $\dot{q} = -\emptyset q - \Lambda \dot{\varphi}$.

The robust controller determines first-order derivatives of the angular velocities of the n links with respect to time, to obtain a formula 5 capable of representing the angular accelerations of the $n$ links: $\ddot{q} = -\emptyset \dot{q} - \Lambda \ddot{\varphi} = \emptyset^2 q + \emptyset \Lambda \dot{\varphi} - \Lambda \ddot{\varphi}$.

Because q is a vector including the deflection angles of the n links, q is split as follows: It is assumed that $\alpha$ represents $q_1$ (the deflection angle of the first link), and $\beta$ represents $\begin{pmatrix} q_2 \\ \vdots \\ q_n \end{pmatrix}$. To be specific, $\beta$ includes deflection angles of links among the n links other than the first link. In this case, the dynamics equation obtained based on the $n^{th}$-order inverted pendulum model is written as follows:

$$m_{\varphi\varphi}\ddot{\varphi} + m_{\varphi\alpha}\ddot{\alpha} + m_{\varphi\beta}\ddot{\beta} + c_\varphi = \tau_1$$

$$m_{\varphi\alpha}\ddot{\varphi} + m_{\alpha\alpha}\ddot{\alpha} + m_{\alpha\beta}\ddot{\beta} + c_\alpha + g_\alpha = -\tau_1 - \tau_2$$

$$m_{\varphi\beta}\ddot{\varphi} + m_{\alpha\beta}\ddot{\alpha} + m_{\beta\beta}\ddot{\beta} + c_\beta + g_\beta = \tau_2$$

In the formula, $\ddot{\alpha}$ represents an angular acceleration of the first link, $\ddot{\beta}$ represents an angular acceleration corresponding to each of the n links other than the first link, $m_{\varphi\varphi}$ represents an inertial quantity related to the mobile wheel in the inertia matrix M, $m_{\varphi\alpha}$ represents an inertial quantity related to the first link in $m_{\varphi q}$ in the inertia matrix M, $m_{\varphi\beta}$ represents an inertial quantity irrelevant to the first link in $m_{\varphi q}$ in the inertia matrix M, $m_{\alpha\alpha}$ represents an inertial quantity related to the first link in $m_{qq}$ in the inertia matrix M, $m_{\beta\beta}$ represents an inertial quantity irrelevant to the first link in $m_{qq}$ in the inertia matrix M, $c_\alpha$ represents a bias force applied to the first link, $c_\beta$ represents a bias force applied to each of the n links other than the first link, $g_\alpha$ represents gravity applied to the first link, $g_\beta$ represents gravity applied to each of the n links other than the first link, $\tau_1$ represents a rotation torque of the first revolute joint, and $\tau_2$ represents a rotation torque corresponding to each of the n revolute joints other than the first revolute joint.

The foregoing three formulas included in the dynamics equation may be added up to obtain a formula 6:

$(m_{\varphi\varphi} + m_{\varphi\alpha} + m_{\varphi\beta})\ddot{\varphi} + (m_{\varphi\alpha} + m_{\alpha\alpha} + m_{\alpha\beta})\ddot{\alpha} + (m_{\varphi\beta} + m_{\alpha\beta} + m_{\beta\beta})\ddot{\beta} + c_\varphi + c_\alpha + c_\beta + g_\alpha + g_\beta = 0$

$\alpha$ and $\ddot{\beta}$ in the formula 6 are combined into $\ddot{q}$ to obtain a formula 7:

$(m_{\varphi\varphi} + m_{\varphi\alpha} + m_{\varphi\beta})\ddot{\varphi} + [m_{\varphi\alpha} + m_{\alpha\alpha} + m_{\alpha\beta}, m_{\varphi\beta} + m_{\alpha\beta} + m_{\beta\beta}]\ddot{q} + c_\varphi + c_\alpha + c_\beta + g_\alpha + g_\beta = 0$

$\ddot{q}$ in the formula 7 is equivalently replaced by using the formula 5 to obtain a formula 8:

$$\left(m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda\right)\ddot{\varphi}$$
$$+ [m_{\varphi\alpha} + m_{\alpha\alpha} + m_{\alpha\beta}, m_{\varphi\beta} + m_{\alpha\beta} + m_{\beta\beta}](\emptyset^2 q + \emptyset\Lambda\dot{\varphi}) + c_\varphi + c_\alpha + c_\beta + g_\alpha$$
$$+ g_\beta = 0$$

A formula 9 for representing $\ddot{\varphi}$ is obtained based on the formula 8:

$\ddot{\varphi} = (m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda)^{-1}\{-[m_{\varphi\alpha} + m_{\alpha\alpha} + m_{\alpha\beta}, m_{\varphi\beta} + m_{\alpha\beta} + m_{\beta\beta}](\emptyset^2 q + \emptyset\Lambda\dot{\varphi}) - c_\varphi - c_\alpha - c_\beta - g_\alpha - g_\beta\}$

A formula 10 for representing $\ddot{q}$ is obtained based on the formulas 5 and 9:

$$\ddot{q} = \emptyset^2 q + \emptyset\Lambda\dot{\varphi}$$

$$- \Lambda\big(m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda\big)^{-1}\{-[m_{\varphi\alpha}$$

$$+ m_{\alpha\alpha} + m_{\alpha\beta}, m_{\varphi\beta} + m_{\alpha\beta} + m_{\beta\beta}](\emptyset^2 q + \emptyset\Lambda\dot{\varphi}) - c_{\varphi} - c_{\alpha} - c_{\beta} - g_{\alpha} - g_{\beta}\}$$

$\dot{q}, \ddot{\varphi}, \ddot{q}$ are combined to obtain a state equation in a matrix form:

$$\begin{bmatrix} \dot{q} \\ \ddot{\varphi} \\ \ddot{q} \end{bmatrix} = \begin{bmatrix} 0 & 0 & I \\ \emptyset^2\Lambda m_1^{-1}m_2 & \emptyset\Lambda m_1^{-1}m_2 & 0 \\ \emptyset^2(1 + \Lambda m_1^{-1}m_2) & \emptyset\Lambda(1 + \Lambda m_1^{-1}m_2) & 0 \end{bmatrix} \begin{bmatrix} q \\ \dot{\varphi} \\ \dot{q} \end{bmatrix} + \begin{bmatrix} 0 \\ c_1 \\ \Lambda c_1 \end{bmatrix} u$$

$m_1 = (m_{\varphi\varphi} + m_{\varphi\alpha} + m_{\varphi\beta} - [m_{\varphi\alpha} + m_{\alpha\alpha} + m_{\alpha\beta}, m_{\varphi\beta} + m_{\alpha\beta} + m_{\beta\beta}]\Lambda)$, $m_2 = -[m_{\varphi\alpha} + m_{\alpha\alpha} + m_{\alpha\beta}, m_{\varphi\beta} + m_{\alpha\beta} + m_{\beta\beta}]$, $c_1 = -c_{\varphi} - c_{\alpha} - c_{\beta} - g_{\alpha} - g_{\beta}$, and $I$ is an identity matrix.

In some embodiments, a system stability criterion is related to the state equation determined based on the dynamics equation and the sliding surface. For example, the stability criterion is related to a coefficient matrix in the state equation. To ensure that the system stability criterion is satisfied, sliding mode parameters need to satisfy the coefficient matrix of the state equation: $\begin{bmatrix} 0 & 0 & I \\ \emptyset^2\Lambda m_1^{-1}m_2 & \emptyset\Lambda m_1^{-1}m_2 & 0 \\ \emptyset^2(1 + \Lambda m_1^{-1}m_2) & \emptyset\Lambda(1 + \Lambda m_1^{-1}m_2) & 0 \end{bmatrix}$, in which characteristic roots of are all distributed on a left half plane of a complex plane. The state equation may be used as a matrix inequality constraint. To be specific, values of the sliding mode parameters are distributed on the left half plane of the complex plane of the coefficient matrix.

In some embodiments, during balance control in the present disclosure, the robust controller determines the rotation torques of the n revolute joints based on the formula 4 and the state equation. During balance control, the robust controller calculates the rotation torques $\tau$ of the n revolute joints based on the formula 4. The formula 4 involves the sliding surface matrix s including the n sliding surfaces. The formula 2 includes the dynamics model parameter, and further involves the sliding mode parameter.

The robust controller obtains the state parameter value at the first moment, substitutes the state parameter value at the first moment into a corresponding formula to determine the dynamics model parameter, and creates the n sliding surfaces, a sliding mode parameter on the sliding surface meeting the system stability condition. Then the robust controller calculates the rotation torques $\tau$ of the n revolute joints based on the formula 4 while ensuring that the sliding mode parameter satisfies the matrix inequality constraint formed by the state equation.

For example, in the balance control method provided in the present disclosure, the sliding mode parameter satisfying the matrix inequality constraint is first determined, and then the n sliding surfaces are constructed by using the sliding mode parameter. The robust controller determines the state equation based on the dynamics equation and a representation form of the sliding surface (in this case, the sliding mode parameter on the sliding surface is unknown); determines a value or a value range of the sliding mode parameter when the system stability condition that the characteristic roots of the coefficient matrix of the state equation are on the left half plane is met, to obtain an actual value of the sliding mode parameter needed during creation of the sliding surface; and substitutes the sliding mode parameter into the sliding surface, and calculates the rotation torques of the n revolute joints based on the sliding surface and the dynamics model parameter.

For example, in the balance control method provided in the present disclosure, sliding mode parameters respectively corresponding to the n sliding surfaces are first selected within a specific value range, the n sliding surfaces are constructed by using the sliding mode parameters, and the rotation torques $\tau$ of the n revolute joints are calculated by using the formula 4. Then the robust controller verifies whether the four sliding mode parameters satisfy the foregoing matrix inequality constraint. If all of the four sliding mode parameters satisfy the matrix inequality constraint, the rotation torques $\tau$ of the n revolute joints may be configured for controlling the n revolute joints. If the n sliding mode parameters do not satisfy the matrix inequality constraint, the determined rotation torques $\tau$ of the n revolute joints cannot be used.

A method for determining the sliding mode parameter is described below by using several embodiments.

In some embodiments, that the robust controller determines at least two sliding mode parameters for the ith sliding surface of the n sliding surfaces includes: determining a first sliding mode parameter of at least one sliding mode parameter from a (2i-1)th predicted parameter set, and determining a second sliding mode parameter of the at least one sliding mode parameter from a (2i)th predicted parameter set, sliding mode parameters respectively included in the (2i-1)th predicted parameter set and the (2i)th predicted parameter set meeting a constraint condition of a stability criterion.

In this embodiment, after determining a state at the first moment, the computer device first uses the state equation as a matrix inequality constraint to determine solution sets respectively corresponding to sliding mode parameters that need to be used on the n sliding surfaces respectively, to obtain 2n predicted parameter sets. To be specific, for any one of the 2n predicted parameter sets, a sliding mode parameter in the predicted parameter set meets a system stability principle.

During creation of the $i^{th}$ sliding surface, the first sliding mode parameter of the at least two sliding mode parameters is determined from the $(2i-1)^{th}$ predicted parameter set, the second sliding mode parameter of the at least two sliding mode parameters is determined from the $(2i)^{th}$ predicted parameter set, and the $i^{th}$ sliding surface is created based on the state parameter value at the first moment and the at least two sliding mode parameters. Then the robust controller calculates the rotation torques of the n revolute joints based on the formula 4. In this embodiment, a method for determining a sliding mode parameter is described by using an example in which a sliding surface is created by using two sliding mode parameters. If k sliding mode parameters need to be used for creating a sliding surface, during creation of the $i^{th}$ sliding surface, one sliding mode parameter needs to be obtained from each of k predicted parameter sets corresponding to the $i^{th}$ sliding surface, to obtain k sliding mode parameters. k being equal to 2 corresponds to the method described in the foregoing embodiments. k is a positive integer greater than or equal to 2, and a maximum value of k is set according to an actual requirement. This is not limited herein.

This setting helps avoid a case in which sliding mode parameters that do not satisfy system stability are selected and consequently, rotation torques of the n revolute joints that are calculated by using the sliding mode parameters cannot control balance of the wheel-legged robot, to improve availability of a determined rotation torque of a revolute joints. This setting helps avoid calculation overheads caused by the computer device re-determining a rotation torque due to a sliding mode parameter selection operation, and reduce unnecessary calculation operations. This helps shorten time spent in determining the rotation torques of the n revolute joints.

A process of calculating the force and torque instruction for the whole-body joint is described below by using several embodiments.

In some embodiments, operation 1340 further includes sub-operation 1346: Sub-operation 1346: Calculate the force and torque instruction for the whole-body joint based on the rotation torque at the second moment.

In some embodiments, sub-operation 1346 includes: calculating a task acceleration of the wheel-legged robot at the second moment based on the rotation torques of the n revolute joints, the task acceleration including an acceleration related to a center of mass of the wheel-legged robot.

In some embodiments, the center of mass of the wheel-legged robot is an imaginary point aggregating all masses of the wheel-legged robot, and the center of mass of the wheel-legged robot is related to a mass distribution of mechanisms of the wheel-legged robot, a pose of the wheel-legged robot, and other factors.

In some embodiments, the task acceleration includes but is not limited to at least one of the following: an acceleration of the center of mass of the wheel-legged robot on the x axis, an acceleration of the center of mass of the wheel-legged robot on a y axis, an acceleration of the center of mass of the wheel-legged robot on the z axis, an angular acceleration of the center of mass of the wheel-legged robot rotating around the x-axis direction, an angular acceleration of the center of mass of the wheel-legged robot rotating around a y-axis direction, and an angular acceleration of the center of mass of the wheel-legged robot rotating around the z-axis direction. For example, the task acceleration is observed in operation space or observed in joint space.

The operation space is space related to an operation task of the wheel-legged robot, and a physical quantity in the operation is observed in a Cartesian coordinate system (world coordinates). The joint space is a coordinate system in which a motion state of a joint is observed. For example, conversion may be performed between a physical quantity in the operation space and a physical quantity in task space. Conversion between position information of a mechanism in the operation space and a position in the joint space may be performed by using a kinematics formula, and conversion between a speed in the operation space and a speed in the joint space is performed by using a Jacobian matrix. The Jacobian matrix is a matrix obtained by sorting first-order partial derivatives in a specific manner.

In some embodiments, the task acceleration includes an acceleration related to the center of mass of the wheel-legged robot in a process in which the wheel-legged robot performs an operation space task. In some embodiments, the task acceleration is related to a position of the center of mass of the wheel-legged robot relative to the wheel-legged robot. For a method for determining the task acceleration, refer to the following descriptions.

The operation space task may be understood as a task that the wheel-legged robot needs to perform in the operation space. An operation task that the wheel-legged robot needs to perform at a specific moment is determined based on a motion scenario of the wheel-legged robot. In some embodiments, the wheel-legged robot may perform a plurality of operation space tasks at the first moment.

For example, a type of the operation space task includes but is not limited to at least one of the following: a supporting wheel task, a vertical-direction torso task, a torso pose task, a swinging wheel task, a center-of-mass task, and the like. The supporting wheel task is a task related to a mobile wheel, in contact with the contact surface, of at least one mobile wheel of the wheel-legged robot. The vertical-direction torso task is a task of the torso mechanism of the wheel-legged robot in the z-axis direction in the world coordinate system. The torso pose task is a task related to an Euler angle of the torso mechanism of the wheel-legged robot. The Euler angle includes a roll angle, a pitch angle, and a yaw angle. The swinging wheel task is a task related to a mobile wheel, not in contact with the contact surface, of the at least one mobile wheel of the wheel-legged robot. The center-of-mass task is a task related to the center of mass of the wheel-legged robot.

In some embodiments, sub-operation 1346 further includes: The whole-body dynamics controller determines a force and torque instruction for the whole-body joint of the wheel-legged robot at the second moment based on the task acceleration, the whole-body joint including the n revolute joints.

In some embodiments, the whole-body joint is an active joint in the wheel-legged robot. In some embodiments, a type of the whole-body joint includes a revolute joint and a linear joint. For example, the revolute joint corresponds to a rotary motor, and a deflection angle, an angular velocity, and the like of a link connected to the revolute joint are changed through rotation of the rotary motor. The linear joint corresponds to a linear motor, and the linear motor is configured to change a length of a mechanism. For example, a leg mechanism (the first link) of the wheel-legged robot includes the linear motor, and a length of the leg mechanism can be adjusted by using the linear motor.

In some embodiments, after determining the task acceleration, the observation module transmits the task acceleration to the whole-body dynamics controller; and the whole-body dynamics controller determines, based on the task acceleration, the force and torque instruction corresponding to the whole-body joint. In some embodiments, if the wheel-legged robot performs a plurality of operation space tasks at the first moment, in addition to a need to determine a task acceleration related to the center of mass of the wheel-legged robot, other task accelerations respectively corresponding to other operation space tasks further need to be calculated. For specific content about the process, refer to the following embodiments.

In some embodiments, a whole-body dynamics equation of the wheel-legged robot is designed in the whole-body dynamics controller, and the whole-body dynamics equation is configured for representing a relationship between a pose of the wheel-legged robot and a whole-body state variable. The whole-body dynamics equation is obtained by establishing the whole-body dynamics model of the wheel-legged robot and through kinematics derivation.

In some embodiments, the whole-body dynamics model may be expressed by the following formula:

$$H\ddot{q} + C = S^T\tau + J_C^T f$$ . $H \in \mathbb{R}^{N_G \times N_G}$ represents a joint space inertia matrix, and the joint space inertia matrix H includes an inertial quantity of a joint rigid body of the whole-body joint. $C \in \mathbb{R}^{N_G}$ represents an offset force applied to the whole-body joint in the joint space, and the C matrix includes a sum of a Coriolis force, a centripetal force, and gravity applied to the entire wheel-legged robot. $S \in \mathbb{R}^{N_J \times N_G}$ represents the selection matrix. $J_C \in \mathbb{R}^{N_C \times N_G}$ represents a contact point Jacobian matrix. $\tau = \mathbb{R}^{N_J}$ . $f = \mathbb{R}^{N_C}$ represents a contact force vector, including at least one contact force applied to the wheel-legged robot. $q, \dot{q}, \ddot{q} \in \mathbb{R}^{N_G}$ represent a generalized position, a generalized speed, and a generalized acceleration respectively. $N_G$ represents a total degree of freedom of the robot. $N_G = N_f + N_j$. $N_f$ is a floating degree of freedom. $N_j$ is a degree of freedom of an active joint, and the active joint is a joint that can move automatically. $N_C$ represents a quantity of contact forces, and $N_C$ is equal to a product of a quantity $n_C$ of contact points and a dimension $N_D \in \{0,1,2,3\}$ of a single contact force. In the formulas appearing in this specification, $\tau$ is a vector including the force and torque instruction for the whole-body joint, and $\tau$ is a vector including the rotation torques of the n revolute joints. Distinguishing is required, and the two vectors have different meanings.

In some embodiments, the whole-body dynamics equation is obtained by constructing the whole-body dynamics model of the wheel-legged robot based on rigid body dynamics. The whole-body dynamics equation is configured for describing a relationship between a pose of the entire wheel-legged robot and a motion state of each active joint and an external force bearing status.

In some embodiments, the force and torque instruction includes at least one of the following instructions: a force instruction and a torque instruction. In some embodiments, a force and torque instruction for a rotary motor includes a torque instruction, the torque instruction being configured for controlling the rotary motor to rotate according to the torque instruction; and a force and torque instruction for a linear motor includes a force instruction, the force instruction being configured for controlling the linear motor to move linearly. The whole-body dynamics controller controls, according to the force and torque instruction for the whole-body joint, the whole-body joint to move. After determining the force and torque instruction for the whole-body joint, the whole-body dynamics controller transmits the force and torque instruction to a joint motor corresponding to the whole-body joint, and the joint motor corresponding to the whole-body joint moves linearly or rotates according to the received force and torque instruction, so that a pose of the wheel-legged robot is changed, to adjust a balance status of the wheel-legged robot.

In some embodiments, after rotary motors respectively corresponding to n rotary motors receive force and torque instructions, the rotary motors rotate to cause a change in a deflection angle, an angular velocity, or an angular acceleration of at least one wheel-legged robot corresponding to the nth-order inverted pendulum model. For active joints not considered in the $n^{th}$-order inverted pendulum (to be specific, active joints other than the n joints), these active joints start to move after the force and torque instructions are received.

For example, after a linear motor in a leg mechanism receives a force and torque instruction, the linear motor moves to change a length of the leg mechanism and change a height of the wheel-legged robot, so that a position of the center of mass of the wheel-legged robot in the z-axis direction changes. For example, for a rotary motor other than the n rotary motors, the rotary motor rotates according to a received force and torque instruction, to adjust an included angle between two links connected through the rotary motor.

The rotation torques of the n revolute joints and force and torque instructions respectively corresponding to the n revolute joints are different. In a process in which the whole-body dynamics controller determines the force and torque instruction for the whole-body joint, a state parameter value related to an operation space task of the wheel-legged robot is used, and more revolute joints are involved.

Balance control is performed by using the force and torque instruction generated by the whole-body dynamics controller, so that more links (more than n links) can participate in balance control. This enriches poses of the wheel-legged robot during balance adjustment, and combines balance adjustment with an operation space task during movement. Balance adjustment is jointly performed by the robust controller and the whole-body dynamics controller, to provide a new idea of balance control. This facilitates flexible adjustment of a pose of the wheel-legged robot during balance control. In this manner, data from the robust controller is provided for the whole-body dynamics controller, so that an amount of reference information during determining of the force and torque instruction for the whole-body joint is increased. This helps determine an optimal force and torque instruction, and further increases a speed at which the wheel-legged robot restores to a balanced state when the wheel-legged robot completes a movement task, to prevent the wheel-legged robot from falling down during movement.

A method for determining the task acceleration is described below by using several embodiments.

In some embodiments, the observation module calculates the task acceleration of the wheel-legged robot at the second moment based on the rotation torques of the n revolute joints. In some embodiments, a method for converting the rotation torques of the n revolute joints into the task acceleration is designed in the observation module. The process includes the following sub-operations. The following operations are performed by a computer device, for example, the whole-body dynamics controller in the wheel-legged robot.

The observation module determines an angular acceleration at the second moment based on a dynamics equation and the rotation torques of the n revolute joints. The dynamics equation is a dynamics equation obtained based on the $n^{th}$-order inverted pendulum model, and the dynamics equation is related to motion states of n mechanisms and the rotation torques of the n revolute joints.

In some embodiments, after determining the rotation torques of the n revolute joints based on the state parameter value at the first moment, the robust controller of the wheel-legged robot transmits the rotation torques of the n revolute joints to the observation module in the control system. The observation module calculates the angular acceleration of the wheel-legged robot at the second moment based on the foregoing formula 2.

In some embodiments, the angular acceleration at the second moment is an angular acceleration related to the $n^{th}$-order inverted pendulum model. For example, the angular acceleration at the second moment includes angular accelerations of the n links at the second moment and an angular acceleration of the mobile wheel at the second moment.

The whole-body dynamics controller determines an expected incremental position and an expected incremental speed of the center of mass of the wheel-legged robot at the second moment based on the equivalent state parameter value at the first moment and the angular acceleration at the second moment, the expected incremental position being configured for representing a distance between a projection point of the center of mass of the wheel-legged robot on the contact surface and a virtual contact point in a first direction, the expected incremental speed being configured for representing a change speed of the distance in the first direction, and the virtual contact point being a center of all contact points between the wheel-legged robot and the contact surface.

In some embodiments, when at least two mobile wheels in the wheel-legged robot are in contact with the contact surface, the virtual contact point is a center of a connection line between contact points between the at least two mobile wheels and the contact surface. The virtual contact point is located at a center of contact points between two mobile wheels and the contact surface. This helps ensure stability of the center of gravity of the wheel-legged robot.

In some embodiments, the expected incremental position is configured for representing a position of the center of mass of the wheel-legged robot relative to the wheel-legged robot. The expected incremental speed is a first-order derivative of the expected incremental position with respect to time. To be specific, the expected incremental speed is configured for representing a change speed of the position of the center of mass of the wheel-legged robot relative to the wheel-legged robot.

In some embodiments, the expected incremental position and the expected incremental speed are a relative position and a relative speed of the center of mass of the wheel-legged robot in the first direction respectively. The first direction is the heading direction of the wheel-legged robot (to be specific, the x-axis direction in the world coordinate system). If the wheel-legged robot involves movement in a left/right direction (to be specific, the y-axis direction in the world coordinate system), the expected incremental speed is a component of a relative speed of the center of mass of the wheel-legged robot in the first direction.

In some embodiments, after determining the angular acceleration at the second moment, the observation module determines the expected incremental position and the expected incremental speed of the center of mass of the wheel-legged robot at the second moment by using a forward kinematics method based on an acceleration at the second moment, deflection angles of the n links, a rotation angle of the mobile wheel, angular velocities of the n links, and a configuration, a model, and a parameter of the wheel-legged robot. In some embodiments, when state quantities such as the acceleration at the second moment, deflection angles of n mechanisms, the rotation angle of the mobile wheel, and angular velocities of the n mechanisms are known, a position and a speed of an end of the wheel-legged robot are calculated based on forward kinematics, in other words, a pose of the wheel-legged robot at the second moment is determined. A position of the center of mass of the wheel-legged robot in the operation space is calculated based on a position of the wheel-legged robot in the operation space and the pose of the wheel-legged robot, to obtain the expected incremental position and the expected incremental speed.

The whole-body dynamics controller determines the task acceleration of the wheel-legged robot at the second moment based on the expected incremental position and the expected incremental speed. In some embodiments, the observation module determines a reference state variable group of the center of mass of the wheel-legged robot based on the expected incremental position and the expected incremental speed. The observation module determines the task acceleration based on the reference state variable group and an actual state variable group of the center of mass of the wheel-legged robot. The reference state variable group is configured for representing a state variable, inferred based on kinematics, of the center of mass of the wheel-legged robot at the second moment. In some embodiments, the reference state variable group includes the expected incremental position $\Delta x^r$, the expected incremental speed $\Delta \dot{x}^r$, an expected position $x_{com}^r$, and an expected speed $\dot{x}_{com}^r$. The expected position is a position of the center of mass of the wheel-legged robot in the operation space at the second moment, or a position in the joint space at the second moment. The expected speed is a first-order derivative of the expected position with respect to time.

The actual state variable group is configured for representing a state variable, measured by a sensor, of the wheel-legged robot. In some embodiments, the actual state variable group includes an actual incremental position $\Delta x^a$, an actual incremental speed $\Delta \dot{x}^a$, an actual position $x_{com}^a$, and an actual speed $\dot{x}_{com}^a$. The actual position is a position of the center of mass of the wheel-legged robot in the operation space. The actual speed is a first-order derivative of the actual position with respect to time.

In some embodiments, the task acceleration $\ddot{x}_{com}$ of the wheel-legged robot at the second moment is calculated by using the following formula:

$$\ddot{x}_{com} = K(\begin{bmatrix} \Delta x^r \\ \Delta \dot{x}^r \\ x_{com}^r \\ \dot{x}_{com}^r \end{bmatrix} - \begin{bmatrix} \Delta x^a \\ \Delta \dot{x}^a \\ x_{com}^a \\ \dot{x}_{com}^a \end{bmatrix})$$

K represents a state feedback gain matrix. For example, an objective function of an inverted pendulum dynamics equation is constructed by using an LQR, and then a feedback gain matrix of the inverted pendulum dynamics equation is obtained through iteration with an objective to minimize the objective function. The LQR is constructed based on a quadratic programming optimization method, and the essence of the LQR is to find a multi-dimensional vector under a linear constraint condition to minimize (or maximize) a quadratic objective function of the multi-dimensional vector.

In some embodiments, the observation module transmits the calculated task acceleration of the wheel-legged robot to the whole-body dynamics controller. The whole-body dynamics controller generates the force and torque instruction for the whole-body joint of the wheel-legged robot based on the task acceleration. The whole-body dynamics controller transmits the force and torque instruction for the whole-body joint to a joint motor corresponding to each active joint, to control the whole-body joint to move, to adjust a pose of the wheel-legged robot and enable the wheel-legged robot to remain in a balanced state.

In some embodiments, that the observation module generates the force and torque instruction for the whole-body joint of the wheel-legged robot based on the task acceleration includes the following operations: The whole-body dynamics controller determines an expected operation space task of the wheel-legged robot at the second moment, the expected operation space task including a task acceleration corresponding to at least one operation space task. The whole-body dynamics controller performs space conversion on the expected operation space task to obtain an expected joint space task. The whole-body dynamics controller substitutes the expected joint space task into the whole-body dynamics equation of the wheel-legged robot to obtain the force and torque instruction for the whole-body joint.

In some embodiments, the expected operation space task includes the task acceleration at the second moment.

The expected operation space task $\ddot{x}^d_{com}$ may be expressed as follows:

$$\ddot{x}^d_{com} = \begin{bmatrix} \ddot{x}^d_{t,stance} \\ \ddot{x}^d_{t,base} \\ \ddot{x}^d_{t,euler} \\ \ddot{x}^d_{t,swing} \\ \ddot{x}^d_{t,com} \end{bmatrix}$$

$\ddot{x}^d_{t,stance}$ is a first acceleration corresponding to the supporting wheel task. $\ddot{x}^d_{t,base}$ is a second acceleration corresponding to the vertical-direction torso task. $\ddot{x}^d_{t,euler}$ is a third acceleration corresponding to the torso pose task. $\ddot{x}^d_{t,swing}$ Is a fourth acceleration corresponding to the swinging wheel task. $\ddot{x}^d_{t,com}$ is a task acceleration corresponding to the center-of-mass task. In some embodiments, the wheel-legged robot has different operation space tasks at different moments. To be specific, values of some accelerations included in the expected operation space task may be 0.

In some embodiments, a relationship between an operation-space acceleration included in the expected operation space task and a joint-space speed and acceleration in the joint space task is as follows: $\ddot{x} = \dot{J}_t\dot{q} + J_t\ddot{q}$. $J_t$ represents a Jacobian matrix of the operation space task, and $\dot{J}_t$ represents a derivative of the Jacobian matrix of the operation space task. $\begin{bmatrix} \ddot{q} \\ \tau \\ f \end{bmatrix}$ can be calculated based on the whole-body dynamics equation

$$\begin{bmatrix} H & -S^T & -J_C^T \\ J_t & 0_{N_T \times N_J} & 0_{N_T \times N_C} \end{bmatrix} \begin{bmatrix} \ddot{q} \\ \tau \\ f \end{bmatrix} = \begin{bmatrix} -C \\ \ddot{x}_t - \dot{J}_t\dot{q} \end{bmatrix}$$

and the expected joint space task $\dot{J}_t\dot{q} + J_t\ddot{q}$, where $\tau$ represents the force and torque instruction for the whole-body joint.

To improve appropriateness of the force and torque instruction for the whole-body joint, at least one constraint condition is added in a process of solving the whole-body dynamics equation. The constraint condition includes but is not limited to at least one of the following: a physical joint constraint and a friction constraint.

In some embodiments, the physical joint constraint is configured for limiting the force and torque instruction based on characteristics of the joint motor corresponding to the whole-body joint of the wheel-legged robot. The physical joint constraint may be expressed as follows: $\tau_{lb} \leq \tau \leq \tau_{ub}$, where $\tau$ represents a matrix including the force and torque instruction for the whole-body joint, $\tau_{lb}$ represents a matrix including a minimum value of a force and torque instruction corresponding to each active joint, and $\tau_{ub}$ represents a matrix including a maximum value of the force and torque instruction corresponding to each active joint.

In some embodiments, the friction constraint indicates that a contact force $f_i$ at an $i$th contact point needs to satisfy a friction cone constraint. To reduce nonlinearity, a friction cone may be approximated as a friction pyramid, and a friction inequality constraint is expressed as follows:

$$\begin{bmatrix} -\mu_i n_z^T \pm n_x^T \\ -\mu_i n_z^T \pm n_y^T \\ -n_z^T \\ n_z^T \end{bmatrix} f_i \leq \begin{bmatrix} 0 \\ 0 \\ -f_{z,lb} \\ f_{z,ub} \end{bmatrix}$$

$n_x$, $n_y$, and $n_z$ represent unit orthogonal bases along the contact surface in an operation space system. $\mu_i$ represents a friction coefficient. $f_{i,zlb}$ and $f_{i,zub}$ respectively represent a minimum value and a maximum value of non-negative positive pressure perpendicular to the contact surface.

A process of solving the whole-body dynamics equation is described below. In some embodiments, the process may be completed an optimizer: The whole-body dynamics equation is expressed in a form of $AX = B$ for polynomial solving.

$$A = \begin{bmatrix} H & -S^T & -J_C^T \\ J_t & \mathbf{0}_{N_T \times N_J} & \mathbf{0}_{N_T \times N_C} \end{bmatrix}, \ X = \begin{bmatrix} \ddot{q} \\ \tau \\ f \end{bmatrix}, \text{ and } B = \begin{bmatrix} -C \\ \ddot{x}_t - \dot{J}_t \dot{q} \end{bmatrix}.$$

An objective function is constructed by using a quadratic programming optimizer. The objective function may be expressed as follows: $J = \min(AX - B)^T Q(AX - B) + X^T RX,$ where Q and R are weight matrices. A minimum value of the objective function is calculated by using the quadratic programming optimizer to obtain variables in $X = \begin{bmatrix} \ddot{q} \\ \tau \\ f \end{bmatrix}$. In this way, the force

and torque instruction $\tau$ for the whole-body joint is obtained. According to this method, a force and torque instruction corresponding to each joint in the whole body can be independently determined, and in a scenario in which a plurality of real wheels of the wheel-legged robot do not coincide in the first direction, at least one real wheel and at least one real first revolute joint can still be controlled.

A method for determining each expected acceleration in the expected operation space task is described below. A method for determining elements in the expected operation space task is preset. In some embodiments, the expected acceleration is determined based on an actual acceleration and a reference acceleration.

1. A method for determining the first acceleration $\ddot{x}_{t,stance}^d$ corresponding to the supporting wheel task.

Because a supporting wheel rolls on the contact surface without sliding relative to the contact surface, an expected acceleration $\ddot{x}_{t,stance}^d$ of the supporting wheel is constantly equal to 0. The expected acceleration of the supporting wheel may be expressed as follows: $\ddot{x}_{t,stance}^d = \mathbf{0}_{N_C \times 1}$. If the wheel-legged robot operates in a four-wheel mode, there are four supporting wheels, and each supporting wheel has a task in the x direction. Assuming that a supporting wheel does not leave the ground, a height of the supporting wheel in the z-axis direction in the world coordinate system is constant. Therefore, tasks of the four supporting wheels in the z-axis direction are not considered. Assuming that the wheel-legged robot does not perform left/right turning motion and does not perform translational motion along the y-axis direction in the world coordinate system in the four-wheel mode, tasks of the four supporting wheels in the y-axis direction are not considered in this case.

If the wheel-legged robot operates in a two-wheel balanced mode, there are two supporting wheels, and the other two mobile wheels are swinging wheels. Tasks of the supporting wheels are not considered in this case. Tasks related to the two supporting wheels are included in the following descriptions about the "center-of-mass task". In addition, tasks of both swinging wheels include two dimensions: the x-axis direction and the z-axis direction. If left/right turning motion of the wheel-legged robot and translational motion of the wheel-legged robot along the y-axis direction in the two-wheel balanced mode are not considered, tasks of the two swinging wheels in the y direction are not considered in this case.

2. A method for determining the second acceleration $\ddot{x}_{t,base}^d$ corresponding to the vertical-direction torso task.

A camera in the wheel-legged robot obtains position information of a supporting wheel at a plurality of future moments by photographing a height change of the contact surface within a line-of-sight range. An expression formula of the position information at the plurality of future moments is determined by using a programming method such as spline interpolation. A reference position $x_{t,base}^r$, a reference speed $\dot{x}_{t,base}^r$, and a reference acceleration $\ddot{x}_{t,base}^r$ of the torso mechanism in the vertical direction are determined based on the expression formula. An actual position $x_{t,base}^a$ and an actual speed $\dot{x}_{t,base}^a$ of the torso mechanism in the vertical direction are calculated through forward kinematics based on the IMU sensor and a deflection angle (a joint angle) and an angular velocity of a mechanism. A proportional derivative (PD) feedback controller corresponding to the vertical-direction torso task is constructed, and a vertical-direction expected acceleration of the torso, namely, the second acceleration $\ddot{x}_{t,base}^d$, is calculated:

$$\ddot{x}_{t,base}^d = \ddot{x}_{t,base}^r + k_{p,base}\left(x_{t,base}^r - x_{t,base}^a\right) + k_{d,base}\left(\dot{x}_{t,base}^r - \dot{x}_{t,base}^a\right)$$

3. A method for determining the third acceleration $\ddot{x}_{t,euler}^d$ corresponding to the torso pose task.

In some scenarios (for example, stair ascending), the torso mechanism of the wheel-legged robot needs to remain upright as much as possible, and the torso mechanism does not rotate. To be specific, reference trajectories, that is, $x^r_{t,euler}$, $\dot{x}^r_{t,euler}$, and $\ddot{x}^r_{t,euler}$, of a Euler angle including a roll angle, a pitch angle, and a yaw angle of the torso mechanism are all zero. The wheel-legged robot calculates an actual angle $x^a_{t,euler}$ and an actual angular velocity $\dot{x}^a_{t,euler}$ of the Euler angle by using a forward kinematics formula based on a measurement result of the IMU sensor. An expected attitude angular acceleration of the torso, namely, the third acceleration $\ddot{x}^d_{t,euler}$, may be calculated by using a PD feedback controller corresponding to the torso pose task:

$$\ddot{x}^d_{t,euler} = \ddot{x}^r_{t,euler} + k_{p,euler}\left(x^r_{t,euler} - x^a_{t,euler}\right) + k_{d,euler}\left(\dot{x}^r_{t,euler} - \dot{x}^a_{t,euler}\right)$$

4. A method for determining the fourth acceleration $\ddot{x}^d_{t,swing}$ corresponding to the swinging wheel task.

A corresponding fourth acceleration $\ddot{x}^d_{t,swing}$ exists in a two-wheel balance scenario, for example, a scenario in which two swinging wheels need to present a specific pose and specific motion when two wheels runs on the ground in balance, or switching occurs between a supporting wheel leg and a swinging wheel leg when two wheels step forward on the ground, or switching occurs between a supporting wheel leg and a swinging wheel leg when a step is taken during stair ascending/descending.

A reference position $x^r_{t,swing}$, a reference speed $\dot{x}^r_{t,swing}$, and a reference acceleration $\ddot{x}^r_{t,swing}$ of a swinging wheel in the operation space are planned by using a spline interpolation method. An actual position $x^a_{t,swing}$ and an actual speed $\dot{x}^a_{t,swing}$ of the swinging wheel are calculated through forward kinematics based on a measurement result of the IMU sensor and angle and angular velocity information of a joint. An expected acceleration, namely, the third acceleration $\ddot{x}^d_{t,swing}$, of the swinging wheel may be calculated by constructing a PD feedback controller corresponding to the swinging wheel task. The PD feedback controller calculates the third acceleration $\ddot{x}^d_{t,swing}$ by using the following formula:

$$\ddot{x}^d_{t,swing} = \ddot{x}^r_{t,swing} + k_{p,swing}\left(x^r_{t,swing} - x^a_{t,swing}\right) + k_{d,swing}\left(\dot{x}^r_{t,swing} - \dot{x}^a_{t,swing}\right)$$

5. A method for determining the task acceleration $\ddot{x}_{com}$ corresponding to the center-of-mass task.

In some embodiments, a reference position $x^r_{t,com}$ and a reference speed $\dot{x}^r_{t,com}$ of the center of mass along the heading direction are planned by using a heuristic or model-based method. During movement of the wheel-legged robot, the center of mass of the wheel-legged robot not only needs to continuously move along the heading direction, but also needs to be within a range in which the wheel-legged robot remains dynamically balanced. Based on this, a method for determining an expected acceleration (namely, the task acceleration) of the center of mass is designed. It is assumed that a mass of the wheel-legged robot is concentrated at the center of mass of the wheel-legged robot. It is assumed that a center of connection lines between the at least two supporting wheels is a virtual contact point between an inverted pendulum related to the center of mass and the contact surface. The center of mass is connected to the virtual contact point to construct an inverted pendulum model of the center of mass.

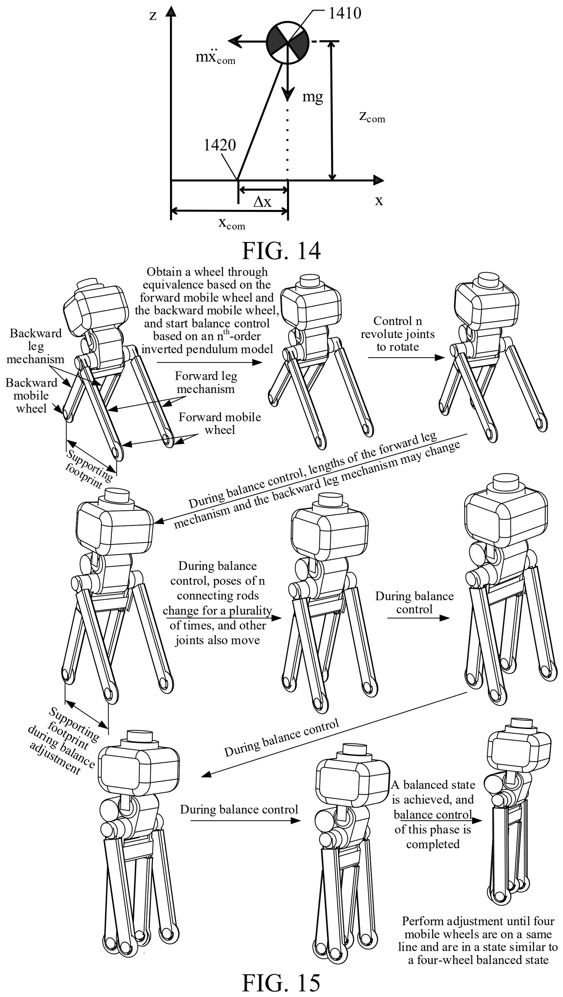

FIG. 14 is a schematic diagram of an inverted pendulum related to a center of mass according to an exemplary embodiment of the present disclosure.

A wheel-legged robot has a center of mass 1410 and a virtual contact point 1420. A dynamics equation related to the center of mass is determined based on an inverted pendulum model related to the center of mass:

$$\frac{d}{dx}\begin{bmatrix} \Delta x \\ \Delta \dot{x} \\ x_{com} \\ \dot{x}_{com} \end{bmatrix} = \begin{bmatrix} 0 & 1 & 0 & 0 \\ 0 & 0 & 0 & 0 \\ 0 & 0 & 0 & 0 \\ g/z_{com} & 0 & 0 & 1 \end{bmatrix}\begin{bmatrix} \Delta x \\ \Delta \dot{x} \\ x_{com} \\ \dot{x}_{com} \end{bmatrix} + \begin{bmatrix} 0 \\ 0 \\ 1 \\ 0 \end{bmatrix}\ddot{x}_{com}$$

A feedback gain matrix K is determined by using an LQR. An input for a state equation may be obtained based on

the LQR: $\ddot{x}_{com} = K(\begin{bmatrix} \Delta x^r \\ \Delta \dot{x}^r \\ x^r_{com} \\ \dot{x}^r_{com} \end{bmatrix} - \begin{bmatrix} \Delta x^a \\ \Delta \dot{x}^a \\ x^a_{com} \\ \dot{x}^a_{com} \end{bmatrix}) \cdot \begin{bmatrix} \Delta x^a \\ \Delta \dot{x}^a \\ x^a_{com} \\ \dot{x}^a_{com} \end{bmatrix}$ represents an actual state variable group, and $\begin{bmatrix} \Delta x^r \\ \Delta \dot{x}^r \\ x^r_{com} \\ \dot{x}^r_{com} \end{bmatrix}$

represents a reference state variable group. For other parameters, refer to the foregoing descriptions. Details are not described herein again.

In some embodiments, the balance control method provided in the present disclosure is continuously performed during movement of the wheel-legged robot. To be specific, the robust controller continuously performs a process of obtaining a state parameter value at a current moment, determining a dynamics model parameter based on the state parameter value at the current moment, establishing a sliding surface, and controlling and determining rotation torques of the n revolute joints based on the dynamics model parameter and the sliding surface.

In some other embodiments, when the IMU sensor detects that deflection angles of some links in the wheel-legged robot change sharply, the robust controller performs the balance control method by starting from operation 1310. For example, at a specific moment, the IMU sensor detects that a change in the deflection angle of the first link is greater than an angle threshold. In this case, the IMU sensor transmits a state parameter detected by the IMU sensor to the robust controller, and the robust controller starts to perform a balance adjustment process. The angle threshold is preset.

In some other embodiments, when the mobile wheel receives no control signal from a controller and the motor encoder detects that the mobile wheel moves, the robust controller starts to perform the balance control method by starting from operation 1310.

In this method, the robust controller discontinuously implements balance control on the wheel-legged robot. This helps reduce energy consumption of the wheel-legged robot and improve a capability of the wheel-legged robot to resist external interference, without significantly affecting balance control effect.

The balance control method is described below by using another example.

During balance control, the following operations are performed: Operation A10: A robust controller obtains an actual state parameter value at a first moment $t_i$.

Operation A20: Obtain an equivalent state parameter value at the first moment based on the actual state parameter value at the first moment. In some embodiments, this operation is implemented by using the following sub-operations: for angular velocities of at least two mobile wheels in the actual state parameter value, superposing the angular velocities of the at least two mobile wheels to obtain an angular velocity of a wheel; determining a geometrical relationship between at least two leg mechanisms based on lengths and deflection angles of the at least two leg mechanisms; determining a deflection angle of a first link and an angular velocity of the first link based on the geometrical relationship, the deflection angles of the at least two leg mechanisms, and angular velocities of the at least two leg mechanisms; using deflection angles of n-1 links in the actual state parameter value as deflection angles of the n-1 links in the equivalent state parameter value; and using angular velocities of the n-1 links in the actual state parameter value as angular velocities of the n-1 links in the equivalent state parameter value.

Operation A30: The robust controller calculates a rotation torque at a second moment based on a dynamics equation and a sliding surface, the rotation torque at the second moment including rotation torques of n revolute joints.

Operation A40: Calculate a force and torque instruction for a whole-body joint based on the rotation torque at the second moment.

In some embodiments, this operation includes the following sub-operations: The robust controller transmits the rotation torques of the n revolute joints to an observation module. The observation module determines a task acceleration based on the rotation torques of the n revolute joints. The observation module transmits the task acceleration to a whole-body dynamics controller. The whole-body dynamics controller determines the force and torque instruction for the whole-body joint based on the task acceleration. The whole-body dynamics controller transmits a corresponding force and torque instruction to each joint motor.

Operation A50: At the second moment, the whole-body dynamics controller separately controls n-1 revolute joints and a first revolute joint according to the force and torque instruction for the whole-body joint.

Operation A60: At the second moment $t_{i+1}$, a wheel-legged robot controls, according to the force and torque instruction, a motor corresponding to the whole-body joint to move, to adjust a pose of the wheel-legged robot.

Operations A10 to A60 are repeatedly performed before the balance control process ends.

The formulas used in this example are the formulas appearing in the foregoing embodiments. For explanations of parameters in the formulas, refer to the foregoing embodiments. Details are not described herein again.

The wheel-legged robot is abstracted into a second-order inverted pendulum model, the rotation torques of the n revolute joints are calculated, and the task acceleration of the wheel-legged robot is determined based on the rotation torques of the n revolute joints, to obtain an input for the whole-body dynamics controller during balance control, so that the whole-body dynamics controller can calculate the force and torque instruction for the whole-body joint, and mechanisms in the wheel-legged robot can participate in the balance control process. This further enriches poses of the wheel-legged robot during balance control, and helps improve robustness of the balance control method.

Some operations in the balance control method are described below by using an example in which n is equal to 2.

A method for determining a dynamics model parameter is first described. When n is equal to 2, after the wheel-legged robot is abstracted into the second-order inverted pendulum model, a dynamics equation used during balance control is derived based on a Euler-Lagrange equation. The dynamics equation is expressed as follows:

$$M(\alpha,\beta)\begin{bmatrix}\ddot{\varphi}\\\ddot{\alpha}\\\ddot{\beta}\end{bmatrix} + C(\alpha,\beta,\dot{\alpha},\dot{\beta}) + G(\alpha,\beta) = \begin{bmatrix}\tau_1\\-\tau_1-\tau_2\\\tau_2\end{bmatrix}$$

In some embodiments, the dynamics model parameter is determined through derivation based on the second-order inverted pendulum model for balance control. The dynamics model parameter includes a ratio parameter matrix and an offset parameter matrix.

During design of the robust controller, partial linearization is performed on the dynamics equation to obtain a formula a:

$$\begin{bmatrix}\ddot{\varphi}\\\ddot{\alpha}\\\ddot{\beta}\end{bmatrix} = -M^{-1}(\alpha,\beta)C(\alpha,\beta,\dot{\alpha},\dot{\beta})-M^{-1}(\alpha,\beta)G(\alpha,\beta)+M^{-1}(\alpha,\beta)\begin{bmatrix}\tau_1\\-\tau_1-\tau_2\\\tau_2\end{bmatrix}$$

$M^{-1}(\alpha,\ \beta)$ is an inverse matrix of an inertia matrix, and $M^{-1}(\alpha,\ \beta) * M(\alpha,\ \beta) = E$ (an identity matrix). For other parameters, refer to the foregoing descriptions.

The formula a is processed to unify a rotation torque $\tau_1$ of the first revolute joint and a rotation torque $\tau_2$ of a second revolute joint in the formula a. The formula a is processed by using a selection matrix to obtain a formula b:

$$\begin{bmatrix}\ddot{\varphi}\\\ddot{\alpha}\\\ddot{\beta}\end{bmatrix} = \begin{bmatrix}f_1(\xi)\\f_2(\xi)\\f_3(\xi)\end{bmatrix} + \begin{bmatrix}g_{11}(\xi) & g_{12}(\xi)\\g_{21}(\xi) & g_{22}(\xi)\\g_{31}(\xi) & g_{32}(\xi)\end{bmatrix}\begin{bmatrix}\tau_1\\\tau_2\end{bmatrix}$$

$$\begin{bmatrix}f_1(\xi)\\f_2(\xi)\\f_3(\xi)\end{bmatrix} = \left[-M^{-1}(\alpha,\beta)C(\alpha,\beta,\dot{\alpha},\dot{\beta})-M^{-1}(\alpha,\beta)G(\alpha,\beta)\right], \text{ and } \begin{bmatrix}f_1(\xi)\\f_2(\xi)\\f_3(\xi)\end{bmatrix}$$

is the offset parameter matrix f[].

$$\begin{bmatrix}g_{11}(\xi) & g_{12}(\xi)\\g_{21}(\xi) & g_{22}(\xi)\\g_{31}(\xi) & g_{32}(\xi)\end{bmatrix} = M^{-1}(\alpha,\beta) * S^T, \text{ and } \begin{bmatrix}g_{11}(\xi) & g_{12}(\xi)\\g_{21}(\xi) & g_{22}(\xi)\\g_{31}(\xi) & g_{32}(\xi)\end{bmatrix}$$

is the ratio parameter matrix g[]. $S^T$ is a transposed matrix of the S matrix, and the $S^T$ matrix is a 3×2 selection matrix. For example, the $S^T$ matrix is specifically $\begin{bmatrix}-1 & 0\\-1 & 0\\0 & 1\end{bmatrix}$.

The formula b may be pre-designed after the wheel-legged robot is abstracted into the second-order inverted pendulum model. During implementation of the balance control method, after obtaining a state parameter value at the first moment, the robust controller substitutes the state parameter value at the first moment into the dynamics equation to determine an inertia matrix, a bias force matrix, and a gravity matrix at the first moment, and determines the dynamics model parameter based on the inertia matrix, the bias force matrix, and the gravity matrix.

The robust controller separately processes a product of the inverse matrix of the inertia matrix and the bias force matrix and a product of the inverse matrix of the inertia matrix and the gravity matrix by using the selection matrix to obtain the offset parameter matrix, the selection matrix being configured for extracting a rotation torque of a first joint and a rotation torque of a second joint from the dynamics equation. The robust controller processes the inverse matrix of the inertia matrix by using the selection matrix to obtain the ratio parameter matrix. For specific content about the process, refer to the following embodiments. Details are not described herein again.

A method for establishing a sliding surface in the second-order inverted pendulum model is described below.

The robust controller establishes a sliding surface based on the equivalent state parameter value at the first moment. A state parameter value of the wheel-legged robot gradually approaches 0 on the sliding surface.

When n is equal to 2, the rotation torque of the first revolute joint and the rotation torque of the second revolute joint need to be determined, and the robust controller needs to establish two sliding surfaces. The two sliding surfaces include: 1. A sliding surface of the first revolute joint: A state parameter value related to the first revolute joint gradually approaches 0 on the sliding surface. 2. A sliding surface of the second revolute joint: A state parameter value related to the second revolute joint gradually approaches 0 on the sliding surface. In some embodiments, a first sliding surface is different from a second sliding surface. A purpose of setting the first sliding surface and the second sliding surface is to calculate the rotation torque of the first revolute joint and the rotation torque of the second revolute joint. The first sliding surface and the second sliding surface jointly participate in a process of calculating the rotation torques of the first revolute joint and the second revolute joint. A definition of the first sliding surface may be not limited to a sliding surface corresponding to the first revolute joint. Similarly, a definition of the second sliding surface is not limited to a sliding surface corresponding to the second revolute joint. The first sliding surface and the second sliding surface are defined according to an actual requirement. This is not limited herein.

It can be learned from the foregoing descriptions of the $n^{th}$-order inverted pendulum model that, to ensure that a determined rotation torque is calculated, at least three state parameters and at least two sliding mode parameters in a state parameter value are needed for establishing a sliding surface. The equivalent state parameter value is expressed as follows: $\xi = [\alpha,\ \beta,\ \dot{\varphi},\ \dot{\alpha},\ \dot{\beta}]^T$. In this case, all of $\alpha$, $\beta$, $\dot{\varphi}$, $\dot{\alpha}$, and $\dot{\beta}$ are state parameters.

The robust controller determines at least four sliding mode parameters. The sliding mode parameters are configured for constraining the rotation torque of the first joint and the rotation torque of the second joint to meet a system stability condition of the wheel-legged robot.

In some embodiments, different sliding surfaces are established by using different state parameters and sliding mode parameters respectively. For example, at least a deflection angle of a leg mechanism, an angular velocity of a mobile wheel, and an angular velocity of the leg mechanism in the equivalent state parameter value are needed for establishing the first sliding surface, and at least a deflection angle of a torso mechanism, an angular velocity of a mobile wheel, and an angular velocity of the torso mechanism in the state parameter value at the first moment are needed for establishing the second sliding surface. In this case, at least two sliding mode parameters included in the first sliding surface are a sliding mode parameter corresponding to the deflection angle of the leg mechanism, and a sliding mode parameter corresponding to the angular velocity of the mobile wheel; and at least two sliding mode parameters included in the second sliding surface are a sliding mode parameter corresponding to the deflection angle of the torso mechanism, and a sliding mode parameter corresponding to the angular velocity of the mobile wheel.

The robust controller establishes the first sliding surface and the second sliding surface based on the equivalent state parameter value at the first moment and the at least four sliding mode parameters. In some embodiments, the robust controller establishes the first sliding surface based on a first sliding mode parameter, a second sliding mode parameter, the deflection angle of the leg mechanism, the angular velocity of the mobile wheel, and the angular velocity of the leg mechanism; and establishes the second sliding surface based on a third sliding mode parameter, a fourth sliding mode parameter, the deflection angle of the torso mechanism, the angular velocity of the torso mechanism, and an angular acceleration of the leg mechanism. For example, the robust controller processes the deflection angle of the leg mechanism by using the first sliding mode parameter to obtain a processing result (equivalent to the foregoing first processing result) for the leg mechanism, and processes the angular velocity of the mobile wheel by using the second sliding mode parameter to obtain a processing result (equivalent to the foregoing second processing result) for the mobile wheel. The robust controller determines the first sliding surface based on the processing result for the leg mechanism, the processing result for the mobile wheel, and the angular velocity of the leg mechanism. In some embodiments, the first sliding surface is directly proportional to the processing result for the leg mechanism, the first sliding surface is directly proportional to the processing result for the mobile wheel, and the first sliding surface is directly proportional to the angular velocity of the leg mechanism. For example, the processing result for the leg mechanism, the processing result for the mobile wheel, and the angular velocity of the leg mechanism are added up to obtain the first sliding surface.

For example, the robust controller processes the deflection angle of the torso mechanism by using the third sliding mode parameter to obtain a processing result (equivalent to the foregoing first processing result) for the torso mechanism, and processes the angular velocity of the mobile wheel by using the fourth sliding mode parameter to obtain a processing result (equivalent to the foregoing second processing result) for the mobile wheel. The robust controller determines the second sliding surface based on the processing result for the torso mechanism, the processing result for the mobile wheel, and the angular velocity of the torso mechanism. In some embodiments, the second sliding surface is directly proportional to the processing result for the torso mechanism, the second sliding surface is directly proportional to the processing result for the mobile wheel, and the second sliding surface is directly proportional to the angular velocity of the torso mechanism. For example, the robust controller adds up the processing result for the torso mechanism, the processing result for the mobile wheel, and the angular velocity of the torso mechanism to obtain the second sliding surface.

In some embodiments, during balance control, the robust controller establishes the first sliding surface $s_1$ and the second sliding surface $s_2$ based on the following two formulas: $s_1 = \lambda_1\xi_1 + \lambda_2\xi_3 + \xi_4$, and $s_2 = \lambda_3\xi_2 + \lambda_4\xi_3 + \xi_5$, where $\lambda_1$ represents the first sliding mode parameter, $\lambda_2$ represents the second sliding mode parameter, $\lambda_3$ represents the third sliding mode parameter, $\lambda_4$ represents the fourth sliding mode parameter, $\xi_1$ represents the 1st element $\alpha$ in the equivalent state parameter value $\xi = [\alpha, \beta, \dot{\varphi}, \dot{\alpha}, \dot{\beta}]^T$, $\xi_2$ represents the 2nd element $\beta$ in the equivalent state parameter value $\xi = [\alpha, \beta, \dot{\varphi}, \dot{\alpha}, \dot{\beta}]^T$, $\xi_3$ represents the 3rd element $\dot{\varphi}$ in the equivalent state parameter value $\xi = [\alpha, \beta, \dot{\varphi}, \dot{\alpha}, \dot{\beta}]^T$, $\xi_4$ represents the 4th element $\dot{\alpha}$ in the equivalent state parameter value $\xi = [\alpha, \beta, \dot{\varphi}, \dot{\alpha}, \dot{\beta}]^T$, and $\xi_5$ represents the 5th element $\dot{\beta}$ in the equivalent state parameter value $\xi = [\alpha, \beta, \dot{\varphi}, \dot{\alpha}, \dot{\beta}]^T$.

In this manner, the first sliding surface and the second sliding surface are established, and a quantity of sliding mode parameters on the first sliding surface and the second sliding surface is controlled, so that the rotation torque of the first joint and the rotation torque of the second joint that meets a system stability principle can be determined with small calculation overheads. This helps increase a speed of determining a rotation torque and implement balance control on the robot.

A method for determining a rotation torque is described below. The robust controller calculates the rotation torque of the first revolute joint and the rotation torque of the second revolute joint based on the sliding surface and the dynamics model parameter. After determining the first sliding surface and the second sliding surface, the robust controller calculates a formula of a first-order derivative of the first sliding surface $s_1$ with respect to time, and a formula of a first-order derivative function of the second sliding surface $s_2$ with respect to time:

$$\dot{s}_1 = \lambda_1\dot{\alpha} + \lambda_2 f_1 + f_2 + (\lambda_2 g_{11} + g_{21})\tau_1 + (\lambda_2 g_{12} + g_{22})\tau_2$$

$$\dot{s}_2 = \lambda_3\dot{\beta} + \lambda_4 f_1 + f_3 + (\lambda_4 g_{11} + g_{31})\tau_1 + (\lambda_4 g_{12} + g_{32})\tau_2$$

$\dot{s}_1$ represents the first-order derivative of the first sliding surface $s_1$ with respect to time. $\dot{s}_2$ represents the first-order derivative of the second sliding surface $s_2$ with respect to time. $f_k$ ($k \in (1, 2, 3)$) is an element in the offset parameter matrix f[] in the foregoing formula 2. $g_{mn}$ ($m \in (1, 2, 3)$, $n \in (1, 2, 3)$) is an element in the ratio parameter matrix g[] in the foregoing formula 2.

The formula of the first-order derivative of the first sliding surface $s_1$ with respect to time and the formula of the first-order derivative of the second sliding surface $s_2$ with respect to time are sort into a matrix form to obtain a formula c:

$$\begin{pmatrix} \dot{s}_1 \\ \dot{s}_2 \end{pmatrix} = \begin{pmatrix} \lambda_1\dot{\alpha} + \lambda_2 f_1 + f_2 \\ \lambda_3\dot{\beta} + \lambda_4 f_1 + f_3 \end{pmatrix} + \begin{pmatrix} (\lambda_2 g_{11} + g_{21}) & (\lambda_2 g_{12} + g_{22}) \\ (\lambda_4 g_{11} + g_{31}) & (\lambda_4 g_{12} + g_{32}) \end{pmatrix} \begin{pmatrix} \tau_1 \\ \tau_2 \end{pmatrix}$$

Transposition is performed on the formula c to obtain a formula d:

$$\begin{pmatrix} \tau_1 \\ \tau_2 \end{pmatrix} = g_s^{-1} \left( -f_s - \eta \begin{pmatrix} sgn(s_1) \\ sgn(s_2) \end{pmatrix} \right)$$

$$f_s = \begin{pmatrix} \lambda_1\dot{\alpha} + \lambda_2 f_1 + f_2 \\ \lambda_3\dot{\beta} + \lambda_4 f_1 + f_3 \end{pmatrix}, \ g_s = \begin{pmatrix} (\lambda_2 g_{11} + g_{21}) & (\lambda_2 g_{12} + g_{22}) \\ (\lambda_4 g_{11} + g_{31}) & (\lambda_4 g_{12} + g_{32}) \end{pmatrix} g_s^{-1}$$

is an inverse matrix of $g_s$, sgn() is a sign function, and $\eta \begin{pmatrix} sgn(s_1) \\ sgn(s_2) \end{pmatrix} = \begin{pmatrix} \dot{s}_1 \\ \dot{s}_2 \end{pmatrix}$.

The formula d may be further expressed as a formula e:

$$\begin{pmatrix} s_1\dot{s}_1 \\ s_2\dot{s}_2 \end{pmatrix} = -\eta \begin{pmatrix} |s_1| \\ |s_2| \end{pmatrix}$$

To be specific, in the case of n=2 in the $n^{th}$-order inverted pendulum model, the foregoing formula 4 is implemented as the formula d, and the formula 5 is implemented as the formula e. In the method for performing balance control based on the second-order inverted pendulum model, the formula d and the formula e need to be used in a process of calculating the rotation torque of the first revolute joint and the rotation torque of the second revolute joint.

In some embodiments, during calculation of a rotation torque, the robust controller needs to consider a system stability condition. For a method for meeting the system stability condition during balance control based on the second-order inverted pendulum model, refer to the following embodiments.

To sum up, the wheel-legged robot is abstracted into the second-order inverted pendulum model, and based on this, during balance control, an included angle between the mobile wheel and the leg mechanism can be adjusted, and an included angle between the torso mechanism and the leg mechanism can be adaptively adjusted. This enriches poses of the robot during balance adjustment, so that a pose of the robot can change more flexibly. This helps quickly adjust the robot to a balanced state, to improve a capability of the robot to restore to the balanced state under the action of different disturbance forces, and improve robustness of a balance control process for the robot.

A method for satisfying a system stability criterion in a process of calculating the rotation torque of the first revolute joint and the rotation torque of the second revolute joint is described below by using an embodiment.

It can be learned from the definition and the property of the sliding surface that, state parameters on the sliding surface satisfy the following formulas:

$$s_1 = \lambda_1 \xi_1 + \lambda_2 \xi_3 + \xi_4 = 0$$

$$s_2 = \lambda_3 \xi_2 + \lambda_4 \xi_3 + \xi_5 = 0$$

$\xi_4$ and $\xi_5$ are inversely expressed by using the foregoing two formulas:

$$\xi_4 = -\lambda_1 \xi_1 - \lambda_2 \xi_3$$

$$\xi_5 = -\lambda_3 \xi_2 - \lambda_4 \xi_3$$

In this case, a first-order derivative $\dot{\xi}_4$ of $\xi_4$ with respect to time and a first-order derivative $\dot{\xi}_5$ of $\xi_5$ with respect to time are expressed as follows:

$$\dot{\xi}_4 = -\lambda_1 \dot{\xi}_1 - \lambda_2 \dot{\xi}_3 = -\lambda_1 \xi_4 - \lambda_2 \dot{\xi}_3$$

$$\dot{\xi}_5 = -\lambda_3 \dot{\xi}_2 - \lambda_4 \dot{\xi}_3 = -\lambda_3 \xi_5 - \lambda_4 \dot{\xi}_3$$

$\xi_4$ represents $\dot{\alpha}$, $\xi_1$ represents $\alpha$, $\xi_5$ represents $\dot{\beta}$, and $\xi_2$ represents $\beta$. Therefore, $\xi_1$ and $\xi_2$ are expressed by the following formulas:

$$\dot{\xi}_1 = \xi_4 = -\lambda_1 \xi_1 - \lambda_2 \xi_3$$

$$\dot{\xi}_2 = \xi_5 = -\lambda_3 \xi_2 - \lambda_4 \xi_3$$

$$\dot{\xi}_2 = \xi_5 = -\lambda_3 \xi_2 - \lambda_4 \xi_3$$

Refer to the foregoing dynamics equation of the second-order inverted pendulum model in the polynomial form:

$$m_{\varphi\varphi} \ddot{\varphi} + m_{\varphi\alpha} \ddot{\alpha} + m_{\varphi\beta} \ddot{\beta} + c_\varphi = \tau_1$$

$$m_{\varphi\alpha} \ddot{\varphi} + m_{\alpha\alpha} \ddot{\alpha} + m_{\alpha\beta} \ddot{\beta} + c_\alpha + g_\alpha = -\tau_1 - \tau_2$$

$$m_{\varphi\beta}\ddot{\varphi} + m_{\alpha\beta}\ddot{\alpha} + m_{\beta\beta}\ddot{\beta} + c_{\beta} + g_{\beta} = \tau_2$$

Three formulas included in the dynamics equation in the polynomial form may be added up to obtain a formula f:

$$(m_{\varphi\varphi} + m_{\varphi\alpha} + m_{\varphi\beta})\dot{\xi}_3 + (m_{\varphi\alpha} + m_{\alpha\alpha} + m_{\alpha\beta})\dot{\xi}_4 + (m_{\varphi\beta} + m_{\alpha\beta} + m_{\beta\beta})\dot{\xi}_5 + c_{\varphi} + c_{\alpha} + c_{\beta} + g_{\alpha} + g_{\beta} = 0$$

$\dot{\xi}_4$ and $\dot{\xi}_5$ in the formula f are replaced to obtain a formula g:

$$\left(m_{\varphi\varphi} + m_{\varphi\alpha} + m_{\varphi\beta}\right)\dot{\xi}_3 - \lambda_1\left(m_{\varphi\alpha} + m_{\alpha\alpha} + m_{\alpha\beta}\right)\xi_4 - \lambda_2\left(m_{\varphi\alpha} + m_{\alpha\alpha} + m_{\alpha\beta}\right)\dot{\xi}_3$$
$$- \lambda_3\left(m_{\varphi\beta} + m_{\alpha\beta} + m_{\beta\beta}\right)\xi_5 - \lambda_4\left(m_{\varphi\beta} + m_{\alpha\beta} + m_{\beta\beta}\right)\dot{\xi}_3 + c_{\varphi} + c_{\alpha} + c_{\beta} + g_{\alpha}$$
$$+ g_{\beta} = 0$$

The formula g is sort to obtain a formula h:

$$\left[\left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right) - \lambda_4\left(m_{\varphi\beta} + m_{\alpha\beta} + m_{\beta\beta}\right)\right]\dot{\xi}_3$$
$$= \lambda_1\left(m_{\varphi\alpha} + m_{\alpha\alpha} + m_{\alpha\beta}\right)\xi_4 + \lambda_3\left(m_{\varphi\beta} + m_{\alpha\beta} + m_{\beta\beta}\right)\xi_5 - c_{\varphi} - c_{\alpha} - c_{\beta} - g_{\alpha}$$
$$- g_{\beta}$$
$$= -\lambda_1{}^2\left(m_{\varphi\alpha} + m_{\alpha\alpha} + m_{\alpha\beta}\right)\xi_1 - \lambda_1\lambda_2\left(m_{\varphi\alpha} + m_{\alpha\alpha} + m_{\alpha\beta}\right)\xi_3$$
$$- \lambda_3{}^2\left(m_{\varphi\beta} + m_{\alpha\beta} + m_{\beta\beta}\right)\xi_2 - \lambda_3\lambda_4\left(m_{\varphi\beta} + m_{\alpha\beta} + m_{\beta\beta}\right)\xi_3 - c_{\varphi} - c_{\alpha} - c_{\beta} - g_{\alpha}$$
$$- g_{\beta}$$

$\dot{\xi}_3$ is inversely expressed by using the formula h to obtain the following formula:

$$\dot{\xi}_3 = \left[\left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right) - \lambda_4\left(m_{\varphi\beta} + m_{\alpha\beta} + \right.\right.$$
$$\left.m_{\beta\beta}\right)\big]^{-1}\left[-\lambda_1{}^2\left(m_{\varphi\alpha} + m_{\alpha\alpha} + m_{\alpha\beta}\right)\xi_1 - \lambda_1\lambda_2\left(m_{\varphi\alpha} + m_{\alpha\alpha} + m_{\alpha\beta}\right)\xi_3 - \lambda_3{}^2\left(m_{\varphi\beta} + m_{\alpha\beta} + \right.\right.$$
$$\left.m_{\beta\beta}\right)\xi_2 - \lambda_3\lambda_4\left(m_{\varphi\beta} + m_{\alpha\beta} + m_{\beta\beta}\right)\xi_3 - c_{\varphi} - c_{\alpha} - c_{\beta} - g_{\alpha} - g_{\beta}\big].$$

Three formulas respectively including $\dot{\xi}_1$, $\dot{\xi}_2$, and $\dot{\xi}_3$ are combined to obtain an equation set 1:

$$\begin{cases} \dot{\xi}_1 = -\lambda_1\xi_1 - \lambda_2\xi_3 \\ \dot{\xi}_2 = -\lambda_3\xi_2 - \lambda_4\xi_3 \\ \dot{\xi}_3 = \begin{bmatrix} \left(m_{\varphi\varphi} + m_{\varphi\alpha} + m_{\varphi\beta}\right) - \lambda_2\left(m_{\varphi\alpha} + m_{\alpha\alpha} + m_{\alpha\beta}\right) \\ -\lambda_4\left(m_{\varphi\beta} + m_{\alpha\beta} + m_{\beta\beta}\right) \end{bmatrix}^{-1} * \\ \begin{bmatrix} -\lambda_1{}^2\left(m_{\varphi\alpha} + m_{\alpha\alpha} + m_{\alpha\beta}\right)\xi_1 - \lambda_1\lambda_2\left(m_{\varphi\alpha} + m_{\alpha\alpha} + m_{\alpha\beta}\right)\xi_3 \\ -\lambda_3{}^2\left(m_{\varphi\beta} + m_{\alpha\beta} + m_{\beta\beta}\right)\xi_2 - \lambda_3\lambda_4\left(m_{\varphi\beta} + m_{\alpha\beta} + m_{\beta\beta}\right)\xi_3 \\ -c_{\varphi} - c_{\alpha} - c_{\beta} - g_{\alpha} - g_{\beta} \end{bmatrix} \end{cases}$$

Due to limited space, in the equation set 1, a representation form on the right of an equation of $\dot{\xi}_3$ is distorted. "[]" represents an algebraic formula, and does not represent a matrix or another meaning. To understand an expression of $\dot{\xi}_3$ in the equation set 1, refer to an expression of $\dot{\xi}_3$ in an upper part of the equation set 1.

In some embodiments, the equation set 1 is expressed as a state equation with respect to state variables of ($\dot{\xi}_1$, $\dot{\xi}_2$, $\dot{\xi}_3$). In some embodiments, the state equation is an equation related to a state parameter value. If $a_1$ represents $[(m_{\varphi\varphi} + m_{\varphi\alpha}$

$+ m_{\varphi\beta}) - \lambda_2 (m_{\varphi\alpha} + m_{\alpha\alpha} + m_{\alpha\beta}) - \lambda_4 (m_{\varphi\beta} + M_{\alpha\beta} + m_{\beta\beta})]^{-1}$, $m_1$ represents $-\lambda_1^2(m_{\varphi\alpha} + m_{\alpha\alpha} + m_{\alpha\beta})$, $m_2$ represents $-\lambda_3^2(m_{\varphi\beta} + m_{\alpha\beta} + m_{\beta\beta})$, and $m_3$ represents $-\lambda_1\lambda_2 (m_{\varphi\alpha} + m_{\alpha\alpha} + m_{\alpha\beta}) - \lambda_3\lambda_4(m_{\varphi\beta} + m_{\alpha\beta} + m_{\beta\beta})$, the state equation may be expressed as follows:

$$
\begin{bmatrix} \dot{\xi}_1 \\ \dot{\xi}_2 \\ \dot{\xi}_3 \end{bmatrix} = \begin{bmatrix} -\lambda_1 & 0 & -\lambda_2 \\ 0 & -\lambda_3 & -\lambda_4 \\ a_1 m_1 & a_2 m_2 & a_3 m_3 \end{bmatrix} \begin{bmatrix} \xi_1 \\ \xi_2 \\ \xi_3 \end{bmatrix} + \begin{bmatrix} 0 \\ 0 \\ (-c_\varphi - c_\alpha - c_\beta - g_\alpha - g_\beta)a_1 \end{bmatrix} u
$$

In some embodiments, the system stability criterion is that a characteristic root of a coefficient matrix in the state equation determined based on the sliding surface and the dynamics equation is negative, to be specific, the characteristic root is distributed on a left half plane of a phase plane.

To ensure that the system satisfies the stability criterion, all characteristic roots of the coefficient matrix

$$
\begin{bmatrix} -\lambda_1 & 0 & -\lambda_2 \\ 0 & -\lambda_3 & -\lambda_4 \\ a_1 m_1 & a_2 m_2 & a_3 m_3 \end{bmatrix}
$$
need to be distributed on a left half plane of a complex plane. The state equation may be used as a matrix inequality constraint. To be specific, a value of the sliding mode parameter needs to make the characteristic root of the coefficient matrix be negative.

In some embodiments, during balance control in the present disclosure, the robust controller determines the rotation torque of the first joint and the rotation torque of the second joint based on the formula d and the equation set 1. During balance control, the robust controller calculates the rotation torque $\tau_1$ of the first joint and the rotation torque $\tau_2$ of the second joint based on the formula d, the formula d relating to the sliding surface $s_1$ and the second sliding surface $s_2$, and the formula 2 relating to the dynamics model parameter and the sliding mode parameter; obtains the state parameter value at the first moment from a sensor, substitutes the state parameter value at the first moment into a corresponding formula to determine the sliding surface $s_1$, the second sliding surface $s_2$, and the dynamics model parameter, and finds a sliding mode parameter meeting the system stability condition; and calculates the rotation torque $\tau_1$ of the first joint and the rotation torque $\tau_2$ of the second joint by using the formula d, and ensures that the sliding mode parameter satisfies the matrix inequality constraint formed by the state equation.

For example, the robust controller first determines four sliding mode parameters satisfying the matrix inequality constraint, and then constructs the first sliding surface and the second sliding surface by using the sliding mode parameters. Alternatively, the robust controller first selects four sliding mode parameters within a value range, constructs the first sliding surface and the second sliding surface by using the four sliding mode parameters, calculates the rotation torque $\tau_1$ of the first joint and the rotation torque $\tau_2$ of the second joint by using the formula d, and then verifies whether the four sliding mode parameters satisfy the matrix inequality constraint.

In some embodiments, when the four sliding mode parameters satisfy the matrix inequality constraint, the rotation torque $\tau_1$ of the first joint and the rotation torque $\tau_2$ of the second joint that are determined are available torques, to be specific, are effective for a balance control process; or when the four sliding mode parameters do not satisfy the matrix inequality constraint, the rotation torque $\tau_1$ of the first joint and the rotation torque $\tau_2$ of the second joint that are determined cannot be used.

A method for determining a sliding mode parameter is described below by using several embodiments.

In some embodiments, the determining at least four sliding mode parameters includes: The computer device determines a first sliding mode parameter from a first predicted parameter set, determines a second sliding mode parameter from a second predicted parameter set, determines a third sliding mode parameter from a third predicted parameter set, and determines a fourth sliding mode parameter from a fourth predicted parameter set. Sliding mode parameters respectively included in the first predicted parameter set, the second predicted parameter set, the third predicted parameter set, and the fourth predicted parameter set meet a constraint condition of the stability criterion.

In this embodiment, after determining a state at the first moment, the robust controller first uses the state equation as a matrix inequality constraint to determine solution sets respectively corresponding to $\lambda_1$, $\lambda_2$, $\lambda_3$, and $\lambda_4$, that is, the first predicted parameter set, the second predicted parameter set, the third predicted parameter set, and the fourth predicted parameter set; respectively selects the first sliding mode parameter, the second sliding mode parameter, the third sliding mode parameter, and the fourth sliding mode parameter from the parameter sets; establishes the first sliding surface and the second sliding surface by using the sliding mode parameter, the second sliding mode parameter, the third sliding mode parameter, the fourth sliding mode parameter, and the state parameter value at the first moment; and then calculates the rotation torque of the first joint and the rotation torque of the second joint based on the foregoing formula d. In some embodiments, a process of determining any predicted parameter set in the foregoing four predicted solution sets is as follows: Characteristic roots of the coefficient matrix are calculated, and all characteristic roots corresponding to the coefficient matrix are used as a predicted parameter set.

This method can avoid a case in which sliding mode parameters that do not satisfy system stability are selected and consequently, the rotation torque corresponding to the first joint and the rotation torque corresponding to the second joint that are calculated by using the sliding mode parameters cannot control balance of the wheel-legged robot This prevents the computer device from performing ineffective calculation, and helps shorten time needed for determining the rotation torque corresponding to the first joint and the rotation torque corresponding to the second joint.

Robustness control effect of balance control on the wheel-legged robot under the action of the balance control method provided in the embodiments is verified below. As shown in FIG. 15, a wheel-legged robot in FIG. 15 has four mobile wheels and four leg mechanisms. When the wheel-legged robot is in a four-wheel motion state, the four mobile wheels are classified into two forward mobile wheels and two backward mobile wheels, and the four leg mechanisms are classified into two forward leg mechanisms and two backward leg mechanisms. Balance control on a four-wheel traveling process is as follows: During specific adjustment of a pose of the wheel-legged robot, after determining rotation torques of n revolute joints, a robust controller calculates a task acceleration based on the rotation torques of the n revolute joints; inputs the task acceleration to a whole-body dynamics controller, and obtains a force and torque instruction outputted by the whole-body dynamics controller for a whole-body joint; and drives the whole-body joint of the wheel-legged robot by using the force and torque instruction for the whole-body joint. In some embodiments, a joint angle between n mechanisms changes, lengths of the forward leg mechanism and the backward leg mechanism may change, and speeds of the forward mobile wheel and the backward mobile wheel may be different. During balance control, a spacing between the forward mobile wheel and the backward mobile wheel, that is, a size of a supporting footprint, is changed until the forward and backward mobile wheels, that is, a total of four wheels, move to positions on a same line and the wheel-legged robot changes to a state close to a two-wheel balanced state.

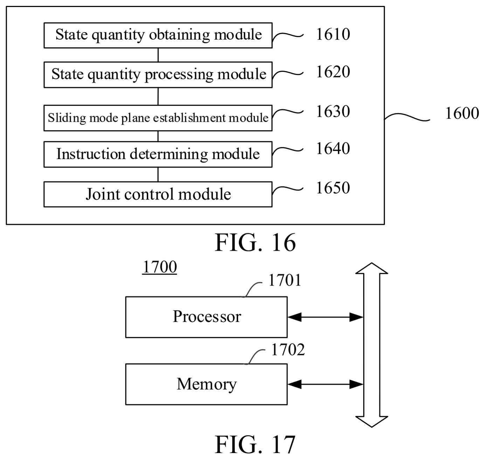

The following describes apparatus embodiments of the present disclosure, which are configured for performing the method embodiments of the present disclosure. FIG. 16 is a block diagram of a balance control apparatus for a wheel-legged robot according to an embodiment of the present disclosure. The apparatus has a function of implementing the foregoing balance control method for a wheel-legged robot. The function may be implemented by hardware, or may be implemented by hardware executing corresponding software. The apparatus may be the computer device described above, or may be disposed in the computer device. The wheel-legged robot is simplified into an $n^{th}$-order inverted pendulum model. The $n^{th}$-order inverted pendulum model includes a wheel, n links, and n revolute joints. The wheel and a first link of the n links are connected through a first revolute joint of the n revolute joints. The n links are connected in series through n-1 revolute joints other than the first revolute joint. The first link is an equivalent link corresponding to at least two leg mechanisms of the wheel-legged robot. The wheel is an equivalent mobile wheel corresponding to mobile wheels to which the at least two leg mechanisms are respectively connected. n is a positive integer greater than or equal to 2. The wheel-legged robot includes a mobile wheel, n links, and n revolute joints. The mobile wheel and a first link of the n links are connected through a first revolute joint of the n revolute joints. The n links are connected in series through n-1 revolute joints other than the first revolute joint. n is a positive integer greater than or equal to 3.

As shown in FIG. 16, the apparatus 1600 includes at least a state parameter value obtaining module 1610, a state parameter value processing module 1620, a sliding surface establishment module 1630, an instruction determining module 1640, and a joint control module 1650.

The state parameter value obtaining module 1610 is configured to obtain an actual state parameter value of the wheel-legged robot at a first moment, the actual state parameter value being configured for representing motion states of n-1 links, the at least two leg mechanisms, and at least two mobile wheels, and the n-1 links being links among the n links other than the first link.

The state parameter value processing module 1620 is configured to calculate an equivalent state parameter value at the first moment based on the actual state parameter value at the first moment, the equivalent state parameter value being configured for representing motion states of the n links and the wheel.

The sliding surface establishment module 1630 is configured to establish a sliding surface based on the equivalent state parameter value at the first moment, the equivalent state parameter value gradually approaching 0 on the sliding surface.

The instruction determining module 1640 is configured to determine a force and torque instruction with respect to a whole-body joint of the wheel-legged robot based on the sliding surface, the equivalent state parameter value at the first moment, and a dynamics equation of the wheel-legged robot, the whole-body joint including the n revolute joints, and the dynamics equation being established based on the $n^{th}$-order inverted pendulum model.

The joint control module 1650 is configured to separately control the n revolute joints at a second moment according to the force and torque instruction for the whole-body joint, to adjust a balance status of the wheel-legged robot, the second moment being later than the first moment.

In some embodiments, the equivalent state parameter value includes deflection angles of the n links, angular velocities of the n links, and an angular velocity of the wheel; and the state parameter value processing module 1620 is configured to: for angular velocities of the at least two mobile wheels in the actual state parameter value, superpose the angular velocities of the at least two mobile wheels to obtain the angular velocity of the wheel; determine a geometrical relationship between the at least two leg mechanisms based on lengths and deflection angles of the at least two leg mechanisms; determine a deflection angle of the first link and an angular velocity of the first link based on the geometrical relationship, the deflection angles of the at least two leg mechanisms, and angular velocities of the at least two leg mechanisms; use deflection angles of the n-1 links in the actual state parameter value as deflection angles of the n-1 links in the equivalent state parameter value; and use angular velocities of the n-1 links in the actual state parameter value as angular velocities of the n-1 links in the equivalent state parameter value.

In some embodiments, the instruction determining module 1640 includes: a torque determining unit, configured to calculate a rotation torque at the second moment based on the dynamics equation, the equivalent state parameter value at the first moment, and the sliding surface, the rotation torque at the second moment including rotation torques of the n revolute joints, and for each of the n revolute joints, a rotation torque of the revolute joint being configured for adjusting an included angle between two links connected to the revolute joint; and an instruction calculation unit, configured to calculate the force and torque instruction for the whole-body joint based on the rotation torque at the second moment.

In some embodiments, the torque determining unit includes: a first speed subunit, configured to determine an angular acceleration of the wheel-legged robot at the second moment based on the dynamics equation and the rotation torque at the second moment, the angular acceleration at the second moment including angular accelerations of the n links at the second moment; a second speed subunit, configured to determine a task acceleration of the wheel-legged robot at the second moment based on the angular acceleration at the second moment, the task acceleration being related to an acceleration of a center of mass of the wheel-legged robot; and an instruction calculation subunit, configured to calculate the force and torque instruction for the whole-body joint based on the task acceleration.

In some embodiments, the second speed subunit is configured to: determine an expected incremental position and an expected incremental speed of the center of mass of the wheel-legged robot at the second moment based on the equivalent state parameter value at the first moment and the angular acceleration at the second moment, the expected incremental position being configured for representing a distance between a projection point of the center of mass of the wheel-legged robot on a contact surface and a virtual contact point in a first direction, the expected incremental speed being configured for representing a change speed of the distance in the first direction, the virtual contact point being a center of all contact points between the wheel-legged robot and the contact surface, and the first direction being configured for representing a heading direction of the wheel-legged robot during movement; and determine the task acceleration of the wheel-legged robot at the second moment based on the expected incremental position and the expected incremental speed.

In some embodiments, the torque determining unit includes: a parameter determining subunit, configured to determine a dynamics model parameter based on the dynamics equation and the equivalent state parameter value at the first moment, the dynamics model parameter being configured for defining a mapping relationship between an angular acceleration at the first moment and the rotation torque at the second moment, and the angular acceleration at the first moment including angular accelerations of the n links; and a torque determining subunit, configured to calculate the rotation torque at the second moment based on the dynamics model parameter and the sliding surface.

In some embodiments, the parameter determining subunit is configured to: substitute the equivalent state parameter value at the first moment into the dynamics equation to determine an inertia matrix, a bias force matrix, and a gravity matrix at the first moment, the inertia matrix being configured for representing mass and rotational inertia of the n revolute joints at the first moment, the bias force matrix being configured for representing a bias force of the wheel-legged robot at the first moment, and the gravity matrix being configured for representing gravity of the wheel-legged robot at the first moment; and determine the dynamics model parameter based on the inertia matrix, the bias force matrix, and the gravity matrix.

In some embodiments, the dynamics model parameter includes a ratio parameter matrix and an offset parameter matrix, the ratio parameter matrix is configured for representing a ratio relationship between the angular acceleration at the first moment and the rotation torque at the second moment, the offset parameter matrix is configured for representing an offset relationship between the angular acceleration at the first moment and the rotation torque at the second moment, and the parameter determining subunit is configured to: separately process a product of an inverse matrix of the inertia matrix and the bias force matrix and a product of the inverse matrix of the inertia matrix and the gravity matrix by using a selection matrix to obtain the offset parameter matrix, the selection matrix being configured for extracting the rotation torques of the n revolute joints from the dynamics equation; and process the inverse matrix of the inertia matrix by using the selection matrix to obtain the ratio parameter matrix.

In some embodiments, a quantity of sliding surfaces is n, the n sliding surfaces are configured for constraining the rotation torques of the n revolute joints, n is a positive integer, and the sliding surface establishment module 1630 includes: a sliding mode determining unit, configured to determine at least two sliding mode parameters for an $i^{th}$ sliding surface of the n sliding surfaces, i being a positive integer less than or equal to n; and a sliding mode establishment unit, configured to establish the $i^{th}$ sliding surface based on the at least two sliding mode parameters and the equivalent state parameter value at the first moment.

In some embodiments, the sliding mode determining unit is configured to determine a first sliding mode parameter of the at least two sliding mode parameters from a $(2i-1)^{th}$ predicted parameter set, and determine a second sliding mode parameter of the at least two sliding mode parameters from a $(2i)^{th}$ predicted parameter set, sliding mode parameters respectively included in the $(2i-1)^{th}$ predicted parameter set and the $(2i)^{th}$ predicted parameter set meeting a constraint condition of a stability criterion.

In some embodiments, the equivalent state parameter value includes deflection angles of the n links, angular velocities of the n links, and an angular velocity of the wheel; and the sliding mode establishment unit is configured to: determine, based on the first sliding mode parameter of the at least two sliding mode parameters, a first processing result related to a deflection angle of an $i^{th}$ link; determine, based on the second sliding mode parameter of the at least two sliding mode parameters, a second processing result related to the angular velocity of the wheel; and establish the $i^{th}$ sliding surface based on the first processing result, the second processing result, and an angular velocity of the $i^{th}$ link.

In some embodiments, the force and torque instruction for the whole-body joint is further configured for changing effective lengths of the at least two leg mechanisms, and the apparatus 1600 further includes: a motor control unit, configured to: for a linear motor in the at least two leg mechanisms, control, according to the force and torque instruction for the whole-body joint, the linear motor to extend or retract, the linear motor in the leg mechanism controlling a length of the leg mechanism. In some embodiments, the virtual contact point of the wheel on the contact surface is located between contact points of the at least two mobile wheels on the contact surface.

When the apparatus provided in the foregoing embodiment implements the functions of the apparatus, the division of the foregoing functional modules is merely used an example for description. In practical application, the functions may be allocated to and completed by different functional modules as needed. To be specific, an internal structure of a device is divided into different functional modules to complete all or some of the functions described above. In addition, the apparatus provided in the foregoing embodiment and the method embodiments belong to a same concept. For details about a specific implementation process of the apparatus, refer to the method embodiments. Details are not described herein again.

FIG. 17 is a block diagram of a structure of a computer device 1700 according to an embodiment of the present disclosure. The computer device 1700 may be any electronic device with data computing, processing, and storage functions. The computer device 1700 may be configured to implement the balance control method for a wheel-legged robot in the foregoing embodiments. Usually, the computer device 1700 includes a processor 1701 and a memory 1702. The processor 1701 may include one or more processing cores, for example, a 4-core processor or an 8-core processor. The processor 1701 may be implemented in at least one hardware form of a digital signal processor (DSP), a field-programmable gate array (FPGA), and a programmable logic array (PLA). The processor 1701 may alternatively include a main processor and a coprocessor. The main processor is a processor configured to process data in an awake state, and is also referred to as a central processing unit (CPU). The coprocessor is a low-power processor configured to process data in a standby state. In some embodiments, the processor 1701 may be integrated with a graphics processing unit (GPU). The GPU is configured to render and draw content that needs to be displayed on a display. In some embodiments, the processor 1701 may further include an AI processor. The AI processor is configured to process computing operations related to machine learning. The memory 1702 may include one or more computer-readable storage media. The computer-readable storage medium may be non-transient. The memory 1702 may further include a high-speed random access memory, a non-volatile memory, or the like, for example, a limited quantity of disk storage devices or flash storage devices. In some embodiments, the non-transient computer-readable storage medium in the memory 1702 is configured to store a computer program. The computer program is configured to be executed by one or more processors to implement the foregoing balance control method for a wheel-legged robot.

A person skilled in the art may understand that the structure shown in FIG. 17 does not constitute any limitation on the computer device 1700, and the computer device may include more or fewer components than those shown in the figure, or some components may be combined, or different component arrangements may be used.

In an exemplary embodiment, a computer-readable storage medium is further provided. The computer-readable storage medium has a computer program stored therein. The computer program implements, when executed by a processor of a computer device, the foregoing balance control method for a wheel-legged robot. In some embodiments, the computer-readable storage medium may be a read-only memory (ROM), a RAM, a compact disc read-only memory (CD-ROM), a magnetic tape, a floppy disk, an optical data storage device, or the like.

In an exemplary embodiment, a computer program product is further provided. The computer program product includes a computer program. The computer program is stored in a computer-readable storage medium. A processor of a computer device reads the computer program from the computer-readable storage medium, and the processor executes the computer program to enable the computer device to perform the foregoing balance control method for a wheel-legged robot.

"A plurality of" mentioned in this specification means two or more. "And/or" describes an association relationship between associated objects and indicates that three relationships may exist. For example, A and/or B may indicate the following three cases: Only A exists, both A and B exist, and only B exists. The character "/" in this specification generally indicates an "or" relationship between the associated objects. In addition, the operation numbers described in this specification merely exemplarily show a possible execution sequence of the operations. In some other embodiments, the operations may alternatively not be performed according to the number sequence. For example, two operations with different numbers may be performed simultaneously, or two operations with different numbers may be performed according to a sequence opposite to the sequence shown in the figure. This is not limited in the embodiments of the present disclosure.

The foregoing descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

**Claims**

1.  A balance control method for a wheel-legged robot, the method being performed by a computer device, the method comprising using an $n^{th}$-order inverted pendulum model to represent the wheel-legged robot, and the $n^{th}$-order inverted pendulum model comprising a moving wheel, n links, and n revolute joints, the wheel and a first link of the n links being connected through a first revolute joint of the n revolute joints, the n links being connected in series through n-1 revolute joints other than the first revolute joint, the first link being an equivalent link corresponding to at least two leg mechanisms of the wheel-legged robot, n being a positive integer greater than or equal to 2, and the method comprising:

    obtaining an actual state parameter value of the wheel-legged robot, the actual state parameter value representing motion states of n-1 links, the at least two leg mechanisms, and at least two mobile wheels at a first moment, and the n-1 links being links among the n links other than the first link;
    calculating an equivalent state parameter value at the first moment based on the actual state parameter value, the equivalent state parameter value representing motion states of the n links and the wheel;
    establishing a sliding surface based on the equivalent state parameter value at the first moment, the equivalent state parameter value approaching 0 on the sliding surface;
    determining a force and torque instruction for a whole-body joint of the wheel-legged robot based on the sliding surface, the equivalent state parameter value at the first moment, and a dynamics equation of the wheel-legged robot, the whole-body joint comprising the n revolute joints, and the dynamics equation being established based on the $n^{th}$-order inverted pendulum model; and
    separately controlling, at a second moment according to the force and torque instruction for the whole-body joint, real revolute joints corresponding to the n-1 revolute joints and the first revolute joint, to adjust a balance status of the wheel-legged robot, the second moment being later than the first moment.

2.  The method according to claim 1, wherein the equivalent state parameter value comprises deflection angles of the n links, angular velocities of the n links, and an angular velocity of the wheel; and
    the calculating an equivalent state parameter value at the first moment based on the actual state parameter value comprises:

    for angular velocities of the at least two mobile wheels that are comprised in the actual state parameter value, superposing the angular velocities of the at least two mobile wheels to obtain the angular velocity of the wheel;
    determining a geometrical relationship between the at least two leg mechanisms based on lengths and deflection angles of the at least two leg mechanisms;
    determining a deflection angle of the first link and an angular velocity of the first link based on the geometrical relationship, the deflection angles of the at least two leg mechanisms, and angular velocities of the at least two leg mechanisms;
    using deflection angles of the n-1 links in the actual state parameter value as deflection angles of the n-1 links in the equivalent state parameter value; and
    using angular velocities of the n-1 links in the actual state parameter value as angular velocities of the n-1 links in the equivalent state parameter value.

3.  The method according to claim 1 or 2, wherein the determining a force and torque instruction for a whole-body joint of the wheel-legged robot based on the sliding surface, the equivalent state parameter value at the first moment, and a dynamics equation of the wheel-legged robot comprises:

    calculating a rotation torque at the second moment based on the dynamics equation, the equivalent state parameter value at the first moment, and the sliding surface, the rotation torque at the second moment comprising rotation torques of the n revolute joints, and for each of the n revolute joints, a rotation torque of the revolute joint being configured for adjusting an included angle between two links connected to the revolute joint; and calculating the force and torque instruction for the whole-body joint based on the rotation torque at the second moment.

4. The method according to claim 3, wherein the calculating the force and torque instruction for the whole-body joint based on the rotation torque at the second moment comprises:

determining an angular acceleration of the wheel-legged robot at the second moment based on the dynamics equation and the rotation torque at the second moment, the angular acceleration at the second moment comprising angular accelerations of the n links at the second moment; determining a task acceleration of the wheel-legged robot at the second moment based on the angular acceleration at the second moment, the task acceleration being related to an acceleration of a center of mass of the wheel-legged robot; and calculating the force and torque instruction for the whole-body joint based on the task acceleration.

5. The method according to claim 4, wherein the determining a task acceleration of the wheel-legged robot at the second moment based on the angular acceleration at the second moment comprises:

determining an expected incremental position and an expected incremental speed of the center of mass of the wheel-legged robot at the second moment based on the equivalent state parameter value at the first moment and the angular acceleration at the second moment, the expected incremental position representing a distance between a projection point of the center of mass of the wheel-legged robot on a contact surface and a virtual contact point in a first direction, the expected incremental speed representing a change speed of the distance in the first direction, the virtual contact point being a center of all contact points between the wheel-legged robot and the contact surface, and the first direction representing a heading direction of the wheel-legged robot during movement; and determining the task acceleration of the wheel-legged robot at the second moment based on the expected incremental position and the expected incremental speed.

6. The method according to any one of claims 3 to 5, wherein the calculating a rotation torque at the second moment based on the dynamics equation, the equivalent state parameter value at the first moment, and the sliding surface comprises:

determining a dynamics model parameter based on the dynamics equation and the equivalent state parameter value at the first moment, the dynamics model parameter being configured for defining a mapping relationship between an angular acceleration at the first moment and the rotation torque at the second moment, and the angular acceleration at the first moment comprising angular accelerations of the n links; and calculating the rotation torque at the second moment based on the dynamics model parameter and the sliding surface.

7. The method according to claim 6, wherein the determining a dynamics model parameter based on the dynamics equation of the wheel-legged robot and the equivalent state parameter value at the first moment comprises:

substituting the equivalent state parameter value at the first moment into the dynamics equation to determine an inertia matrix, a bias force matrix, and a gravity matrix at the first moment, the inertia matrix representing mass and rotational inertia of the n revolute joints at the first moment, the bias force matrix representing a bias force of the wheel-legged robot at the first moment, and the gravity matrix representing gravity of the wheel-legged robot at the first moment; and determining the dynamics model parameter based on the inertia matrix, the bias force matrix, and the gravity matrix.

8. The method according to claim 7, wherein the dynamics model parameter comprises a ratio parameter matrix and an offset parameter matrix, the ratio parameter matrix represents a ratio relationship between the angular acceleration at the first moment and the rotation torque at the second moment, the offset parameter matrix represents an offset relationship between the angular acceleration at the first moment and the rotation torque at the second moment, and the determining the dynamics model parameter based on the inertia matrix, the bias force matrix, and the gravity matrix comprises:

separately processing a product of an inverse matrix of the inertia matrix and the bias force matrix and a product of the inverse matrix of the inertia matrix and the gravity matrix by using a selection matrix to obtain the offset parameter matrix, the selection matrix being configured for extracting the rotation torques of the n revolute joints from the dynamics equation; and
processing the inverse matrix of the inertia matrix by using the selection matrix to obtain the ratio parameter matrix.

9. The method according to any one of claims 1 to 8, wherein a quantity of sliding surfaces is n, the n sliding surfaces are configured for constraining the rotation torques of the n revolute joints, n is a positive integer, and the establishing a sliding surface based on the equivalent state parameter value at the first moment comprises:

determining at least two sliding mode parameters for an $i^{th}$ sliding surface of the n sliding surfaces, i being a positive integer less than or equal to n; and
establishing the $i^{th}$ sliding surface based on the at least two sliding mode parameters and the equivalent state parameter value at the first moment.

10. The method according to claim 9, wherein the determining at least two sliding mode parameters for an $i^{th}$ sliding surface of the n sliding surfaces comprises:

determining a first sliding mode parameter of the at least two sliding mode parameters from a $(2i-1)^{th}$ predicted parameter set, and determining a second sliding mode parameter of the at least two sliding mode parameters from a $(2i)^{th}$ predicted parameter set,
sliding mode parameters respectively comprised in the $(2i-1)^{th}$ predicted parameter set and the $(2i)^{th}$ predicted parameter set meeting a constraint condition of a stability criterion.

11. The method according to claim 9 or 10, wherein the equivalent state parameter value comprises deflection angles of the n links, angular velocities of the n links, and an angular velocity of the wheel; and the establishing the $i^{th}$ sliding surface based on the at least two sliding mode parameters and the equivalent state parameter value at the first moment comprises:

determining, based on the first sliding mode parameter of the at least two sliding mode parameters, a first processing result related to a deflection angle of an $i^{th}$ link;
determining, based on the second sliding mode parameter of the at least two sliding mode parameters, a second processing result related to the angular velocity of the wheel; and
establishing the $i^{th}$ sliding surface based on the first processing result, the second processing result, and an angular velocity of the $i^{th}$ link.

12. The method according to any one of claims 1 to 11, wherein the force and torque instruction for the whole-body joint is further configured for changing effective lengths of the at least two leg mechanisms, and the method further comprises:
for a linear motor in the at least two leg mechanisms, controlling, according to the force and torque instruction for the whole-body joint, the linear motor to extend or retract, the linear motor in the leg mechanism controlling a length of the leg mechanism.

13. The method according to any one of claims 1 to 12, wherein the virtual contact point of the wheel on the contact surface is located between contact points of the at least two mobile wheels on the contact surface.

14. A balance control apparatus for a wheel-legged robot, the wheel-legged robot being represented by an $n^{th}$-order inverted pendulum model, and the $n^{th}$-order inverted pendulum model comprising a moving wheel, n links, and n revolute joints, the wheel and a first link of the n links being connected through a first revolute joint of the n revolute joints, the n links being connected in series through n-1 revolute joints other than the first revolute joint, the first link being an equivalent link corresponding to at least two leg mechanisms of the wheel-legged robot, n being a positive integer greater than or equal to 2, and the apparatus comprising:

a state parameter value obtaining module, configured to obtain an actual state parameter value of the wheel-legged robot, the actual state parameter value representing motion states of n-1 links, the at least two leg mechanisms, and at least two mobile wheels at a first moment, and the n-1 links being links among the n links other than the first link;

a state parameter value processing module, configured to calculate an equivalent state parameter value at the first moment based on the actual state parameter value, the equivalent state parameter value representing motion states of the n links and the wheel;

a sliding surface establishment module, configured to establish a sliding surface based on the equivalent state parameter value at the first moment, the equivalent state parameter value approaching 0 on the sliding surface;

an instruction determining module, configured to determine a force and torque instruction for a whole-body joint of the wheel-legged robot based on the sliding surface, the equivalent state parameter value at the first moment, and a dynamics equation of the wheel-legged robot, the whole-body joint comprising the n revolute joints, and the dynamics equation being established based on the $n^{th}$-order inverted pendulum model; and

a joint control module, configured to separately control the n revolute joints at a second moment according to the force and torque instruction for the whole-body joint, to adjust a balance status of the wheel-legged robot, the second moment being later than the first moment.

15. A computer device, comprising a processor and a memory, the memory having a computer program stored therein, and the computer program being loaded and executed by the processor to implement the balance control method for a wheel-legged robot according to any one of claims 1 to 13.

16. A computer-readable storage medium, the computer-readable storage medium having a computer program stored therein, and the computer program being loaded and executed by a processor to implement the balance control method for a wheel-legged robot according to any one of claims 1 to 13.

17. A computer program product, comprising a computer program, and the computer program being loaded and executed by a processor to implement the balance control method for a wheel-legged robot according to any one of claims 1 to 13.

FIG. 1

FIG. 2

Lateral sway
rotation center

207

FIG. 3

Mobile wheels in contact
with the contact surface
roll and slide on the
contact surface

Contact
surface

FIG. 4

FIG. 5

FIG. 6

FIG. 7

FIG. 8

FIG. 9

FIG. 10

FIG. 11

FIG. 12

| |
|---|
| ~1310 |
| Obtain an actual state quantity of a wheel-legged robot at a first moment, the actual state quantity being configured for representing motion states of n–1 connecting rods, at least two leg mechanisms, and at least two mobile wheels, and the n–1 connecting rods being connecting rods among n connecting rods other than a first connecting rod |
| ~1320 |
| Calculate an equivalent state quantity at the first moment based on the actual state quantity at the first moment, the equivalent state quantity being configured for representing motion states of the n connecting rods and a wheel |
| ~1330 |
| Establish a sliding mode plane based on the equivalent state quantity at the first moment, the equivalent state quantity gradually approaching 0 on the sliding mode plane |
| ~1340 |
| Determine a force and torque instruction with respect to a whole-body joint of the wheel-legged robot based on the sliding mode plane, the equivalent state quantity at the first moment, and a dynamics equation of the wheel-legged robot, the whole-body joint including n revolute joints, and the dynamics equation being established based on an $n^{th}$-order inverted pendulum model |
| ~1350 |
| Separately control, at a second moment according to the force and torque instruction for the whole-body joint, real revolute joints corresponding to n–1 revolute joints and a first revolute joint, to adjust a balance status of the wheel-legged robot, the second moment being later than the first moment |

FIG. 13

FIG. 14

FIG. 15

State quantity obtaining module — 1610

State quantity processing module — 1620

Sliding mode plane establishment module — 1630

Instruction determining module — 1640

Joint control module — 1650

— 1600

## FIG. 16

1700

Processor — 1701

Memory — 1702

## FIG. 17

## INTERNATIONAL SEARCH REPORT

| International application No. |
|---|
| **PCT/CN2024/093484** |

### A. CLASSIFICATION OF SUBJECT MATTER

G05B13/04(2006.01)i; B62D57/032(2006.01)i; G05D1/00(2024.01)i

According to International Patent Classification (IPC) or to both national classification and IPC

### B. FIELDS SEARCHED

Minimum documentation searched (classification system followed by classification symbols)

IPC:G05B13 B62D57 G05D1

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI, IEEE, Web of Science: 轮腿, 腿足, 腿式, 机器人, 倒立摆, 二阶, 多阶, 二级, 多级, 滑模控制, wheel, leg+, foot, robot?, inverted pendulum, second-order, multi-order, dual-stage, two-stage, multi-stage, sliding mode control

### C. DOCUMENTS CONSIDERED TO BE RELEVANT

| Category* | Citation of document, with indication, where appropriate, of the relevant passages | Relevant to claim No. |
|---|---|---|
| Y | CN 115291514 A (ZHEJIANG LAB) 04 November 2022 (2022-11-04)<br>claims 1-8, description, paragraphs 50-101, and figures 1-3 | 1, 3, 6-7, 9, 12-17 |
| Y | CN 112147890 A (XI'AN JIAOTONG UNIVERSITY) 29 December 2020 (2020-12-29)<br>description, paragraphs 53-92, and figures 1-6 | 1, 3, 6-7, 9, 12-17 |
| Y | CN 114986526 A (TENCENT TECHNOLOGY (SHENZHEN) CO., LTD.) 02 September 2022 (2022-09-02)<br>description, paragraphs 39-271, and figures 1-17 | 1, 3, 6-7, 9, 12-17 |
| A | CN 114248855 A (BEIJING INSTITUTE OF TECHNOLOGY) 29 March 2022 (2022-03-29)<br>entire document | 1-17 |
| A | CN 113419545 A (NORTHWESTERN POLYTECHNIC UNIVERSITY) 21 September 2021 (2021-09-21)<br>entire document | 1-17 |
| A | US 2021370733 A1 (CALIFORNIA INSTITUTE OF TECHNOLOGY) 02 December 2021 (2021-12-02)<br>entire document | 1-17 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 July 2024** | **09 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/093484** |

### C. DOCUMENTS CONSIDERED TO BE RELEVANT

| Category* | Citation of document, with indication, where appropriate, of the relevant passages | Relevant to claim No. |
| --- | --- | --- |
| A | US 2013079929 A1 (SAMSUNG ELECTRONICS CO., LTD.) 28 March 2013 (2013-03-28) entire document | 1-17 |
| A | WANG, Shuai et al. "Balance Control of a Novel Wheel-legged Robot: Design and Experiments" *2021 IEEE International Conference on Robotics and Automation,* 04 June 2021 (2021-06-04), 6782-6788 ISSN: 2577-087X, entire document | 1-17 |

Form PCT/ISA/210 (second sheet) (July 2022)

## INTERNATIONAL SEARCH REPORT
### Information on patent family members

International application No.

**PCT/CN2024/093484**

| Patent document cited in search report | | | Publication date (day/month/year) | Patent family member(s) | | | Publication date (day/month/year) |
|---|---|---|---|---|---|---|---|
| CN | 115291514 | A | 04 November 2022 | None | | | |
| CN | 112147890 | A | 29 December 2020 | CN | 112147890 | B | 28 December 2021 |
| CN | 114986526 | A | 02 September 2022 | HK | 40073430 | A0 | 16 December 2022 |
| CN | 114248855 | A | 29 March 2022 | CN | 114248855 | B | 21 October 2022 |
| CN | 113419545 | A | 21 September 2021 | CN | 113419545 | B | 27 September 2022 |
| US | 2021370733 | A1 | 02 December 2021 | None | | | |
| US | 2013079929 | A1 | 28 March 2013 | EP | 2574527 | A2 | 03 April 2013 |
| | | | | KR | 20130034082 | A | 05 April 2013 |

Form PCT/ISA/210 (patent family annex) (July 2022)

## EP 4 650 887 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310872666